Europäisches Patentamt

European Patent Office

Office européen des brevets

(19)

(11) Publication number: **0 422 221 A1**

# EUROPEAN PATENT APPLICATION
## published in accordance with Art. 158(3) EPC

(12)

(21) Application number: 89904249.3

(22) Date of filing: 07.04.89

(86) International application number:
PCT/JP89/00375

(87) International publication number:
WO 89/11178 (16.11.89 89/27)

(51) Int. Cl.⁵ **H02K 53/00**

(30) Priority: 05.05.88 JP 109996/88
01.06.88 JP 136500/88
11.07.88 JP 173424/88
28.07.88 JP 189508/88
18.08.88 JP 205968/88
05.10.88 JP 252438/88

(43) Date of publication of application:
**17.04.91 Bulletin 91/16**

(84) Designated Contracting States:
**AT BE CH DE FR GB IT LI LU NL SE**

(71) Applicant: **AKIBA, Seiichi**
**2-1, Nishi 5-chome Kita 8-Jou**
**Abashiri-shi, Hokkaidou 093(JP)**

(72) Inventor: **AKIBA, Seiichi**
**2-1, Nishi 5-chome Kita 8-Jou**
**Abashiri-shi, Hokkaidou 093(JP)**

(74) Representative: **Dr. Elisabeth Jung Dr. Jürgen**
**Schirdewahn Dipl.-Ing. Claus Gernhardt**
**P.O. Box 40 14 68 Clemensstrasse 30**
**W-8000 München 40(DE)**

(54) **SELF-ACTIVE TYPE GENERATION SYSTEM.**

(57) An energy converter constituted of a battery (1), a controller (2) such as switch, a dc motor (3), an accelerator-type dc generator (4), a controller (5) such as a current-type inverter, an ac motor (6), a generator (7) for feeding back to battery, a charger (8) such as regulator, an accelerator-type dc generator (9), a controller (10) such as a variable-frequency variable-voltage power source based on the inverter control an auxiliary power source (11), an ac motor (12) such as of variable-frequency control, a flywheel (13), and a power transmission unit (14) such as clutch.

EP 0 422 221 A1

## SELF-ACTIVE TYPE GENERATING SYSTEM

### BACKGROUND OF THE INVENTION

In a classical sense of the words, amplification of energy normally implies the use of vacuum tubes, transistors and similar devices that can produce energy outputs at a level greater than that of the corresponding energy inputs. However, with the recent technological development that paved the way to the use of electric motors and special generators for amplification of electric energy, there have been proposed so-called self-active type generating systems that incorporate such machines and other individual items in such a manner that these resources are utilized selectively and cyclically in order to optimize the efficiency of the overall electric energy input to each system.

An energy amplifier is basically a device designed to boost the level of energy by using in principle the Fleming's left hand and right hand rules as well as the Faraday's law of electromagnetic induction and the Lenz's law and can comprise electric motors including AC motors. The significance of energy amplifiers, however, has been clearly, and duly recognized only in recent years when the manner in which the limited energy resources is currently being used has been seriously questioned in an effort to search the way how we can rightly hand over the precious resource of energy on this planet to the coming century. From this point of view, accelerator type DC generators have been attracting the attention of the engineers in this technological field because they can provide clean energy as they utilize the reaction between the magnetic field and the electric field and hence can be used in space. Now the present invention will be described in detail below.

An energy amplifier (energy amplifying system) uses batteries such as nickel-cadmium batteries or other sources of electromotive force (e.g., solar systems, diesel generators, phosphoric acid type fuel cells using hydrogen, oxygen and catalysts, commercial power supply) as primary electromotive force and periodically repeats a chemical reduction process to keep on discharge/recharge cycles, although it may additionally comprise flywheels and/or other mechanical means as auxiliary sources of electromotive force for driving DC motors, pulse motors and/or other motors, whose rotary drive power is utilized to operate accelerator type DC generators and other special generators to optimize the selective and cyclic operation of the system through the use of voltage/current control, pulse control and other control techniques.

In an electric circuit (closed circuit or looped circuit), the electric current goes out from the power source (source of electromotive force) and returns to the source at an identical rate and the current (in a direction opposite to that of the flow of electrons) is caused to take place by the difference of potential (voltage) at the both ends of the power source. A DC motor is a device that converts electric energy into mechanical energy by utilizing the Fleming's left hand rule (that mechanical force is generated by an electric current running through a magnetic field and therefore the electric current is subjected to an electromagnetic force). The level of such an electromagnetic force is proportional to the intensity of magnetic field H, the intensity of electric current I and the length of the conductor within the magnetic field $l$ . ($F \infty IHl$ , where $\infty$ is a sign that represents a proportional relationship.) Therefore, the rotary drive power of an electric motor can be used as a force for operating a special generator such as an accelerator type DC generator.

A DC generator that utilizes the Fleming's right hand rule (that an electromotive force is generated by moving a conductor within a magnetic field) is a device for converting mechanical energy into electric energy, where the level of electromotive force V is proportional to the intensity of magnetic field H, the length of the conductor $l$ and the velocity at which the conductor is moved $v$ (or $V \infty Hl \ v$). Therefore, a special generator such as an accelerator type DC generator may be incorporated into an electric circuit as a secondary source of electromotive force by appropriately selecting the intensity of magnetic field, the length of the conductor and the velocity at which the conductor is moved so that the electric energy within the system can be increased depending on the power of the primary source of electromotive force. It should be noted here, however, that the electromotive force generated by a special generator such as an accelerator type DC generator takes the form of a low voltage and high intensity current whose voltage can be boosted only by way of AC conversion and through the use of a transformer and a rectifier to produce a high voltage DC.

When AC is supplied to the primary winding of a transformer, it gives rise to an alternate magnetic flux that induces an electromotive force in the secondary winding, where the voltage of the induced current is proportional to the ratio of the numbers of turns of the two windings and inversely proportional to the intensity of electric current or $V_1 / V_2 = I_2 / I_1 = N_1 / N_2$. Thus, when a high voltage and low intensity current is supplied, the voltage can be reduced by selecting an appropriate ratio of the numbers of wire turns to produce a high intensity

output current. Incidentally, $V_1 I_1 = V_2 I_2$ is an equation for expressing the capacity of a transformer, while $V_1/V_2$ is termed as the ratio of voltage transformation whereas $I_1/I_2$ or the inversion of $I_2/I_1$ is termed as the ratio of current transformation.

$N_1$ represents the number of turns of the primary winding and $N_2$ represents the number of turns of the secondary winding. $I_1$ is the primary current and $I_2$ is the secondary current, while $V_1$ is the primary voltage and $V_2$ is the secondary voltage. Some of the major causes of energy loss of a transformer include Joule heat (copper loss) due to the resistance of the windings and eddy-current loss (iron loss) observed in the iron core. It is a well known fact that, in general, large transformers are more efficient than smaller ones, normally showing an efficiency of greater than 95% when inverter circuits and/or converter circuits are involved, although other elements may be additionally used in combination with such circuits.

There have been known a number of different techniques to improve the efficiency of a power generating system, including the technique of determining optimum gear ratios, flywheel power storage systems and the use of generators that utilize internal combustion engines, turbine engines and/or high speed turbines, to which an accelerator type DC generator or other special generator is directly connected for repetitive energy amplification. The technique of optimization of gear ratios may involve the use of lathes and other relatively simple machine tools as well as any available sources of rotary and drive forces and devices for starting motions.

As is obvious from the equation $P = VI - I^2R = V^2/R(W)$, where P represents electric power, V voltage, I current intensity and R resistance, a conductor that carries a direct electric current generates Joule heat at a rate which is proportional to the square of the current intensity. Therefore, an alternating current is recommendable for the purpose of repetitive energy amplification so that the equation $P = VI \times$ power factor can become effective and any loss of power may be avoided. Since the loss of AC is related only to the resistance within the current, it can be minimized by reducing the current intensity and increasing the voltage for a same rate of power transmission (W). This is a widely acknowledged cost effective way of power transmission and both the voltage and the current intensity can be adjusted simply by means of a set of transformers.

While power transmission is normally conducted on the above described principle, electric power may be transmitted in the form of DC without converting it into AC.

Conversion from DC to AC or vice versa is normally controlled by means of inverters and/or converters, although cyclone converters, diodes, bridge-type rectifiers, transistors, thyristors, coils, variable coils, resistors, variable resistors, capacitors, transformers may also be used independently or in combination of any of them by employing known techniques for application of these devices.

Generators, transformer, thyristor phase controls and thyristor-transistor-chopper controls are popularly used for adjustment of voltage levels and speeds, while inverters using semiconductors are predominantly used as variable frequency type power sources for driving AC motors at variable speeds although generators, GTO or transistor inverters, voltage type inverters, current type inverters and cycloconverters enjoy certain popularity.

Three-phase AC generators and other AC generators can also be used as power sources for high speed rotary drive in combination with transformers and rectifiers to provide DC or AC. In fact, any sources of electromotive power can be utilized in some way or other.

As the source of tertiary electromotive force that plays a key role in an energy amplifying system, special generators such as accelerator type DC generators are used since they can be started without difficulty by using AC motors. The rotary speed of an AC motor can be modified by controlling the frequency of the incoming AC and therefore is very beneficial to an energy amplifying system because, with an AC motor such as an induction motor or synchronous motor, the voltage applied to it can be modified by changing the frequency of the AC and the motor can be driven at a very high rotary speed. Even if a large rotor is involved in a special generator such as an accelerator type DC generator, the rate of rotation of the rotor can be increased by gradually increasing the frequency of the AC so that it maintains a high rate of rotation by the law of inertia. Therefore, the electromotive force generated by a special generator such as an accelerator type generator can be amplified at an increasing tempo by utilizing the relationship expressed by $V \propto HI \, v$.

Moreover, the rotor of the special generator such as an accelerator type generator can be so designed that it is driven in a direction reverse to that of rotation of the rotor by an electric motor or other driving means to enhance the efficiency of the generator. Similarly, a starting electric motor and a driving electric motor (for high speed operation) can be used in combination to maximize the efficiency.

Differently stated, although a special generator such as an accelerator type generator is principally controlled by means of inverters (voltage type inverters, current type inverters) for its rotary speed and other operating conditions, AC commutator motors and/or other electric motors, sources of rotary force and/or drive force and gears may also be used for controlling it if appropriate. Since an AC motor is structurally simple and functionally effective, capacitor induction motors, capacitor start induction motors, capacitor start capacitor induction motors and other AC motors and conventional starting devices can be used for starting single phase inductor motors. It may be needless to say that these devices may be used in combination or independently but simultaneously.

It should be emphasized here, however, the fact that the electric resistance of a conductor is proportional to the length of the conductor l and inversely proportional to the area of its cross section ($R = \rho . l /S$, where R-represents the resistance, $\rho$ the resistivity). Therefore, Joule heat is inevitably generated within the conductor when it is used for a DC circuit and, if it is used for an AC circuit, the energy transmitted through the circuit is repeatedly amplified by the effect of the reactance involved in the circuit, and the use of fourth, fifth sources of electromotive force may be used for repetitive amplification if necessary so long as the overall capacity of generation or electric energy by the special generators such as accelerator type DC generators in the system is greater than the rate of energy consumption of the rotary machines used for energy amplification. Moreover, amplification of secondary energy by means of the rotary force of AC motors and the use of DC generated by special generators such as accelerator type DC generators without converting it into AC may be acceptable for the purposes of the present invention whenever feasible. Various controls, automatic controls, instruments, indicators, safety devices (anti-leak breakers, fuses, earthing devices, etc.) and other equipment may also be utilized for the purpose of the present invention.

Amplidynes and other commercially available sources of electromotive force may also be used for driving DC generators. Here again, electric energy is amplified repeatedly by means of special generators such as accelerator type DC generators along with sources of electromotive force as described above, various electric motors and control devices. These machines may be used with superconductive synchronous generators in parallel and as supplementary means for obtaining electromotive force. Therefore, while a system according to the invention basically utilizes special generators such as accelerator type DC generators (which are characterized by the involvement of single-pole DC machines) for energy amplification, it may additionally comprise rotating machines (e.g., electric motors of various types) with a view to utilizing their drive force and accelerator type DC generators and other single-pole DC machines with an appropriate capacity for repeated amplification of electric energy in order to supply electric energy at a desired level.

Since the ultimate purpose of the present invention is to achieve a highly effective and efficient utilization of electric energy and AC is popularly used for such a purpose, a system according to the present invention may also comprise AC generators which are controlled to operate at a constant rate and whose output may be converted back into DC under the control of inverters.

Transformers, rectifiers, resistors as well as LEDs, Zener diodes, sensors of various types, constant-voltage circuits, constant-current circuits and other elements may be additionally used for the purpose of effective energy amplification of the present invention. Part of the amplified energy may be used to charge the nickel-cadmium batteries and other batteries in the system by means of chargers including regulators to effectively establish a cycle of energy flow. Newly developed charging devices such as solar heat generators may also be additionally and supplementarily used. A system according to the invention may comprise generators specifically designed and driven for charging batteries. Such machines can enhance the efficiency of the system if they are appropriately designed to increase the effectiveness of energy amplification of the entire system.

Thus, a self-active type generating system according to the invention may comprise flywheels and other mechanical means for controlling cyclic operation of the system independently or in a mutually supplementing manner in order to enhance the effectiveness of the system in terms of energy amplification.

An energy amplifying system (or apparatus) as described above can be applied to any generators utilizing wind, fossil fuel and/or water to establish and maintain cyclic operation of the generators. Such a system may be used independently or in combination with other systems in a mutually supplementing manner in order to achieve a high efficiency in the use of rotary force, drive force, magnetic power, heat, photochemical effects and chemical energy. Additionally, high frequency electric motors may be advantageously used in the system as such a motor is directly connected to a source of voltage for high speed operation and comprises a squirrel-cage induction motor, a high frequency inverter. It is a bipolar motor and operates at 30,000 to 350,000rpm so that the kinetic energy of rotary machines may be effectively exploited and the electric energy of special generators may be repeatedly amplified. Therefore, a self-active type generating system according to the invention may be used with a permanent system of energy transmission such as a large transmission network so that the transmission network may allow

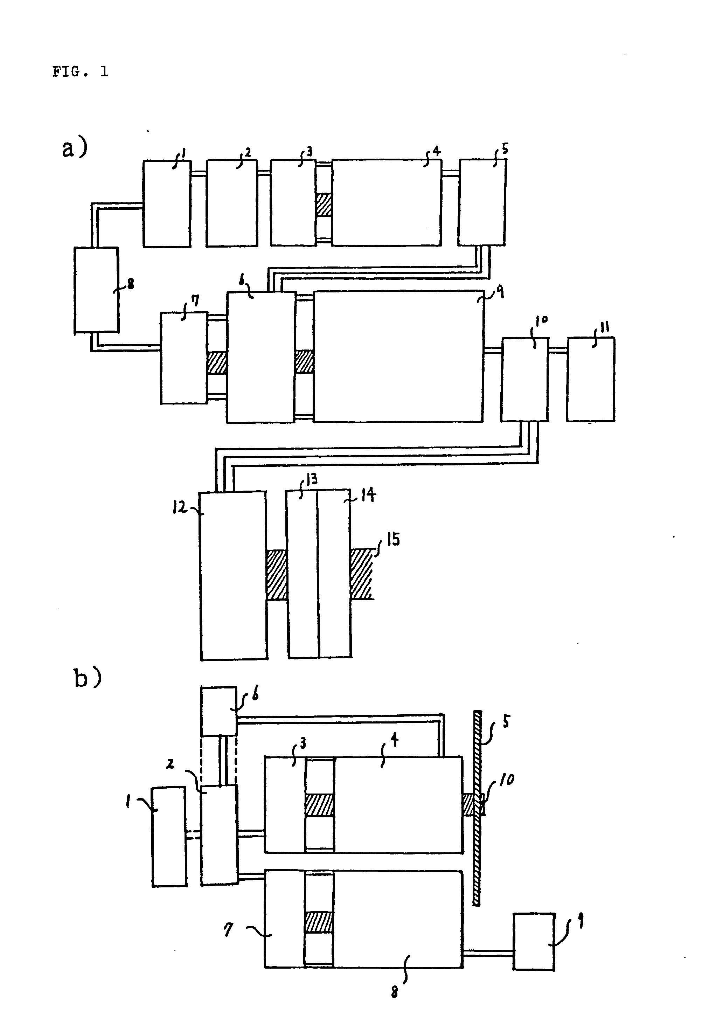

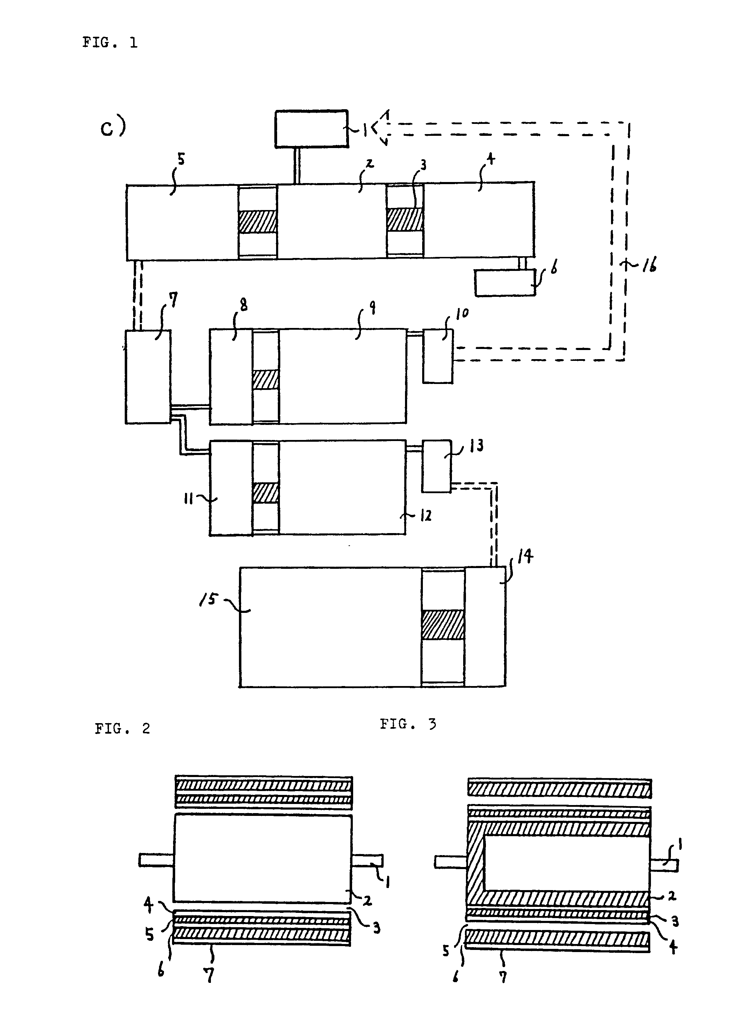

DC to flow as much as it affords to distance locations. Fig. 1 of the accompanying drawings schematically shows an energy amplifying system having a basic configuration to establish a cyclic operation.

Now a self-active type generating system according to the invention that utilizes monopolar DC machines such as accelerator type DC generators will be described in greater detail.

An electron in a substance normally moves very slowly at rate of several millimeters per second, although the movement of an electron is quickly transmitted like a falling-dominoes effect to the terminal electron. A DC generator comprises a rotor around which a conductor (such as a copper wire) is wound and the rotor is rotated to generate an electric current which is then rectified by means of a commutator. Now, electrons in the conductor of a DC generator can move either way depending on the position of the N-pole and S-pole and, therefore, the generator can not be effective for generating an electric currentunless it is provided with specially designed features, although it produces a high voltage.

More specifically, an effective DC generator takes the form of a generator in which a conductor (such as a copper wire) forming an insulated closed loop is rotated within a completely enclosed magnetic field and slip rings and brushes are used for rectification without using a commutator that allows a current to flow only in one direction or of a brushless DC generator. A brushless DC generator is very effective as it amplifies energy at an increasing tempo as its rotor rotates at a high speed.

The stator of a brushless DC generator may be alternatively rotated in a direction opposite to that of rotation of the rotor in order to achieve a high efficiency of the generator.

In short, an accelerator type DC generator is in principle a special form of a special generator (monopolar DC machine). The armature conductor of a monopolar DC machine is structurally categorized either as disc type or cylinder type, of which the disc type can be applied either to a flywheel storage system or to a heavy loading system. Since it is basically a DC generator, it does not require any commutator nor involve any core loss. Therefore, an existing monopolar DC machine can be modified to make a generator of this type.

The armature conductor of an accelerator type DC generator is structurally of a cage type utilizing slot insulation and arranged either on the rotor side or on the stator side. When it is arranged on the stator side, the generator functions as a brushless generator and therefore a collector is required for collection of electric charges. The armature conductor of an accelerator type DC generator may alternatively be realized either in the form of a pair of double cages disposed on both the stator side and the rotor side or as a skewed slot type armature. A single armature conductor of the cylinder type can be used without problem for an accelerator type DC generator, to which the conductor may be fastened by means of a groove of a spline and a flat wire or by any other ingenious means.

When a cage type armature conductor is rotated for collection of electric charges, there are occasions where the magnetic flux is interrupted in a direction opposite to that of generation of electromotive force and an electric current appears in the solenoid coil. A spirally configured collector is used for effective collection of electric charges by utilizing this phenomenon so that the magnetic flux may run along the axis of rotation of the armature conductor only in one direction and consequently the density of the flux may be maximized. Here, the collector plays the role of a self-excited electromagnet that effectively guides the magnetic flux. A permanent magnet, a separately excited electromagnet or a cut core of a transformer may be alternatively used for guiding the magnetic flux. A collector may be arranged both on the electron inlet side and outlet side. When a brushless generator (in which the collector is arranged on the stator side) is involved, the efficiency of the collector can be improved if it is rigidly fitted to the stator with the interposition of a spacer that prevents the collector from contacting the rotor (or its rotary shaft). When the collector is arranged on the rotor side, the armature iron core is advantageously realized in a spiral form so that the armature conductor can be contained within a slot of the iron core. The density of turns and insulation of the coil should be appropriately determined to optimize the effect of the collector. Care should be taken not to cause any burning of the coil to take place due to a too dense magnetic flux within the collector.

Currently, strong magnetic fields can be produced by means of superconductive materials and therefore superconductive accelerator type DC generators can be feasible for practical applications. However, permanent magnets are suitably used for small accelerator type DC generators, while electromagnets are effective for larger accelerator type DC generators. The use of molecular magnets may also be conceivable as molecules are neatly arranged according to the direction of the magnetic flux of the magnetic field of a monopolar machine to supplement the electromagnetic force of its self-excited or separately excited electromagnet. The direction of the magnetic flux of the magnetic field of the machine can be maintained constant by totally enclosing the magnetic field. Since the three axes of the magnetic field (magnetic flux), the electric current (electromotive force) and the power (movement) according to the Fleming's right hand rule can be controlled independently, permanent magnets, self-excited and separately excited electromagnets, superconductive magnets (magnetic flux) may be appropriately used independently or in combination for the purpose of controlling the axes.

A field winding is a winding which is excited by DC for generating a main magnetic flux that crosses the winding of an armature and generally arranged on the stator side of a DC machine or on the rotor side of a synchronous machine. When used with a synchronous machine, excitation of the winding is limited to separate mode, whereas various modes of excitation are possible for a DC machine. A field winding connected in parallel with an armature winding is called a shunt winding and one connected in series with an armature winding is called a series winding, while a field winding which is excited by a separate power source is called a separately excited winding. A field winding is normally categorized either as a concentrated winding or as a distributed winding depending on the type of winding.

Applications of concentrated field windings include DC machines and salient pole type synchronous machines. A field winding for a large machine is normally prepared by winding edgewise a bare flat copper belt. The insulation of a bare copper belt is realized by applying a sheet of mice paper or asbestos paper to the gaps between the layers of the belt or on the side of the belt that contact with a magnetic pole, while the belt is partially exposed to cooling air and hence cooled very effectively.

Since a medium or small sized machine normally uses a field winding made of a conductor having a relatively small cross section and turned for a relatively large number of times, a cotton or fiber-glass covered rectangular or round wire is probably the best candidate for the field winding. The wire is insulated to the earth by means of varnished cloth, mica paper or glass fiber, which is impregnated with varnish and then dried before fitted to the main magnetic pole.

Applications of distributed field windings include cylindrical rotary magnetic poles of turbine generators. A distributed field winding for such an application is normally realized in the form of a field coil prepared by winding edgewise a bare copper belt. Since the coil is normally very long in the axial direction and contained within an iron core, it may require a cooling system using ventilation holes and a cooling medium that runs through the holes arranged on the conductor. A holder ring may be required for effectively anchoring the coil at an end of it. Such a holder ring may be made of copper that contains silver and has good creeping characteristics.

A field winding of a known type may be suitably used for the purpose of the present invention. The direction of the magnetic flux of the magnetic field of the machine can be maintained constant by totally enclosing the magnetic field and employing appropriate techniques for connecting lead wires. Since an accelerator type DC generator is a DC generator, permanent magnets, self-excited and separately excited electromagnets may be appropriately used independently or in combination for the purpose of the present invention.

Currently available superconductive substances mainly consist of niobium or titanium alloys and require liquid helium for cooling. A superconductive substance may be used for the purpose of the present invention as it can provide a good magnetic flux if appropriately applied. As described earlier, since the three axes of the magnetic field (magnetic flux), the electric current (electromotive force) and the power (movement) according to the Fleming's right hand rule can be controlled independently, superconductive substances may be appropriately used independently or in combination for the purpose of controlling the axes and of repetitive energy amplification. While thermal superconductive substances are recently attracting the attention of engineers, such substances may be used for a accelerator type DC generator only in terms of utilization of the magnetic flux they provide for establishing a cyclic operation of the generator that ensures quasi-perpetual motion.

Insulation of field coils and armature conductors can be effectively achieved by means of asbestos paper, varnished glass fiber, glass fiber tapes, glass fiber/mica tapes and/or polyamide paper, although insulating varnish and other conventional means of insulation may be appropriately used for the purpose of the present invention. Similarly, frames (made of steel), wedges (made of laminated phenol resin or laminated polyester glass) and flat wires (made of steel, non-magnetic steel or polyester or polyepoxy resin impregnated glass fiber) may also be appropriately utilized. Bearings may be suitably prepared by using appropriate materials.

Techniques for cooling rotor coils typically include the radial flow method, the internal cooling method, the gear pick-up method, the pressure gap method and the rotor direct cooling method that uses cooling water. On the other hand, technique for cooling stator coils include the hollow conductor method, the hollow/solid method and the bent tube method. Air, helium, hydrogen, transformer oil and water are used for cooling rotor and stator coils. Any of these materials may be used with slot insulation materials particularly when large machines are involved.

More specifically, any of the radial flow method, the internal cooling method, the gap pick-up method, the pressure gap method, the rotor direct cooling method using cooling water may be selectively used for cooling rotor side armature conductors of large accelerator type DC generators, whereas any of the hollow method, the hollow/solid method, the bent tube method and other internal cooling methods may be used for cooling stator side armature conductors of large accelerator type DC generators. The radial flow method, the internal cooling method, the gap pick-up method, the pressure gap method and the rotor direct cooling method using cooling water may be applicable for cooling distributed field windings if the coils are of omnidirectional type (and are cylindrical field coils that function as coils of rotary field type). When distributed field windings are used as totally enclosed stators (including those formed by totally enclosed cylindrical field coils of synchronous machines), the hollow conductor method, the hollow/solid method, the bent tube method and other internal cooling methods may be advantageously used.

In short, any of the known cooling methods may be used for an accelerator type DC generator independently or in combination of any of them for the purpose of the present invention. Besides, salient (and concentrated) field windings may be used in combination with totally enclosed magnetic poles and/or omnidirectional magnetic poles (which are used as magnetic poles for salient and concentrated windings), to which ventilation blowers and other know cooling apparatus may be added so long it such addition significantly improve the effect of the overall cooling system.

The radial flow method is a cooling method where a cooling medium such as hydrogen gas is supplied from the both ends of a rotor by way of sub-slots arranged at the bottom of a slot so that the cooling medium runs along the axis of the rotor and eventually discharged from a radial hole arranged in the rotor coil into a gap. The hydrogen gas of this method may be replaced by air.

The internal cooling method is a method to be used with a rotor coil which is formed by a hollow conductor, wherein hydrogen gas is introduced from the both ends of the coil in the axial direction and discharged from a radial hole arranged near the middle of the cylindrical conductor into a gap. The hydrogen gas of this method may also be replaced by air.

The gap pick-up method is a cooling method where the hydrogen gas contained in a gap is picked up by means of dynamic pressure generated by a specifically designed wedge and introduced into a cooling conduit arranged within the rotor conductor, the gas being discharged into the gap. The use of air in place of hydrogen gas in this method can eliminate the use of a blower.

The pressure gap method is a method where the gap for introducing and discharging cooling gas is divided into several zones by rotor barriers and stator barriers and hydrogen gas is introduced into high pressure zones from a blower outlet (high pressure side) through a radial duct arranged in the rotor iron core and discharged back to the blower outlet. Since this method involves a number of parallel paths for cooling gas, each of the paths can be made relatively short and the internal pressure of the gap can be increased by the gas from the blower to improve the overall cooling effect of the system. Therefore, this method is particularly advantageously used with a large capacity machine.

The rotor direct cooling method using water is a method by which the heat generated by the rotor is directly removed by water that runs through a hole arranged in the shaft of the rotor, a branch pipe and then a room provided within the coil. The cooling water is circulated by way of insulated conduits, water outlet grooves and other arrangements. This method requires the entire route of water circulation to have a proper conductivity and to be maintained under a very clean condition in order to secure the insulation and prevent corrosion of the circulation system because water runs through conductive components of the system. Moreover, secondary cooling water should be supplied for heat exchange in order to ensure the effectiveness of the primary cooling water and the rotor coil should be mechanically robust enough to bear high water pressure applied to it. Besides, the cooling water should be pure water.

The stator coil cooling method is subdivided into the hydrogen internal cooling method and the water cooling method, of which the hydrogen internal cooling method is a method where hydrogen gas is driven by a high pressure blower disposed at an end of the stator and circulates through a bent tube arranged within the stator coil. The number of rows of the bent tube may vary depending on the capacity of the machine to which it is applied. A two-row bent tube system can be suitably used for a large capacity machine because it can reduced the difference between the highest temperature in the strand of the coil and the temperature of the gas within the bent tube. While hydrogen gas is very effective for cooling rotor coils, it should be securely contained within the machine so that no leakage of the gas may take place that can lead to explosion when air is mixed with the gas. Since a high cooling effect of a gaseous cooling medium is achieved when the heat conductivity of the cooling system is high and the temperature rise of the gas is small, a powerful blower is normally used to increase the rate of gas flow within the system. The housing of the system should be airtight and explosion-resistant and therefore a bearing oil seal device that normally utilizes oil film is used for prevention of oil leakage that can take place through the bores of the housing for carrying the shafts.

A sealing oil control apparatus for feeding oil to the oil seal device is arranged external to the generator. There are several types of control apparatus including the vacuum process type (where oil is treated by vacuum to eliminate air within the oil so that no air is brought into the machine), the double route type (where air and hydrogen are completely separated from each other for sealing so that no mixture of the two gases may take place) and the continuous sweep type (which is suitably used for small capacity machines that require hydrogen to be supplied at low cost and uses the main shaft bearing oil for oil seal). Techniques for charging and discharging hydrogen in and from the machine include the direct method where the inside of the machine is evacuated to prevent air from being introduced into the machine and the indirect method where carbon dioxide is used as an intermediary medium. It should be noted that such a control apparatus is not required then the cooling medium circulates only within the stator bent tube.

The stator coil water cooling method is subdivided into the hollow conductor method, the hollow-solid method, the bent tube method and so on, although the hollow solid method is popular. This method is advantageous in that the temperature difference within the cooling system due to the insulation of strands is relatively low as compared with the case where hollow strands are used throughout the system as it involves less eddy-current loss and solid strands are in contact with hollow strands in the axial direction. While water is the most effective cooling medium and the weight of the stator can be lessened when water is used for cooling, a cooling system that uses water requires an additional particular device that ensureswater to run evenly along the coils and not to show any leakage throughout the system.

Along the route of cooling water of a generator, there is provided a cooling water manifold on the drive side so that water may flow into the coils in parallel through insulated connector pipes. The water that passes by the upper coil proceeds to the lower coil toward the opposite side and then is collected by an outlet manifold arranged on the drive side before it flows out of the generator. (dual route system)

With a view to reduce the loss of liquid within the coils and the temperature difference between the upper and lower coils of a large capacity generator, cooling water is driven to flow from the opposite side in parallel along the upper and lower coils and then collected by an outlet manifold on the drive side before it is let out from the generator. (single route system)

Stainless steel is used for the piping that constitutes the route of cooling water, while oxygen-free copper or deacidified copper is used for the coils and the clips arranged at the ends of the coils. Teflon pipes are used for the insulated connector pipes as they provide a high flexibility, a good mechanical strength and an excellent insulation. It is a known fact that follow strands allow fluid to flow through them. The use of ion exchangers (using ion exchange resin, etc.), secondary cooling water, radiators and/or cooling water reservoirs, drains, drain ports, water supply ports, auxiliary tanks, ventilation pipes (ports), water circulator pumps may be recommended depending on the condition under which the generator is operated.

Alternatively, the stator coil may be cooled by means of air driven by an air blower. This method may be applied in combination with the internal cooling method using hollow conductors as described.

Any of the cooling methods may be employed independently or in combination for cooling the rotor or the stator of an accelerator type DC generator.

With a generator comprising disc type armature conductors, they may be arranged radially and surrounded by a slip ring by means of slot insulation. Brushes may also be used with such a generator. Any of cooling methods including the radial flow method, the internal cooling method and the gap pick-up method may be appropriately used along with blowers for enhancing the effect of the cooling system of the generator. Single disc type conductors may be provided with ventilation holes that facilitate the use of any of the above mentioned cooling methods. It may be needless to say that a plurality of brushes can be installed within a generator to form a multi-layeredstructure along with flywheel storage systems.

The overall configuration of a self-active type generating system according to the present invention should be so designed as to satisfactorily meet the requirements of installation of such a system regardless if the system.

It should be stressed here that an accelerator type DC generator can be used as an electric motor by applying the Fleming's left hand rule and utilizing known techniques. The electromotive force obtained by an accelerator type DC generator can be used without converting into AC for the purpose of repetitive energy amplification without requiring complicated control systems for voltage and current control, if efficient electric motors and special generators are additionally introduced. Since the generator is an accelerator type, it can be effectively used for parallel amplification, repetitive amplification, serial amplification within an electric circuit (power transmission line, etc.), if generation of Joule heat due to the Kirchhoff's law is cautiously avoided.

Conventionally, if a plurality of synchronous generators are operated in parallel, the number of operating machines should be reduced in a very intricate manner in view of efficiency for meeting a required output level because the overall system is so designed that it finds itself under an optimum operating condition to satisfy the maximum load when all the generators are driven simultaneously. However, in order for the system to operate satisfactorily, all the operating generators have to show an identical electromotive force (on a voltmeter), an identical frequency (on a frequency meter), an identical phase (on a synchronoscope), an identical wave form of electromotive force (generally sinusoidal wave) and an identical direction of phase rotation (on a phase rotation indicator). Parallel operation of generators can be conducted with relative ease when DC amplification is involved.

A transformer produces an alternate magnetic flux and generates an induced electromotive force on its secondary winding whenever AC is applied to its primary winding. An amplifying winding may be added to its primary side (amplifying primary winding) to obtain separately excited AC amplification. Besides, the technique of inverter control, parallel operation of AC generators (synchronous generators, etc.) and the use of three-phase or single-phase amplifying windings may be feasible for the purpose of the present invention.

Incorporation of part of an electric motor within the rotor iron core (armature iron core, field iron core, etc.) of an accelerator type DC generator constitutes an aspect of the present invention. The conductors of the motor and those of the generator may be arranged to form a multi-layer in order to effectively and repetitively use the rotary force and the current that exist within the generator/motor assembly, which may be used in combination with an energy amplifying system that incorporates a power source using self-excited or separately excited electromagnets for cyclic operation.

An energy amplifier (energy amplifying system) comprises some of the above described items as components so that it can amplify and effectively provide electric energy by means of the rotary force of various electric motors and the operation of special generators. In other words, with an energy amplifying system, the supplied energy is serially and repetitively amplified by means of special generators and other sources of rotary force as well as nickel-cadmium batteries and/or other batteries. By appropriately selecting the capacity of the generators and the rate of rotation of the other sources of rotary force, such an amplifying system can remarkably enhance the level of energy output, if the secondary, tertiary, fourth and fifth steps of energy amplification are efficiently conducted. An energy amplifying system is defined as a system that comprises two or more than two energy amplifiers, although the configuration of such a system may be widely varied depending on the number and the type of the components it comprises. As described earlier, special generators such as accelerator type DC generators can be effectively used for such a system.

A special generator for the purpose of the present invention is a generic term that refers to any of a variety of monopolar machines including various accelerator type DC generators. An energy amplifier for the purpose of the present invention signifies a half-finished product that effectively utilizes the characteristics of an accelerator type DC generator and other monopolar machines in order to ensure its cyclic operation for effective energy amplification.

A self-active type generating system according to the present invention may be used in combination with various electric motors and control devices for such motors as well as special generators and/or AC generators so long as such combination is feasible for cyclic operation of the system. 3-phase AC generators and other AC generators may also additionally be used for the purpose of the present invention along with inverters and other control devices as well as peripheral devices.

With a view to establish stabilized operation of a large capacity generator (such as a turbine generator), a plurality of energy amplifying systems may be so arranged that electric motors are connected in series for multi-step(normally three to six steps) amplification and controlled centrally.

Applications of an energy amplifying system include any combinations of generators, particularly cyclic generators of known types. Such generators typically include pumping-up generators using various pumps (for supplying water to hydraulic generators), wind generators and wave generators as well as generators which are directly connected to runners of various types driven (in association with compressors and water discharging apparatus). Part of the generated electric power may be separated by means of transformers and used for energy amplifiers. Some of the major applications of the energy amplifying system are illustrated in the accompanying drawings. It can also play an auxiliary role in any existing generating systems. (An energy amplifying system that indirectly utilizes resistors for generating heat and one that utilizes freezing cycles caused by electricity which is generated by temperature difference have already been described.) As the most remarkable feature of the present invention consists in relative and repetitive amplification and effective use of electric energy by means of special generators, any combination of conceivable components is permissible within the scope of the present invention so far as such combination serves to realization of semiperpetualmotion of a machine that results in effective use of resources and the supply of electric power that exactly meets the demand.

Therefore, a desirable system which is composed of a combination of selected components may be obtained in an appropriate manner and by using required DC and/or AC. Such a system may not necessarily take any established configuration and may be so set up as to ensure cyclic operation.

According to an aspect of the present invention, a high speed turbine generator is incorporated in a comprehensive self-active type generating system on the basis of the principle of induction heating using a water cooling type core less induction furnace.

A water cooling type coreless induction furnace and a high speed turbine generator are already well known and therefore can be appropriately configured and utilized. Nuclear reactors include boiling water reactors and pressurized water reactors, which produce high pressure and saturated steam whose thermal energy is used for driving steam turbines. Nuclear reactors are cooled by means of a water cooling system (natural convection type, forced convection type).

With a core less induction furnace that does not comprise an iron core, a melting chamber having the form of a melting pot made of a refractory material is loaded with a charge (a unit amount of material to be introduced into the furnace) and AC is supplied to a water cooling type induction coil turned around the melting chamber by way of a flexible cable to heat and melt the charge. An induced current (eddy current) is forced to run through the metal conductor located within the alternate magnetic field by electromagnetic induction effect and give rise to so-called eddy-current loss and, if the metal conductor is made of a ferromagnetic material, hysteresis loss. Consequently, the metal conductor is heated to prove the Maxwell's equation regardless of the profile of the furnace. Therefore, the operation of a coreless induction furnace is based on the theory of induced heating and power sources that can be used to operate the furnace include commercial frequency power sources (low frequency power sources), magnetic frequency multipliers, thyristor converters (150 180Hz), high frequency motor-generators, thyristor inverters (0.5 to 10kHz), spark oscillators (10 to 100kHz), vacuum tube oscillators (100kHz or above). A coreless induction furnace may be a high frequency type or a low frequency type, of which the former is thermally more efficient than the latter although the latter may also effectively store heat once it is heated. A hollow copper tube having a circular, rectangular or elliptical cross section is used for a high frequency induction coil to be used for such a furnace and cooling water is circulated through the tube. A hollow copper tube having a rectangular cross section is advantageously used for a low frequency induction coil which is cooled by water along its back side.

A plurality of energy amplifying systems are used for the purpose of the present in order to enhance the overall security. As power sources for an induction furnace, those as described above and other sources may well be used so long as they can effectively supply power. AC generators can also be used with various electric motors and control devices.

A natural convection/boiling water reactor type induction furnace with a water cooling system normally comprises a melting chamber to which a cylindrical or semi-cylindrical multi-layered structure made of a ferromagnetic material is attached for improvement of thermal efficiency. The structure may be replaced by a plurality of rod-shaped structures made of a same material. The melting chamber is lined with heat-resistant stainless steel or a similar material for prevention of corrosion. Water supplied from a water supply system (water supply/heating tank, vessel, etc.) is heated in the furnace and turned into vapor. A moisture remover made of wire-mesh or a corrugated plate or an electric heater such as a dryer is arranged at the top of the chamber. Major part of the generated steam is directly fed to turbine generators. Besides, liquid-level meters made of refractory glass, water inlet nozzles, spray nozzles, water outlet nozzles, stop valves and piping for circulation type water supply heating tanks as well as turbine bypass systems, main steam stop valves and small pipes are appropriately arranged. Stainless steel tubes are normally used for piping. A plurality of melting chambers may be installed in a large power plant. Such a facility may be used for functionally auxiliary applications such as steam heating systems.

A forced convection/boiling water furnace type induction reactor normally comprises a recirculation system constituted by vapor/water separators, steam driers, jet pumps and other components. The water fed from a water supply system is evenly dispersed by water dispersers and eventually falls along the outer surface of the core in the induction reactor with part of the water contained in the atmosphere. The water is then injected into the lower part of the reactor core by means of jet pumps, raised upward and heated into vapor by the heat of the core. The vapor then goes to the upper portion of the core (core head), where it is partly reduced to water and the mixture of water and vapor is fed to a vapor/water separator. The water separated from the vapor is then mixed with the water from the water supply system and returned to the core. The vapor on the other hand is reduced to water by means of wire-mesh type or corrugated plate type moisture removers and/or electric heater and the dried air is sent to the turbines of the reactor.

The core of the induction reactor is enclosed by a cylindrical stainless steel structure in such a manner that a flow of falling water from the water supply system and a flow of rising water for cooling the core are separated formed within the structure. A number of cylindrical bores are formed for cooling water between the core support plate and the top support guide of the core and a grid formed by a number of ferromagnetic rods is arranged so that the supplied water may pass through the bores to realize good heat conduction of induced heat. Where a large reactor cores is involved, the use of a ferromagnetic blocks in the form of hexagonal columns provided with keys and key grooves on the peripheral wall for ease of expansion and contraction is recommended. The blocks are advantageously so formed that they may be engaged with one another when assembled and a cylindrical water pathway is formed in the center. (Ferromagnetic blocks in the form of hexagonal columns may be used elsewhere in the reactor if appropriate.)

It may be needless to say that a induction reactor as described above is based on the theory of induction heating and may comprise a large number of heating sections. Diamagnetic materials and insulating materials may be appropriately used to obtain good heat conduction in both boiling water type and pressurized water type reactors.

A recirculation system for a reactor normally comprises recirculation pumps, jet pumps, pipes and valves, of which jet pumps do not have any movable parts and simply eject the water pressurized by recirculation pumps through nozzles to form high speed flows of water. They also suction up the water in the vicinity and the water obtained by vapor/water separators and supply them to the core as cooling water.

A number of jet pumps are used for such a recirculation system. (Some twenty pumps are installed in a nuclear reactor.) The mixture of water and vapor which is heated by the core is driven for rotary movement by stationary guide fins located at the inlet port of a vapor/water separator and goes up from there in the separator, taking the form of a free vortex, while the water and the vapor are separated from each other by the centrifugal effect. The vapor coming out from the vapor/water separator is then dried by a wire-mesh type (comprising a number of metal meshes arranged in a multi-layered structure) or corrugated plate type (comprising layered corrugated plates) moisture remover located above the separator and heated by an electric heater (comprising a number of heating wires of an electrically highly resistive material separated, securely held by spacers and enclosed for protection) before it is applied to the turbines of the reactor.

As in the case of a natural convection type reactor, the reactor may be lined with stainless steel and provided with nozzles, stop valves, liquid-level meters made of refractory glass and a variety of fitting guides.

A pressurized water type induction reactor which is cooled by water normally resembles to a boiling water type induction reactor which is cooled by water but is hermetically sealed by an enclosure. It also comprises primary cooling apparatus, steam generators, pumps for primary cooling medium and other apparatus.

The lid of a pressurized water type induction reactor is provided with a flange so that the lid may be removed with ease and rigidly held to the reactor by means of bolts. The lid is a thick cylindrical body made of low tungsten content steel and having a thickness of 15 to 20cm or above. Like the reactor, the lid is lined with stainless steel and provided with a stainless steel O-ring at the top. Additionally, the lid is advantageously provided with a threaded air outlet hole, which is air-tightly closed by a bolt. It may be also provided with a cooling medium inlet nozzle, an outlet nozzle and a drain port. A ship may be provided with a small reactor. The pressurized water type nuclear power plant was originally designed for an atomic submarine and later modified for installations on land. Therefore, a pressurized water type nuclear power plant can be built without any particular consideration for site. This statement may hold true with a boiling water type nuclear power plant.

The primary cooling facility of a nuclear power plant comprises steam generators, pumps for primary cooling medium and compressors. A steam generator is normally realized in the form of a vertically arranged U-shaped pipe, which is a heat conductive pipe. The primary cooling medium enters the cooling system from a lower nozzle of a steam generator and, after passing through a heat conductive pipe, flows out from an outlet nozzle. Water is supplied to the secondary side of the steam generator by way of a feed ring located just above the top of the heat conductive pipe and added to the falling water coming from a vapor/water separator. The water then comes down spirally around the heat conductive pipe and thereafter changes its direction to rise along the pipe. The steam separated by the separator is sent to the turbines by way of electric heaters.

A pump for primary cooling medium is normally an electrically driven centrifugal pump provided with a shaft sealing device for controlling leakage of the medium and a flywheel at the top for reducing the flow rate when the power supply is interrupted. In a nuclear power plant, a highly reliable shaft sealing device comprising seals that operate in three steps is installed and sealing water is supplied from a filler pump of a chemical volume control apparatus.

A compressor is an apparatus to maintain the pressure of the primary cooling medium at a constant level throughout the operation of the reactor. It is provided with a liquid immersion type electric heater at the bottom and a sprayer, a safety valve and a release valve at the top. While it is run, its upper half portion shows a gas phase whereas its lower half shows a liquid phase. The surge produced by fluctuation in the load can be dissipated by appropriately controlling evaporation and condensation of water by means of electric heaters and sprayers.

The temperature of the steam within the reactor can be controlled by using the spraying technique which is a direct cooling method for reducing the temperature of the steam by means of water or saturated steam directly sprayed into the overheated vapor. This technique is advantageous in that it can obtain a quick response and therefore it is popularly used. While the critical temperature and the critical pressure of water is respectively $374^{\circ}$ C and $226kg/cm^2$, hot water with temperature of approximately $250^{\circ}$ C and pressure of approximately 157atm. is currently used for primary cooling medium of a steam generator.

The escape valves and the relief valves used for nuclear power generation are normally set to a maximum operating pressure and any water and steam discharged after the pressure exceeds the maximum set value are sent to a radioactive waste disposal facility. To the contrary, induction heating provides a source of clean energy that allows reuse of the consumed water.

Therefore an induction reactor of the type as described above can be feasibly used in a nuclear power plant or its annexes. A pair of primary cooling facilities may be installed for a pressurized water type induction reactor along with turbine generators. Externally supplied power may be utilized for an induction reactor if a control apparatus is provided for instantaneous switching.

Any power generated in connection with any of the above described facilities should be controlled by means of an appropriate control system that allows cyclic use of the power including utilization of excessive heat and permits instantaneous switching of electric currents for security of the facilities. Transformers and energy amplifying systems may also be appropriately used. In short the most remarkable feature of the present invention is that it provides a very comprehensive power generating system that utilizes the electric power available within the system to a maximum extent. This statement holds true when boiling water type reactors and a plurality of generators are involved.

The cycle of thermal energy may be either a direct cycle that involves direct utilization of steam or an indirect cycle that involves utilization of steam generators. A steam turbine system can be categorized as a pure condensation type, a regeneration type or a reheating type as viewed from heat cycle, while a steam turbine can be a back pressure turbine, a bleeding turbine or a bleeding/back pressure turbine. Turbines of right types have to be selected and installed in combination with steam pipes and connector pipes for maximum efficiency of a power plant.

A pure condensation type system is designed to effectively convert the thermal energy in steam into mechanical energy so that all the steam in the exhaust air of the turbine may be returned to a condenser for reuse.

A regeneration type system is designed to partly take out the steam expanding within a steam generator and the turbine and heat the water contained in a water heating tank or a water heater.

A reheating type system is designed to take out the expanded steam within the turbine, which is reheated by a reheater and expanded further by the turbine. This system is effectively used in a large turbine system, where reheating can be conducted in one or more than one steps, and particularly favorable when the initial pressure of the steam is very high. (Multiple-step reheating is normally adopted in large capacity power plants.)

A back pressure turbine is a turbine whose exhaust gas available after generation of electricity is entirely utilized for various purposes within the plant.

A bleeding turbine is a turbine from which steam can be extracted as required for utilization within the plant.

A bleeding/back pressure turbine is a sort of back pressure turbine which is so designed that steam may be extracted from its intermediary area.

Additionally, a steam turbine may be categorized as an impulse turbine, a reaction turbine or a combination turbine. It may be differently categorized in terms of direction of steam flow as an axial-flow turbine or a lateral-flow (radial-flow) turbine. It may also be categorized in terms of number and configuration of compartments as a single-compartment turbine, multiple-compartment turbine, a tandem compound turbine or a cross compound turbine.

An impulse turbine is a turbine in which steam is expanded within a nozzle to form a high speed stream of steam whose impulsive force is applied to the blades of the turbine to drive a rotor. The steam reduces its pressure within the nozzle and changes the direction of its flow among the blades so that its speed is significantly lowered. An impulse turbine whose steam is used only once for operation is called a simple impulse turbine, while one having a one-stage nozzle and a number of blades in combination is called a velocity compound impulse turbine and one obtained by arranging a number of simple impulse turbines in series is called a pressure compound impulse turbine.

A reaction turbine is a turbine in which steam is expanded within a nozzle and rotary blades at the same time so that the rotor is driven by both the impulse of the steam within the nozzle and the reaction of the jet stream of steam gushing out from the rotary blades. One of the features of the reaction turbine is that its efficiency is not remarkably affected by significant-changes in the steam jet speed and the rate of rotation of the rotary blades when compared with an impulse turbine.

A combination turbine is a turbine that has the features of both an impulse turbine and a reaction turbine. It is often applied to a large turbine whose high pressure section takes the form of an impulse turbine and lower pressure section the form of an reaction turbine.

An axial-flow turbine is a turbine in which steam flows along the axis of the turbine. It is one of the most popularly used turbines.

A lateral-flow (radial flow) turbine is a turbine in which steam flows perpendicular to the axis of the turbine. A typical lateral-flow turbine is so-called Jungstrom turbine, which is a genuine reaction turbine having a juxtaposed pair of sets of rotary blades which rotates at an identical rate around respective shafts in opposite directions.

A single compartment turbine is normally used for a turbine with a relatively small capacity, whereas a multiple-compartment turbine having two or more than two compartments is good for a large capacity turbine.

A tandem compound turbine is a multiple-compartment turbine in which the compartments are arranged along a single shaft, whereas a cross compound turbine is also a multiple-compartment turbine in which the compartments are arranged along two or more than two shafts.

While the types and formats of popularly used turbines are described above, turbines may also be classified by the method of connection of the steam turbine and the generator. A turbine which is connected to a generator by means of a coupling and rotated at a rate identical with the rate of rotation of the generator is called a direct coupled turbine, whereas a turbine which is connected to a generator by way of reduction gears so that the high rate of rotation of the turbine is reduced to a required rate of rotation of the generator is called a reduction turbine.

Generators are driven by steam turbines in a rational manner depending on the application of each of them. A generator may be classified as an air-cooling type turbine generator, a hydrogen cooling type turbine generator or a liquid-cooling type turbine generator. An accelerator type DC generator may be advantageously used when DC is involved. Additionally, any of the components as described above may be selectively to a generating system depending on the application of the system in order to establish a semiperpetual and cyclic operation of the system and optimize the overall operation of the system.

When a back pressure turbine is involved, a boiling water type reactor with a natural or forced convection system may be advantageously used along with a water heating tank. The water heating tank may be a regenerative type, an indirect resistor heating type or a induction heating type.

A regenerative type water feed heating tank normally comprises steam pipes branched from a main steam piping along with regulating valves, drain pipes and exhaust pips. Steam condensers may be advantageously used for effectively reuse the waste water which is fed to a steam generator by way of various nozzles (water inlet ports, water outlet ports, supplementary nozzles, etc.) and water level meters.

An indirect resistor heating type water heating tank is a heating apparatus that utilizes Joule heat generated when an electric current runs through resistors. Heating units or resistors are arranged under the floor and in the inner walls of a water feed heating tank to heat water indirectly. While Nickel-chromium wires, iron-chromium wires and other alloy wires are popularly used as heating units, molybdenum and tungsten may also be appropriately used to form heating elements. When heat higher than 1,000°C is required, silicon carbide heating elements, molybdenum silicate heating elements and kanthals are advantageously used, whereas iron and nickel are suitable for low temperature heating (lower than 1,000°C), although selection of the material to be used for heating elements depends on their respective applications. Besides, A heating unit may be made to a closed type in order to protect itself from atmosphere for prevention of oxidation and degradation of electric insulation. A closed type heating unit may be either a super heater which is realized by placing a heating element within a metal tube after wrapping with mica for insulation, or a sheathed wire or an aluminum-cadmium heater both of which use lime, alumina or magnesia powder for insulation within a metal tube. When a low capacity generator is involved, commercially available heaters may be appropriately combined and used to meet the requirements of the installation. Thermostats are commonly used for temperature control according to known techniques such as sequencing. A heating tank of this type is advantageous over a combustion furnace in that it provides even temperature and easy control of air and temperature. It can be used as a component of an energy amplifying system as a water heating tank in combination with a power source along with switches and other on/off control units for controlling the operation of tank. Refractory bricks, insulating support guides may be appropriately used to build such a water heating tank. The tank wall may be lined with stainless steel and provided with water inlet ports, water outlet ports, nozzles, valves and water level meters for effective operation. The tank may be configured appropriately depending on the requirements of the installation.

An induction heating type water heating tank is normally combined with natural convection type induction reactors for steam generation. It may also be provided with water inlet ports, water outlet ports, nozzles, valves, control valves (regulating valves) and water level meters.

A water heating tank as described above may be lined with stainless steel and, if installed at an elevated position, a switch valve may be advantageously used for feeding water for evenly dispersing water within the tank. Devices for raising the water pressure of the fed water may be installed as required.

Now the components of a generating system according to the invention will be described in detail, although they are widely known.

Regardless of directly or indirectly, the generated steam is introduced into a turbine by way of several steam pipes (normally made of stainless steel). Before entering the turbine, the steam pass through vapor/water separators (wire-mesh type or corrugated plate type), vapor dryers and other components as well as main steam stop valves, turbine steam regulating valves and rate control devices. After passing through a high pressure turbine, the steam passes is heated again by a reheating apparatus such as a moisture separator before entering a low pressure turbine, where the heat is exploited to a given extent depending on the number of steps of reheating. The steam coming out from the low pressure turbine is normally reduced to water by condensers, pressurized by condensate pumps and heated by feed water heaters before it is fed to steam generators, induction reactors and/or feed water heating tanks to repeat the circulation. Turbine bleed is used as a heat source of feed water heaters and then fed to condensers by way of lower feed water heaters so that it may be utilized in a water feeding system. Some of the main steam may be branched for use as heat source of feed water heaters and/or moisture separators and then fed to condensers to establish a turbine bypass system which is provided with relief valves and escape valves. Circulation of steam and water may be designed in different ways to meet the requirement of the installation involved to minimize the use of pipes and other components and at the same time maximize the efficiency of the system.

Normally a reheater such as a moisture separator is arranged on a pipe connecting the high pressure turbine and the low pressure turbine. A moisture separator may be classified either as wire-mesh type or as corrugated plate type. A wire-mesh type separator comprises a metal net arranged at the middle of its trunk and the moisture of steam passing through it is caught by the metal net. The particles of moisture caught by the metal net is then collected in the bottom of the separator and added to the water feeding system. In a corrugated-plate type moisture separator, steam is ejected through a number of slits arranged on a steam pipe in so many jet streams for preliminary separation of moisture and then the remaining moisture is totally separated as the steam passes through the gaps between the corrugated panels. A reheater normally has the form of a finned and U-shaped tube and the steam used for reheating is gradually condensed as it passes through the tube before it is led to a condenser and returned to the water feeding system. Drain water is normally returned to the water feeding system.

A feed water heater is an apparatus for heating water by bleed from a turbine or steam branched from main steam in order to heat water supplied to steam generators and induction reactors for effective circulation of water within the system. A low pressure feed water heater is arranged upstream to a feed water pump of a condenser, whereas a high pressure feed water heater is found downstream to a feed water pump of a condenser. A fed water heater may be a horizontal type or a vertical type depending on the mode of installation. The heating pipe is normally realized in a U-shape having two expended edges and made of brass, copper or stainless steel.

A speed governor is either a throttle governing type governor (by which the pressure of the steam flowing downstream to the governor is so adjusted by a variable valve that the steam is evenly distributed among all the nozzles of the turbine connected to it) or a nozzle cut-out governing type (by which steam is sequentially sent to the nozzles of the turbine by sequentially opening a plurality of nozzle valves arranged in the governor). A combination of these types is also possible. A condenser is categorized as a surface condenser, an injection condenser, a radiation condenser or an evaporative condenser and may be provided with an emergency governor (emergency trip), an air extractor (steam ejector, reciprocal pump or rotary pump) and/or a condenser anti-corrosive device (utilizing so-called current/anode method that uses an anode made of zinc and fitted to the inside of the water chamber of the condenser and obtains an anti-corrosive current generated by potential difference or so-called external source method that uses an anode made of an lead/silver alloy and the condenser as a cathode and a voltage is applied between them to forcibly run an anti-corrosive current), an anti-back flow valve, a condensed water desalting device (which utilizes filters and/or ionexchange resin and may be used in combination with a chemical desalting method using hydrazine), a feed water treatment facility (to meet the requirements for chemical properties of water used in boilers as defined by JIS) and/or waste water disposal facility.

A power plant using turbines normally comprises turbine generators, moisture separators and other reheaters, condensers, condenser pumps and other water pumps, feed water heaters and other auxiliary components. Both nuclear power plants and thermal power plants requires steam turbine generators, which are combined with various facilities to set up the generating system in a most effective and efficient way. For emergency and security purposes, emergency power sources may be required. Thus, a plurality of energy amplifying systems may have to be installed with a power station along with external power sources (commercial power supply), diesel generators and batteries which are arranged on the concept of fail-safe.

In short, the present invention is characterized by the effective use of an energy amplifying system to establish a generating system that operates semiperpetually by effectively circulating water and electricity with the system on a cyclic basis. Such a system incorporates boiling water reactor type induction furnaces which are cooled by water (natural convection type, forced convection type) and/or pressurized water reactor type induction furnaces which are also cooled by water in addition to ordinary steam turbine generators. Water required for cooling condensers can be obtained from the sea, rivers and/or lakes depending of the geographical and meteorological conditions of the site. A refrigerating cycle using cooling water tanks may have to be established within the system for effective recirculation of cooling water. Such a refrigerating cycle for recirculation of cooling water using freezing apparatus and cooling water tanks may be configured appropriately so that the operation of the system may be optimized.

Now the principle theory of a refrigerating cycle is described below.

Generally, a liquid such as alcohol takes in heat from the surroundings when it is vaporized. Such heat is defined as heat of vaporization. A refrigerator is based on the utilization of heat of vaporization which is obtained by repeating the refrigerating cycle of compression, condensation, expansion and vaporization. Commercially available refrigerators normally use as refrigerant Freon which is a non-toxic, odorless and incombustible gas. The gas is compressed by a compressor driven by an electric motor and condensed by a condenser to become liquid under high pressure, which passes through a dryer for removal of moisture and then capillary tubes so that it is ejected into an evaporator to rapidly expand itself and in return take in a large amount of heat of evaporation.

The vaporized Freon again follows the four steps of the refrigerating cycle to further reduced the temperature within the refrigerator. A room cooler is theoretically a refrigerator having a fan arranged behind the evaporator. A heat-pump type air conditioner comprises a four way valve for functionally modifying the condenser into an evaporator and vice versa so that it functions for both cooling and heating. When the Freon in the air conditioner is compressed it becomes a high pressure gas with temperature between 70 and 80°C that can be conveniently used for heating the atmosphere within a building if the temperature is appropriately controlled by means of thermostats and air blowers. It is well known that air conditioners in industrial buildings normal use alcohol as refrigerant. It should be noted that recently adverse effects of Freon have been pointed out and therefore care should be taken whenever it is used. The basic configuration of an air conditioner is illustrated in one of the accompanying drawings. Air conditioners may be effectively used with energy amplifying systems in order to maximizethe effect of such systems in a rational and functional manner.

Reheaters such as moisture separators and feed water heaters normally uses steam branched from main steam and turbine bleed as steam heat sources. An energy amplifying system preferably comprises feed tank heaters of the water cooling induction heating type and reheaters such as moisture separators of the indirect resistor heating type, while terminal connectors may be cooled by water. It may be needless to say that a large number of such components as described above may be incorporated into a system whenever large power is involved. Transformers equipped with voltage regulators that can change the secondary voltage stepwise both in single-phase and three-phase modes will be advantageously used. With such an arrangement, while power is supplied stepwise, stepless heating can be obtained through utilization of induction heating system and appropriate wire connections.

While the first aspect of the present invention is described above in detail, a system according to the first aspect of the invention may be appropriately modified by using known techniques and combined with energy amplifying systems to maximize the overall effect of the system. Such a system may provide heat sources for water heaters, hot water air conditioners, green houses, hot water road heating systems and steam heaters. Water pumps for circulation of water may be additionally incorporated by using known techniques.

In other words, the present invention may be utilized in various different manners for cogeneration systems. A cogeneration system is a system that effectively utilizes both electric power and heat sources using hot water which are arranged in parallel and may be in combination with energy amplifying systems. The features of each of the component of the system should be so designed as to maximize the overall effect of the system. Therefore, the first and a third aspects of the present invention can be combined in a mutually supplementary manner.

As described in detail above, an object of the first aspect of the present invention is to set up an electric energy amplifying system that can repetitively and effectively amplify electric energy by utilizing the functional features of various monopolar DC machines including accelerator type DC generators. Another object of the first aspect of the invention is to maximize the use of electric energy by appropriately combining a self-active type generating system with a cogeneration system that utilizes various transmission devices and electric appliances in a most advantageous way. Such a system may find industrial, commercial and other applications in the field of energy supply, including applications for portable power sources which are configured in a voluntary and cyclic manner. Now, a device according to a second aspect of the present invention, which is subordinate to the first aspect, may comprises various transmission devices and electric appliances which are combined in a most advantageous way. Modes of power distribution will be described below.

Electric power will be distributed either in parallel or in serial mode. The electric current will be either DC or AC.

In the parallel mode, power is supplied in parallel to loads which are arranged in parallel. The voltages of the terminals of the loads are maintained to be substantially equal with one another and only the currents that run through them vary depending on changes in the loads. Therefore it is also called the constant voltage mode and currently popularly used.

In the serial mode, loads are arranged in series and therefore the load currents are substantially equal to one another. Only the voltages of the terminals of the loads vary depending on changes in the loads. Therefore it is also called the constant current mode. This mode is currently poorly popular.

The DC mode is used only for particular applications and not popular.

AC is generally classified as either single-phase or three-phase. In the single phase AC mode, since generators, transmission lines and high voltage distribution lines are mostly arranged for three-phase, power is supplied to single-phase loads by using only two of the three lines of three-phase power supply systems and high voltage power is reduced to low voltage power by distribution transformers for single-phase loads. In part of Japan where loads are sparse, the single-phase two-wire system is used for 100V power transmission. The single-phase two-wire power transmission system is advantageous in that it requires only two wires and hence is characterized by easy installation and maintenance. The single-phase three-wire system is a system where two low voltage windings of a distribution transformer is connected in series and a neutral wire is extended from the point of connection so that power is transmitted by way of three wires including the neutral wire and the two voltage wires. 100V loads are connected between the neutral wire and one of the two voltage wires and 200V loads are connected between the two voltage wires. Therefore, this system can provide two different voltages from a single set of distribution wires and the voltage of the two voltage wires to the ground is equal to that of the single-phase two-wire system so that the overall voltage is boosted to substantially twice as high as the service voltage to eliminate any voltage falls and power losses and to reduce the overall amount of wire to be installed.

As for the three-phase mode, the three-phase three-wire system and the three-phase four-wire system are popularly used for power transmission. Connections for power transformers where distribution lines of the three-phase three-wire system are connected include delta connection, V-connection and Y-connection, whereas the Y-connection three-phase four-wire system is normally used for high voltage distribution lines and the asymmetrical three-phase four-wire system is popularly used for low voltage distribution lines.

Various transformers, transmission cables, insulators, apparatus and devices may be appropriately used for the purpose of the invention.

When an energy amplifying system is designed for portable applications using nickel-cadmium batteries and/or other batteries, it can serve as a power source for various machines and apparatus including driving apparatus and propelling apparatus for electric auto-bicycles, electric auto-tricycles, fork lifts, power shovels, movable jib cranes, tractors, hovercrafts, snow mobiles, snow plows, shielded civil engineering apparatus, hydroplanes, submarines, airships. When miniaturized, such a system can be used as a power source for toys. It may be needless to say that such a system is good for power source for elevators, air conditioners, lighting apparatus, heating apparatus, snow melting apparatus, road heating apparatus, various electric pumps and electrolytic apparatus. An energy amplifying system according to the invention may be combined with part of various known apparatus with a view of utilizing rotary force of electric motors and special generators. An existing combustion engine may be replaced by an energy amplifying system of the invention and various electric motors and special generators may be used in parallel with such a system.

An energy amplifying system according to the invention may additionally be used for outboard motorboats, ship propelling apparatus and electric automobiles. Some examples of such applications are described below.

Example of Utilization (1)

An outboard motorboat comprising an energy amplifying system. The energy amplifying system is arranged within the boat as a portable power source. The existing drive system (propelling apparatus using a combustion engine) is replaced by a reversible and variable-speed electric motor and related control devices. The speed (rate of rotation) of the motor is controlled by means of rotary switches and other control means including a forward switch, a reverse switch and a stop switch as well as means for controlling voltage and current and inverter controls. When a variable speed electric motor is involved, a clutch handle, a shaft rod and a drive shaft will constitute useful means for controlling the motor.

Example of Utilization (2)

A propelling apparatus for a ship comprising a keep and provided with an energy amplifying system. The ship may no necessarily be small to medium sized but can be a large sized ship.

Such an energy amplifying system can function as a comprehensive power source that utilizes electric energy for driving reversible and variable-speed electric motors which are directly connected to the propeller screw shaft of the ship for effective transmission of propelling power.

When a small sized ship is involved, a shaft provided with universal joints may be suitably used for transmission of power to the propeller shaft and screw along with a vertical feed mechanism for controlling the vertical movement and stroke of the shaft. For a large ship that requires propelling mechanisms arranged on its lateral sides, electric motors for parallel drive may be advantageously used for simultaneously driving a number of propeller screws. When a single main propelling shaft is involved, a number of reversible and variable-speed electric motors may be arranged in series so that they can be centrally controlled. Sea water can be effectively used as secondary cooling water for the energy amplifying system. In short an apparatus according to the second aspect of the present invention can be designed by using selectively any of the above described components in order to establish a cyclic operation of the apparatus on the basis of the principle of the first aspect of the invention so long as it satisfies the requirements of a self-active type apparatus as defined earlier. An apparatus as described above may be applicable to a submarine.

It may be needless to say that provision of stand-by power sources for such a propelling apparatus as described above is indispensable. Any known rudder devices, hydraulic drums and other components may be appropriately combined to enhance the overall efficiency of the propelling apparatus.

Example of Utilization (3)

An electric automobile provided with an energy amplifying system.

Such an automobile may be realized by replacing the combustion engine of an existing automobile by an energy amplifying system according to the invention. Here, electric motors to be used for inverter control and voltage/currentcontrol are directly connected to the flywheel of the car in combination with clutches, transmission gears, universal joints, propeller shafts, differential gears and driving wheels. Like a combustion engine automobile, an electric automobile is maneuvered by means of a steering wheel and a hydraulic brake system.

The brake system of an automobile is generally constituted by a foot brake and a hand brake. A hydraulic foot brake normally comprises a brake pedal, a master cylinder, a brake pipe, a wheel cylinder, a piston, a return spring, a brake shoe, a brake lining and a brake drum. On the other hand, a hand brake normally comprises a parking brake lever, a front cable, a center lever, a return spring, a rear cable, a swing arm, a parking return spring and a cam mechanism. A steering system normally comprises a wheel, a wheel shaft, a gear box, pitmans, a drag link, a drag link arm, a knuckle arm and a tie rod. In specific occasions, a compressed air type damping force booster, a vacuum type damping force booster and a power steering system may be additionally used. Any of the front wheel drive system, the rear wheel drive system and the four wheel drive system (four wheel independent suspension system) may be selectively used. An automatic drive system (a non-clutch method using a torque converter) and a power transfer case may also be used whenever appropriate.

Thus, with the use of an energy amplifying system, the features of various electric motors can be effectively exploited even when existing power transmission gears are installed in an electric automobile. The energy amplifying system may be arranged in the front, front-midship, midship or rear of a car depending on circumstance. The use of a reversible variable-speed electric motor may allow a clutch-free configuration and a simplified design of the propeller shaft depending on its electric characteristics. A simplified design of the propeller shaft can be realized through combination of a reversible variable-speed electric motor and a differential gear or that of a reversible variable-speed electric motor and drive wheels or driven wheels. A plurality of electric motors may be installed in parallel to optimize the operation of the automobile.

A starting motor (a reversible variable-speed electric motor designed for low speed) and a driving motor (a variable speed electric motor for high speed) may be combined by means of power transmission gears comprising a differential gear . Stand-by power sources may be provided along with a heat-pump type air conditioning system, a car radio and other electric equipment whenever appropriate.

An electric automobile as described above may appropriately comprise voltmeters, ammeters, tachometers and other known instruments for automobiles along with various indicators. An electric automobile comprising an energy amplifying system as described above can effectively control electric power and is characterized by its power transmission system for effectively transmitting the rotary power supplied from the electric motors so that it satisfies the requirements of the first and second aspects of the present invention. An electromagnetic clutch may also be used for such an electric automobile to provide a special automobile.

A major problem of an existing electric automobile is that it has a rather short maximum mileage whose limit is defined by the capacity of its power source or the battery. However, an energy amplifying system according to the invention that utilizes flywheels for its control systems can significantly extend the maximum mileage of an electric automobile that incorporates the system because the motor can function as a semiperpetual engine that can be started and stopped in a very ingenious manner and is provided with a charging system that can significantly reduce the level of discharge of the batteries as a cyclic operation of the automobile is established.

The above described examples are embodiments of the second aspect of the invention and characterized by their remarkable features of semiperpetual machines where electric energy is very efficiently consumed.

In short an apparatus according to the second aspect of the present invention selectively comprises an accelerator type DC generator, an energy amplifying system that enables relative amplification of energy and a special generator in the form of a half-finished product according to the first aspect of the invention in order to establish a self-active type generating system whose features may be partly utilized for the purpose of the second aspect of the invention in combination with individual products which are not specified. Such an apparatus can realize by utilizing various electric characteristics of the apparatus a type of energy amplification that has been regarded to be impossible. Voltmeters, ammeters and other indicators as well as various control units and sequence techniques in the field of electric engineering may be selectively and appropriately incorporated into the apparatus.

Now a third aspect of the present invention will be described in detail.

According to the third aspect of the invention, there is provided a self-active type high speed turbine generating system is provided by utilizing an energy amplifying system according to the first aspect of the invention as well as the technique of indirect resistor heating.

More specifically, it is a generating system that utilizes the technique of indirect resistor heating and indirect resistor heaters in place of that of induction heating as described earlier by referring to the first aspect of the invention. Indirect resistor heaters located at the center of an induction reactor are protected and sealed by means of refractory bricks and other appropriate bodies and the outer surface of the reactor is covered by stainless steel panels in order for convection to take place to enhance the heat transfer within the system.

Therefore, this system is characterized by an effective use of an energy amplifying system, where boiling water reactor type indirect resistor furnace (natural convection type, forced convection type) and/or pressurized water reactor type indirect resistor furnace are selectively and effectively used along with existing steam turbine generating facilities in order to establish a comprehensive generating system.

In a resistor furnace using the indirect resistor heating method, the heaters are selected depending on the temperature, purpose and atmosphere of the furnace. Generally speaking, a furnace where temperature does not rise above 1,000°C, heaters made of an nickel-chromium alloy or iron-chromium alloy are normally used, whereas heaters made of silicon carbide or kanthal may be advantageously used where temperature higher than 1,000°C is involved. In a furnace where temperature rises above 1,400°C, heaters made of molybdenum silicate is used. In vacuum, heaters made of an nickel-chromium alloy (800°C or less), molybdenum (1,600°C or less), carbon (2,200°C or less), kanthal (2,500°C or less) or tungsten (3.000°C or less) are selectively used depending on the temperature involved. The wall of the furnace is constructed by using refractory bricks and insulating materials. The wall of refractory bricks may be lined by heat resistive steel if the bricks have to be protected against dispersion of power of bricks. The refractory bricks are of chamotte type or alumina type if temperature above 1,200°C is involved. Recently, ceramic fibers are getting popularity as they show an excellent insulating property. Power sources used for resistor furnaces are mostly three-phase 200V or single-phase 100V. While the electric capacity of a resistor furnace is determined depending on the amount and temperature of the material to be treated within the furnace, the values obtained by means of theoretical equations are often modified by comparing them with corresponding empirical values. If a furnace has the purpose of only heating materials to be treated, it may be realizedto have any desired profile. A transformer that has a load in the form of an electric metallurgic furnace is normally required to provide a low voltage heavy current on its secondary winding side that can conspicuously fluctuate. Therefore, such a transformer should have an electrically and mechanically strong structure. Moreover, the secondary voltage of the transformer should be allowed to vary over a wide range of voltage in order to effectively meet the voltage requirement of the furnace. The secondary voltage may be controlled by means of the direct method that uses an equivalent tap arranged on the primary winding or the indirect method that uses an auxiliary transformer which is serially connected to the secondary winding. With the direct method, the primary voltage will be normally lower than 30KV, although the secondary tap voltage cannot cover a wide range nor modify the voltage at an even pitch. When the secondary tap voltage needs to be regulated over a wide range, switching between a delta connection and a star connection should be appropriately conducted on the primary winding side. On the other hand, the indirect method allows modification of the secondary tap voltage at an even pitch over a wide range. The taps normally have to be switched under zero-voltage condition for a transformer with a capacity lower than 10MVA, although they may be switched with loads for a transformerhaving a higher capacity. In order to reduce the number of hot spots due to an unbalanced three-phase current, a technique of well balanced use of the three phases by arranging a tap for each of the phases and adjusting the secondary voltage independently on all the three phases. The ratio of transformation as well as the characteristics of a transformer should be effectively utilized whenever the voltages of the transformer has to be controlled.

Generally, The electrodes of an electric furnace are artificial graphite electrodes, carbon electrodes or self-burning electrodes. Various insulators should be appropriately used.

A boiling water reactor type steam generator that utilizes natural convection can be classified as an internal heat type, an external heat type or a combination of the two types, any of which may be used for the purpose of the present invention. Indirect resistor heaters are supported by refractory bricks and covered by panels of heat resistive steel such as stainless steel for sealing and protection. A water cooling system may be feasible for terminal electrodes.

An induction furnace may be lined with stainless steel and provides with a wire-mesh type or corrugated panel type moisture separator at the top and with a steam drier using heaters. The top lid may be so configured for that the abutting surface of the flange of the top lid is provided with a pair of circular grooves into each of which a stainless steel O-ring is securely fitted for airtight sealing effect. The flange is screwed into the threaded bore of the moisture separator. Various nozzles (water inlet nozzles, water outlet nozzles, spray nozzles, high level water discharge nozzles, main steal outlet nozzles) and valves are appropriately provided along with visually observable water level meters made of refractory glass. See the accompanying drawings for arrangement of heating bodies. It may be observed that stationary stirrers are realized in the form of so many cylinders provided with convection holes.

A steam generator using indirect resistor heaters as described above is less subject to limitation of capacity as compared with one using induction heaters. Therefore, a number of steam generators may be arranged in parallel or in series to maximize the effect of steam generation. Steam generators so arranged may be selectively used by means of regulating valves and/or stop valves. Thus, a large number of steam generators may be installed so long as such an arrangement adversely affect the overall efficiency of the power plant where the generators are installed. Any excessive power generated within the plant may be used for the operation of other generators so that a self-active type generating system may be established, allowing mutually supplementary use of the generators on cyclic basis.

Here, the energy produced by an energy amplifying system is used to operate indirect resistor furnaces and/or other resistor furnaces as well as steam generators under the control of a control system so that power sources for security facilities (e.g. movable power sources) may be instantaneously put to use. Besides, a system according to the first aspect of the invention may be partly or wholly used with a generating system according to this third aspect of the invention in a coordinated manner.

A generating system according to this third aspect of the invention may comprise a boiling water reactor type indirect resistor heater furnace using forced convection or a pressurized water reactor type indirect resistor heater furnace so that it may be mutually supplementary used with the generator of a self-active type generating system on a cyclic basis.

A steam generator provided with a boiling water reactor type indirect resistor heater furnace using forced convection is typically based on the internal heat method and the core of an induction heating type reactor may be suitably replaced by a core of the indirect resistor heater type along with vapor/water separators and wire-mesh type and/or corrugated plate type moisture separators (wherein indirect resistor heaters are securely insulated and held by spacers). A recirculation system (comprising recirculation pumps, jet pumps, pipes, valves, etc.) may be appropriately incorporated. Water inlet nozzle, spray nozzles, high level water outlet nozzles and valves, main steam outlet nozzles and other devices may be appropriately used in such a recirculation system. The tanks and containers of the system may be lined with stainless steel and several main steam nozzles may be provided with various fixture guides in order to optimize the operation of the turbine generators. Depending on the structure of the steam generators used in a pressurized water reactor, heater terminal electrodes may be provided at the bottom of the reactor in combination with a water cooling system.

When a number of jet pumps are involved, steam may be conveniently distributed among the jet pumps by using branches for each recirculation pump.

Some of the components of a generating system using the induction heating method may be partly replaced by those of a generating system using a pressurized water reactor type indirect resistor heating furnace. More than two sets of primary cooling apparatus (steam generators, primary cooling pump, compressors, etc.) may be installed to set up a large and comprehensive system.

A steam turbine generating system as described above may incorporate, whenever appropriate, feed water heater tanks, refrigerating facilities using cooing water tanks, feed water heaters, moisture separators and condensers. Clean energy is produced by a system as described above regardless if it is based on the indirect resistor heater method or the induction heating method and therefore it is free from pollution and can satisfactorily respond to any massive demand for power.

Water boils at $100^\circ$C and has a critical temperature of approximately $374^\circ$C and a critical pressure of approximately $226kg/cm^2$. In a steam generating system, water is heated and maintained at a high temperature so that saturated vapor or high pressure vapor may be utilized. A steam generator using indirect heater reactors normally can have a large capacity which is large enough for any demand by a generator. However, as large turbine generators with a rated output of 1,000MW are put to use in recent years, steam generators sometime fail to meet the demand of such turbine generators. An energy amplifying system may be effectively used in such cases for amplifying electric energy repeatedly if necessary based on the concept of the first aspect of the invention.

With an energy amplifying system as described above, a small capacity power plant can multiply its capacity through cyclic operation of the amplifying system since it functions as a semiperpetual engine. Therefore, with an energy amplifying system according to the first aspect of the invention in mind, a power plant may be a small one or a large one depending on the conditions of the construction site. Here, the use of an electric furnace will be supplementarily described. An electric furnace (induction furnace, indirect resistor furnace) consumes generated electricity for heating, maintenance of high temperature and melting metal and is so designed as to have a capacity that accommodates any changes in the load. According to Japanese standards, a low frequency induction furnace to be used for melting metal is required to have a melting pot capacity of 30(t), an electric capacity of 5,200(KW), a power source capacity of 6,000(KVA), a unit power of 500(KWh/t) and a melting capacity of 10.4(t/h). According to a list of ratings of industrial facilities with electric heating apparatus in Japan, a facility for heating steel rods is required to be equipped with 60ø billet heaters electrically rated for voltage of three-phase 3,300/6,000V and for capacity of 400(KW) and having dimensions of heated working area of 11ø×180-(cm) and temperature of 1,250(°C). A liquid immersion type heater with a capacity of 1,000 to 1,800KW is normally used. Additional specifications of a furnace should be determined by referring to required heating and melting characteristics. The control system for such a furnace should be so designed that it can operate as a self-active type system according to the basic concept of the first and second aspects of the present invention.

In other words, a furnace as described above have to be of a self-active type and function as a semiperpetual engine that operates on cyclic and recirculating basis to maximize the efficiency of its energy consumption and its life expectancy.

Feed water heater tanks, feed water heaters and steam generators may be combined with an energy amplifying system and applied to a hot water heating system, a hot water road heating system or a steam heating system when stainless steel pipes and circulating water drive pumps are effectively used in order to enhance the heat resistivity and the duration of the system. It may needless to say that such a system comprises water feeding facilities, water drain facilities and back pressure turbines, if steam generators are involved.

Hot water and high pressure steam have to be efficiently and effectively used for a cogeneration system which may be used in combination with an energy amplifying system depending on its application.

A generating system according to the third aspect of the invention as described in detail above normally comprises more than one energy amplifying systems along with diesel generators, gas turbine generators, commercial power sources, batteries and other components with a view to establish a fail safe system. While a system according to the first aspect of the invention is characterized by the induction heating method, a system according to the third aspect of the invention is characterized by the indirect heating method, although either system can comprise a variety of components which are combined in a rational manner. Therefore, both systems may be installed on mutually supplementary basis.

Now a fourth aspect of the invention will be described in detail.

According to the fourth aspect of the invention, there is provided a temperature difference generating system that utilizes freezing cycles of a medium and an energy amplifying system according to the first aspect of the invention.

It is an modified form of so-called sea water temperature difference generation and, as described above, utilizes electric energy to a maximum extent in order to meet the energy level required by the energy amplifying system as well as freezing cycles of a medium, although it can additionally utilized hot water heating systems using the heat generated by sheathed wires, aluminum-cadmium heaters and other indirect resistor heaters.

Sea water temperature difference generation is a technique of electric generation by which a liquid medium (heat medium) having a low boiling point such as ammonia or furon is vaporized near the surface of sea water which is relatively hot and the pressure of the vaporized medium is used to drive turbines. The gas coming out of the turbines is cooled and reduced to liquid by cool sea water pumped from a deep area of the sea to set up a cyclic operation.

The cycle can be made into a freezing cycle of compression, condensation, expansion and vaporization whose efficiency may be enhanced by additionally using the technique of hot water heating (based on the indirect resistor heating method). A system according to the fourth aspect of the invention is characterized by effective insertion of an energy amplifying system and a freezing cycle based on the concept of temperature difference generation. A sea water temperature difference generating system is normally accompanied by the problem of supply of energy required for pumping up cooling water from a deep area of the sea (by driving feed water pumps to get cooling water) and that of finding an appropriate site. The site is not necessarily limited to the sea surface.

However, with an energy amplifying system, the generated electric power can be amplified further or otherwise branched by way of transformers and a control system in order to drive compressors, condensers, capillary tubes, evaporators and other components for the purpose of the freezing cycle. A multi-layered configuration of a system using multiple sets of components may be conceivable (so that the system may be operated on a fail safe concept and instantaneous switchover among the sets may be possible).

Basically, with such a system, compressors and other components are operated by an energy amplifying system (constituted by nickel-cadmium batteries and other elements in order to establish a cyclic operation of the system) to control the freezing cycle of the system.

supplementarily, heat conserved within hot water vessels may be effectively utilized by using thermostats, ON/OFF control units and other temperature control devices. Hot water can be circulated through piping by means of circulator pumps. Sheathed wires, aluminum-cadmium heaters and other indirect resistor heaters may be effectively used and the inner surface of the walls of hot water vessels may be lined with stainless steel. Water inlet ports, water outlet ports, circulating water inlet and outlet nozzles, water level meters made of refractory glass and stainless steel pipes may be appropriately installed.

When the output level of a temperature difference generating system designed for cyclic operation does not reach the level required for operation of a hot water vessel, the generated power has to be amplified by an energy amplifying system. The rotary force provided by the system may be used for driving accelerator type DC generators and other applications. Therefore, a generating system according to the fourth aspect of the invention can be effectively used in combination with systems according to the first and second aspects of the invention in order to set up a semiperpetual engine.

When a temperature difference generating system is combined with an energy amplifying system to utilize a freezing cycle, the power input to the freezing cycle and the hot water heaters may be initially used either for power transformation, transmission and distribution or for operation of control systems. The power generated by the system may further amplified by means of an energy amplifying system in a manner as described by referring to the first aspect of the invention. The sequence technology, the use of various devices and provision of coaxial turbines on both lateral sides of a generator may be recommended. Besides, labyrinth packings, bearing oil sealing devices and bypasses may be effectively installed. A turbine and a generator may be connected by means of a liquid coupling and/or reduction gears.

External power sources may be appropriately utilized for the purpose of the fourth aspect of the invention.

Now, a fifth aspect of the invention will be described.

According to the fifth aspect of the invention, there is provided a snow melting apparatus that effectively utilizes an energy amplifying system and the induction heating method for establishing a cyclic operation of the apparatus on the basis of the concept of the first aspect of the invention.

A number of hexagonal columns each made of a ferromagnetic material are combined and a back water cooling type induction reactor is installed in the ground. Snow is introduced into the heated reactor and molten there, the molten snow or water being suctioned up by means of siphons to effectively use an insulated water vessel arranged adjacent to the reactor in order to intensify the effect of the melting apparatus and eject waste water. The water produced by melting snow may be returned underground or led to a gutter. The components of an induction reactor for melting snow may be appropriately selected on the basis of geographical and meteorological considerations.

Induction coils to be used for the purpose of the fifth aspect of the invention have to be perfectly insulated. Power sources may be selected from possible candidates also on the basis of geographical and meteorological considerations, although systems according to the first and second aspects of the invention may be appropriately incorporated. Cooling water tanks may be appropriately installed to provide cooling water and additionally assist the urban life of the area. Stand-by power sources are among the requirements of the system. Such cooling water tanks may be used in combination with an energy amplifying system according to the first aspect of the invention.

Finally, a sixth aspect of the invention will be described.

According to the sixth aspect of the invention, there is provided an indirect resistor heating type incinerator equipped with electric dust catchers and combined with an energy amplifying system according to the first aspect of the invention.

An electric dust catcher which is suitably used here is realized in the form of a cylinder as specified by the Japanese Society of Electric Engineering and has a dust catching electrode and a discharge electrode to which a high voltage is applied to induce corona discharge, where positive ions are neutralized by the discharge electrode and negative ions are attracted by the dust catching electrode. When soot is introduced into the electric field of the cylinder, the particles of the soot become negatively charged and therefore attracted toward the dust catching electrode by the Coulomb's force. The soot particles on the electrode plate agglomerate by their own mutual attraction to form a large block of soot and then hammered out to leave the electrode and fall into an ash hopper located below the dust catcher because of its own weight. Such an electric dust catcher is characterized by that it can effectively catch fine particles and hence very efficiently operate, that it hardly loses pressure loss and therefore the level of energy required to drive fans is low and that it can adapt itself to a wide range of soot temperature, moisture and pressure.

An incinerator according to the sixth aspect of the invention can be appropriately combined with systems according to the first and second aspects of the invention and comprise an energy amplifying system. The incinerator is a indirect resistor heating type electric furnace to which air is blown in by means of fans to maximize the effect of the electric dust catchers it comprises. The power input to the incinerator may be AC and/or DC and stand-by power sources should be appropriately installed. For the configuration of an incinerator according to the invention, see the accompanying drawings.

While the present invention is described in detail above by referring to its various aspects, the sequence technology and various devices as well as instruments may be appropriately incorporated into any systems and/or apparatus according to the invention in order to optimize the effect of such systems and/or apparatus. Functional features of special generators such as accelerator type DC generators should be exploited to a maximum extent so that effective and efficient semiperpetual engines may be established. Any modifications and changes may be possibly made to systems and/or apparatus according to the invention without departing from the spirit and scope of the invention.

BRIEF DESCRIPTION OF THE DRAWINGS

Fig. 1 is an illustration of a basic energy amplifying system.
a) a schematic illustration of a combination of a basic energy amplifying system, a transmission gear and other elements.
1. battery, 2. switch control, 3. DC motor, 4. accelerator type DC generator, 5. current type inverter control, 6. AC motor, 7. battery recharging dynamo, 8. regulator/charger, 9. accelerator type DC generator, 10. variable frequency voltage power source control, 11. stand-by power source, 12. AC motor for variable frequency control, 13. flywheel, 14. clutch/transmission gears, 15. directly connected to various transmission gears
b) a schematic illustration of an independent cycle system
1. battery and other power sources, 2. switch and switch control, 3. various electric motors, 4.accelerator type DC generator, 5. flywheel, 6. switch power source (independent cycle system control), 7. various electric motors arranged in parallel, 8. accelerator type DC generator and other special generators, 9. (reusable) power source, 10. rotary shaft
c) an appropriate configuration
1. various power source controls, 2. various electric motors, 3. rotary shaft, 4. accelerator type DC generator, 5. accelerator type DC generator and other special generators, 6. stand-by power source, 7. control system for various electric motors arranged in parallel, 8. various electric motors, 9. accelerator type DC generator, 10. stand-by power source, 11. various electric motors (mainly operated in parallel), 12. accelerator type DC generator, 13. stand-by power source (for reuse), 14. various electric motors, 15. various generators (AC generators), 16. (appropriately configured) appropriate cycle system Various electric motors and controls are shown only as examples and can be appropriately combined with accelerator type DC generators in parallel.

Fig. 2 is a schematic illustration of an accelerator type DC generator with an armature conductor fitted to its stator side. A current collector is omitted.
1. rotary shaft, 2. omnidirectional magnet (N-pole is arranged on the periphery), 3. air gap, 4. silicon steel laminated core (without excluding the use of amorphous alloy), 5. armature conductor, 6. magnet as a saucer (S-pole is arranged inside), 7. bracket
The use of self-excited and separately excited electric magnets and that of cage and single cylindrical armature conductors are not excluded.

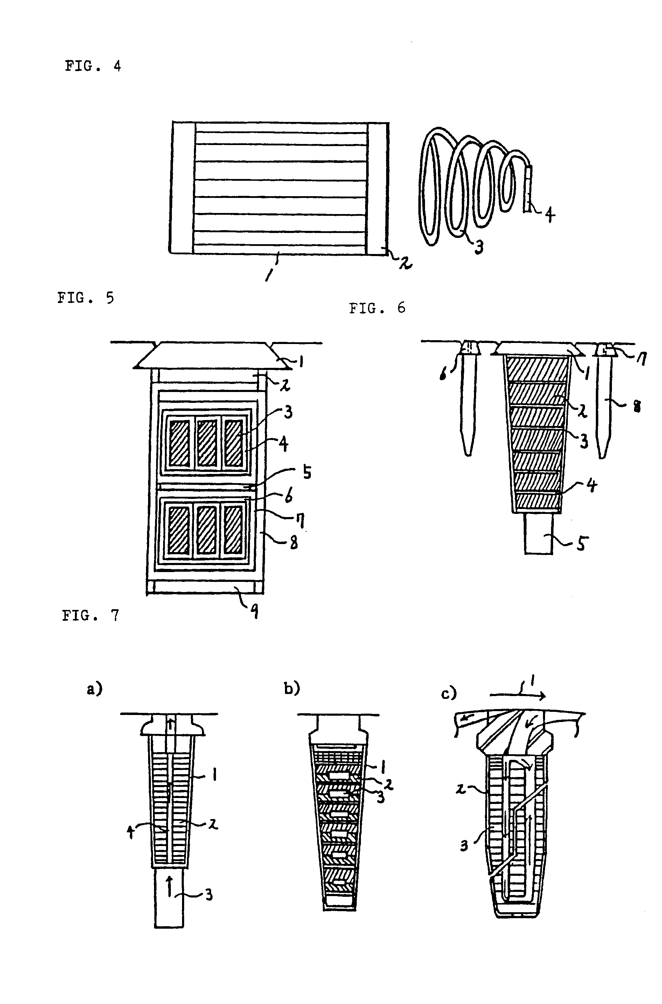

Fig. 3 is a schematic illustration of an accelerator type DC generator with an armature conductor fitted to its rotor side. A current collector is omitted.
1. rotary shaft, 2. magnet as a saucer (S-pole is arranged on the periphery), 3. armature conductor, 4. silicon steel laminated core, 5. air gap, 6. omnidirectional magnet with its N-pole arranged inside, 7. bracket
The use of self-excited and separately excited electric magnets and that of cage and single cylindrical armature conductor are not excluded.

Fig. 4 is a schematic illustration of a cage armature conductor and a current collector of an accelerator type DC generator.
1. cage armature conductor, 2 and 3 are electrically connected., 3. current collector, 4. slipring and other conductors
N.B. Slot insulation should be considered for 1. The current collector may be appropriately configured.

Fig. 5 shows an example of slot insulation for an armature conductor (Example 1).
1. wedge (polyester glass laminate), 2. wedge lower insulator (polyamide paper), 3. armature conductor (soft copper, etc.), 4. conductor insulator (glass mica tape), 5. interlaminate insulator (polyamide paper), 6. coil insulator (mica tape), 7. protection insulator (glass tape), 8. slot insulator (polyamide paper), 9. slot bottom insulator (polyamide paper)

Fig. 6 shows an example of slot insulation for an armature conductor (Example 2).

1. wedge (polyester glass laminate), 2. soft copper conductor, 3. slot insulator (polyamide paper), 4. interlaminate insulator (polyamide paper), 5. sub-slot (ventilation slot), 6. ventilation slot wedge, 7. exhaust port, 8. ventilation slot

Fig. 7 shows an illustration of a rotor coil cooling system.

    a) radial flow method

    1. slot insulator, 2. soft copper conductor, 3. sub-slot, 4. cooling port

    b) internal cooling method

    1. slot insulator, 2. soft copper conductor, 3. hollow conductor port

    c) gap pick-up method

    1. sense of rotation, 2. slot insulator, 3. soft copper conductor This is a typical rotor coil cooling system and can be appropriately applied to an accelerator type DC generator comprising cage armature conductors and used as an omnidirectional rotary field coil cooling system.

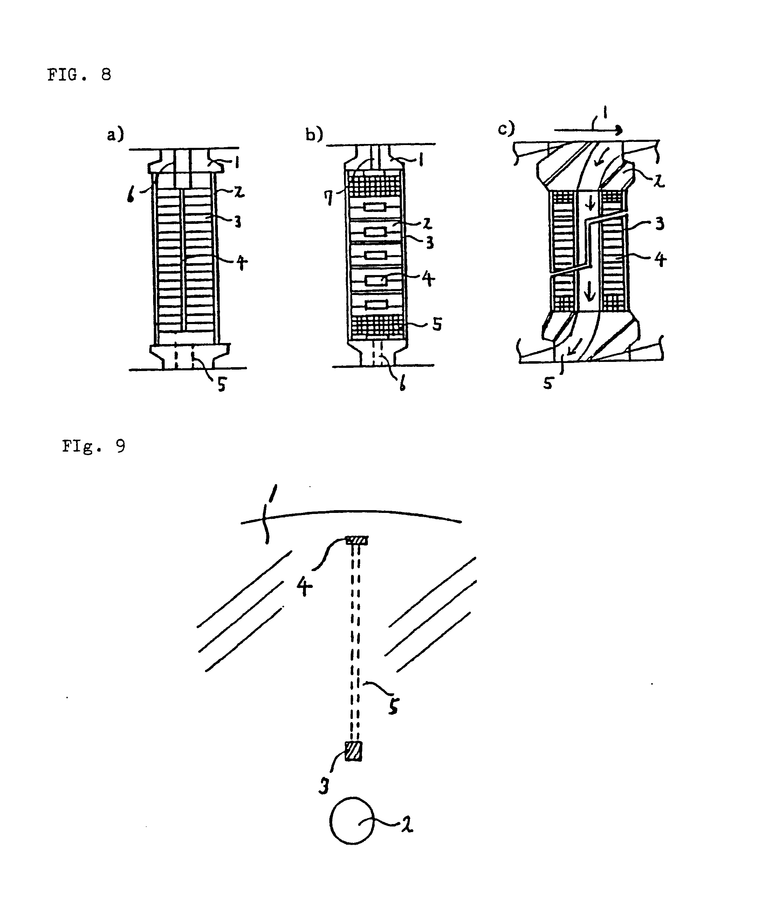

Fig. 8 shows an illustration of a disc type slot insulation system for a monopolar DC machine comprising armature conductors.

    a) radial flow method

    1. wedge, 2. slot insulator, 3. soft copper conductor, 4. cooling ventilation port, 5. lower ventilation air inlet, 6. upper ventilation air inlet

    b) internal cooling method

    1. wedge, 2. soft copper for hollow electric conductors, 3. slot insulation, 4. hollow conductor hole, 5. main insulator, 6.lower ventilation air outlet port, 7.upper ventilation air outlet port

    c) gap pick-up method

    1. sense of rotation, 2. wedge for ventilation, 3. slot insulator, 4. soft copper conductor, 5. ventilation path An armature conductor realized in the form of a disc and provided with slot insulators. It may be needless to say that radial arrangement is required. It may have a multi-layer configuration provided with upper and lower ventilation paths arranged on a single disc-type conductor. Cooling air blowers may be used for it and it may be used for a flywheel storage systems.

Fig. 9 is a side view showing a ventilation path arranged on a disc-shaped conductor.

1. disc-shaped conductor, 2. rotary shaft, 3. lower ventilation air inlet, 4. upper ventilation air outlet, 5. ventilation port

A single disc-shaped conductor may be used for typical configuration along with slot insulators as illustrated in Fig. 8 for cooling applications. No particular blowers are required when the gap pick-up method is adopted.

Radial arrangement is required.

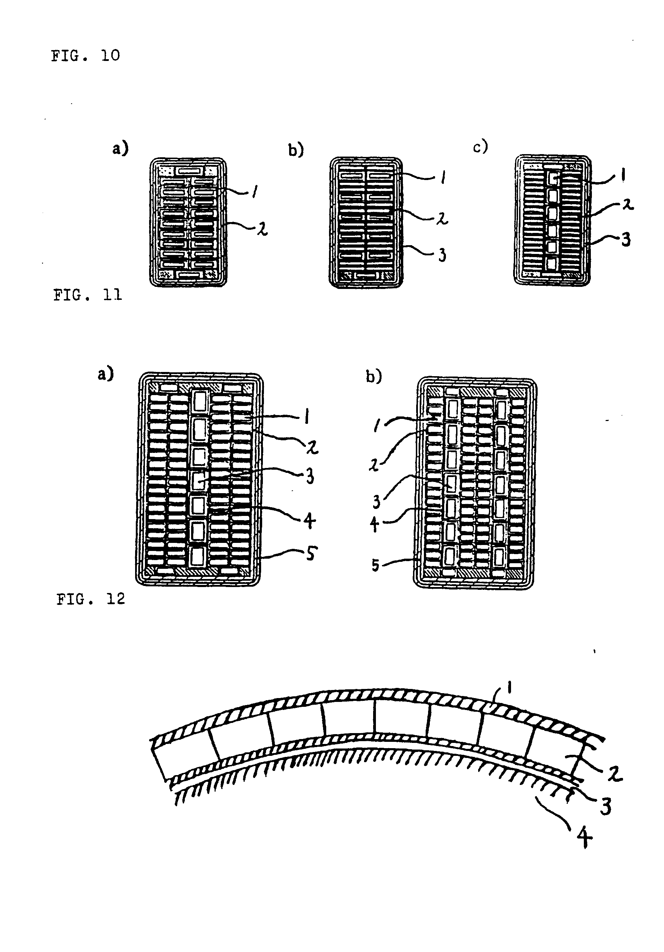

Fig. 10 shows a stator coil cooling system.

    a) hollow conductor method

    1. hollow conductor, 2. main insulator

    b) hollow/solid mixed method

    1. hollow conductor, 2. solid conductor, 3. main insulator

    c) bent tube method

    1. bent tube, 2. solid conductor, 3. main insulator This system is typically used for internal cooling of cage-type rotor armature conductors of accelerator type DC generators. The cooling technique used in this system is widely known.

Fig. 11 shows a side view of a cage armature conductor provided with a rotor bent tube cooling system for an accelerator type DC generator.

    a) single row bent tube method

    1. strand (soft copper conductor), 2. strand insulator, 3. bent tube, 4. bent tube insulator, 5. main insulator

    b) double row bent tube method

    1. strand (soft copper conductor), 2. strand insulator, 3. bent tube, 4. bent tube insulator, 5. main insulator

Fig. 12 shows the configuration of a rotor bent tube internal cooling system.

1. bracket, 2. arrangement of bent tube insulators and armature conductors, 3. air gap, 4. omnidirectional rotary field type rotor.

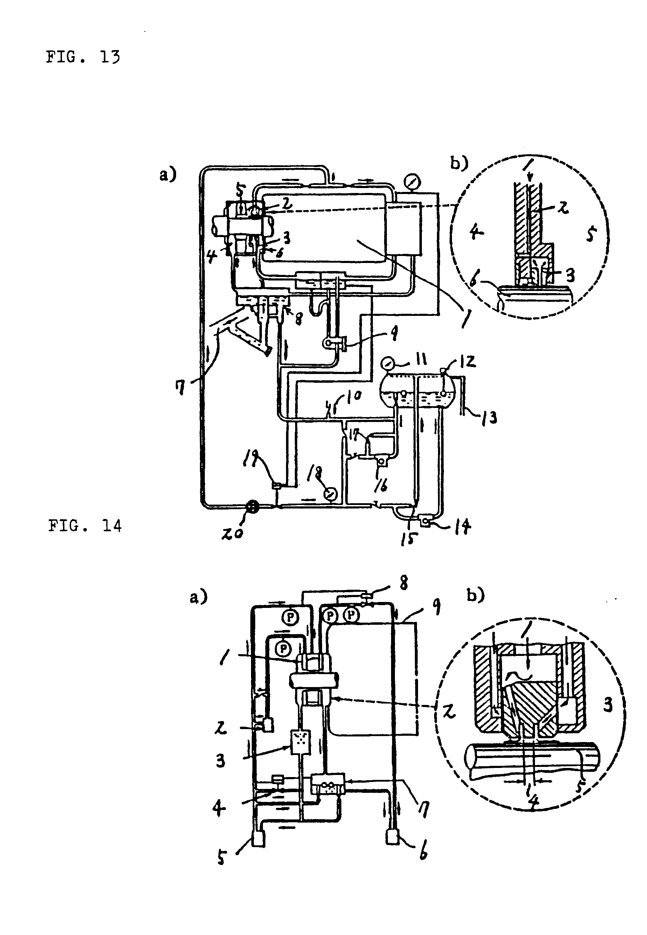

Fig. 13 shows a diagram of a vacuum treatment type seal oil system (extracted from Japanese Society of Electric Engineering: Electric Engineering Pocketbook).

    a) vacuum treatment type seal oil system 1. hydrogen cooling turbine generator, 2. shaft seal (See b) showing the shaft seal in detail.), 3. hydrogen side, 4. atmosphere side, 5. turbine side bearing, 6. inside oil drain, 7. bearing returned oil pipe, 8. air bleeder tank, 9. flow trap, 10. supply route of cooling oil from bearing oil feeding pipe to vacuum tank, 11. vacuum gauge (vacuum tank), 12. oil level meter, 13. route between the vacuum pump and the atmosphere, 14. ordinary seal oil pump, 15. regulating valve, 16. emergency seal oil pump, 17. regulating valve, 18 oil meter, 19. oil pressure regulating valve, 20 oil filter

    b) detail of shaft seal

    1. seal oil, 2. casing, 3. seal ring, 4. air side, 5. hydrogen side, 6. shaft

Fig. 14 shows a diagram of a double current type seal oil system (extracted from Japanese Society of Electric Engineering: Electric Engineering Pocketbook).

a) double current type seal oil system

1. sealed vessel, 2. high pressure pump for sealed vessel, 3. air side oil tank, 4. pressure difference regulating valve, 5. air side seal oil pump, 6. hydrogen side seal oil pump, 7. hydrogen side seal oil tank, 8. sensitive pressure difference regulating valve, 9. dynamo frame

b) dynamo inside

1. seal oil, 2. air side, 3. hydrogen side, 4 neutral belt, 5. rotary shaft

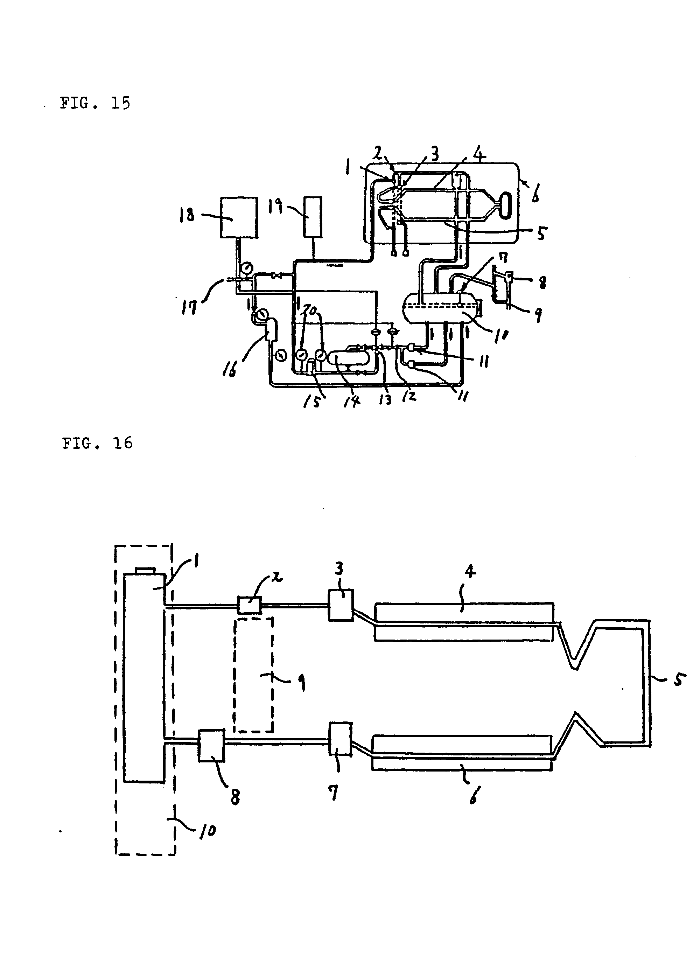

Fig. 15 is a diagram of a water cooling system (extracted from Japanese Society of Electric Engineering: Electric Engineering Pocketbook).

1. inlet side header, 2. ventilation pipe, 3. outlet side header, 4. upper coil side cooling water path, 5. lower coil side cooling water path, 6. dynamo stator frame, 7. upper and lower water level alarm, 8. automatic drain valve, 9. drain, 10. water tank, 11. rotor cooling water tank, 12. reducing valve, 13. temperature regulating valve, 14. cooling vessel, 15. filter, 16. ion exchange resin, 17. water supply inlet port, 18. temperature regulator gauge, 19. purity meter, 20. pressure gauge

Fig. 16 is a diagram of a (double-path type) water cooling system.

1. cooling water tank for radiators, etc. (Auxiliary tanks may be provided.), 2. circulating water pump, 3. water supply inlet side manifold, 4. path of cooling water for hollow conductors, bent tubes and stator lower coil, 5. piping for lower coil, 6. path of cooling water for hollow conductors, bent tubes and stator upper coil, 7. water supply outlet side manifold, 8. ion exchanger using ion exchange resin, 9. rotary machine such as electric motor (if appropriate), 10. secondary cooling water (if appropriate)

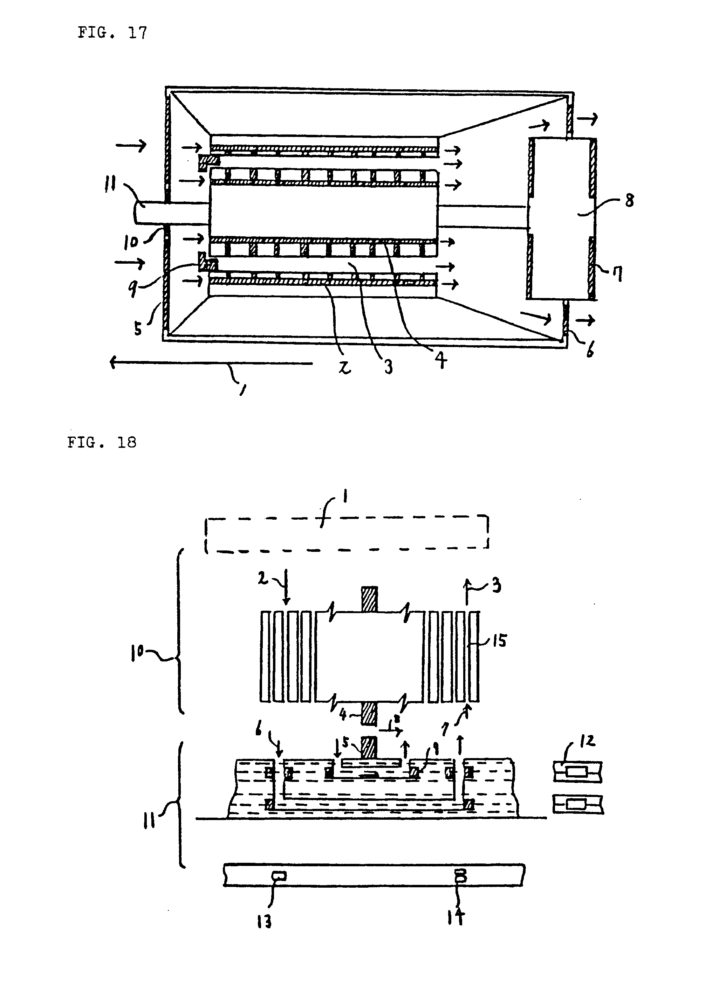

Fig. 17 shows as a diagram of an air cooling system.

1. direction of air movement (An air blower may be arranged at the front.), 2. rotor ventilation port, 3. air gap, 4. rotor ventilation port, 5. ventilation port provided with filter, 6. exhaust port, 7. exhaust port for cooling air for rotary machines such as electric motors (Electric motors are cooled if appropriate.), 8. electric motor, 9. air barrier (such as metal stuffing), 10. bearing, 11. rotary shaft

Fig. 18 shows a pressure gap system (extracted from Japanese Society of electric Engineering: Electric Engineering Handbook).

1. blower, 2. ventilation from blower, 3. exhaust air to blower, 4. stator barrier, 5. rotor barrier, 6. high pressure zone ventilation path, 7. low pressure zone ventilation path, 8. leakage, 9. metal stuffing, 10. stator side, 11, rotor side, 12 rotor coil, 13. air inlet port, 14. air outlet port, 15. air duct

Hydrogen is normally used as cooling medium. Seal oil devices may be appropriately used for an accelerator type DC generator.

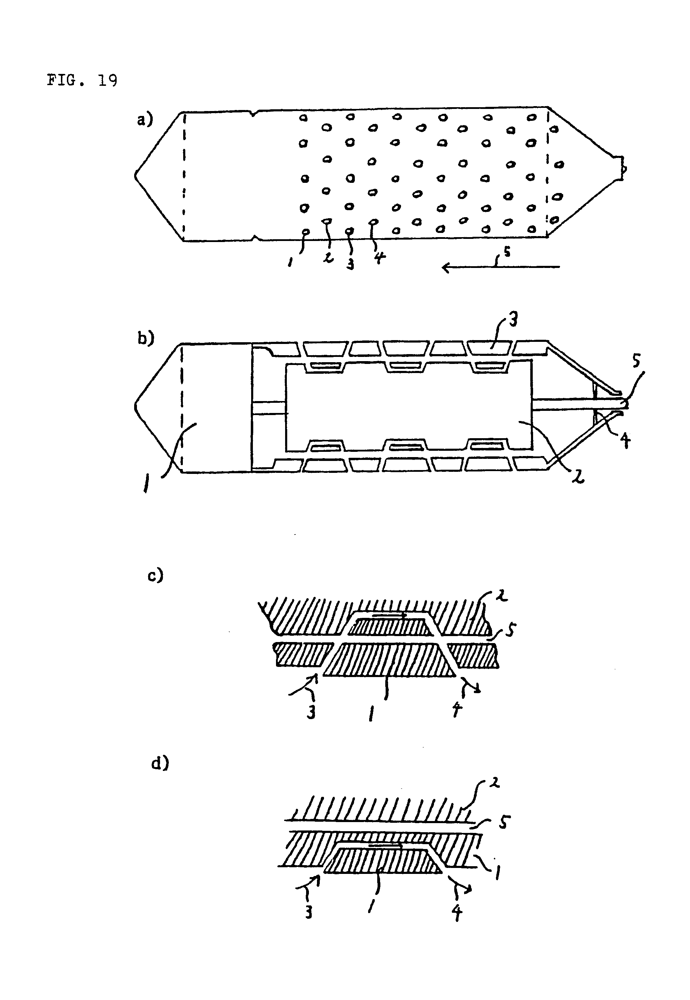

Fig. 19 shows a schematic illustration of a wind pressure cooling system using a pressurized gap method.

a) front view

1. stator side air inlet port, 2. rotor side air inlet port, 3. stator side air outlet port, 4. rotor side air outlet port, 5. direction of blown air b) (schematic) sectional view

1. electric motor, 2. rotor, 3. stator, 4. bearing, 5. rotary shaft

c) schematically illustrated ventilation path (for rotor)

1. bracket or other fitting, 2. rotor, 3. air inlet port, 4. exhaust port, 5. air gap

d) schematically illustrated ventilation path (for stator)

1. bracket or other fitting, 2. rotor, 3. air inlet port, 4. exhaust port, 5. air gap Barriers, metal stuffings, coils and current collectors as shown in Fig. 18 are appropriately used.

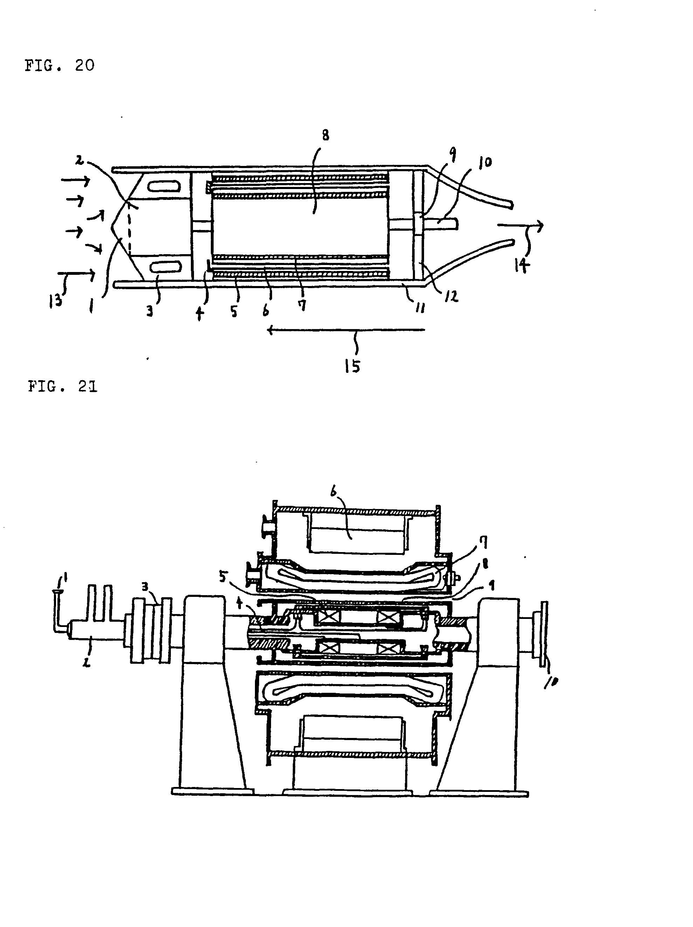

Fig. 20 shows a air cooling system using compressors.

1. compressor, 2. electric motor, 3. fixing frame such as tripod, 4. air barrier, 5. stator ventilation port, 6. air gap, 7. rotor ventilation port, 8. rotor, 9. bearing, 10. rotary shaft, 11. bracket, 12. rotor fixing frame, 13. wind pressure, 14. exhaust, 15. direction of blow air

Fig. 21 shows a sectional view of a superconductive synchronous generator (extracted from Japanese Society of Electric Engineering: Electric Engineering Handbook).

1. liquid helium, 2. transfer coupling, 3. slip ring, 4. electric current lead, 5. superconductive field winding, 6. magnetic shield, 7. armature winding, 8. damper shield, 9. air gap, 10. driving side

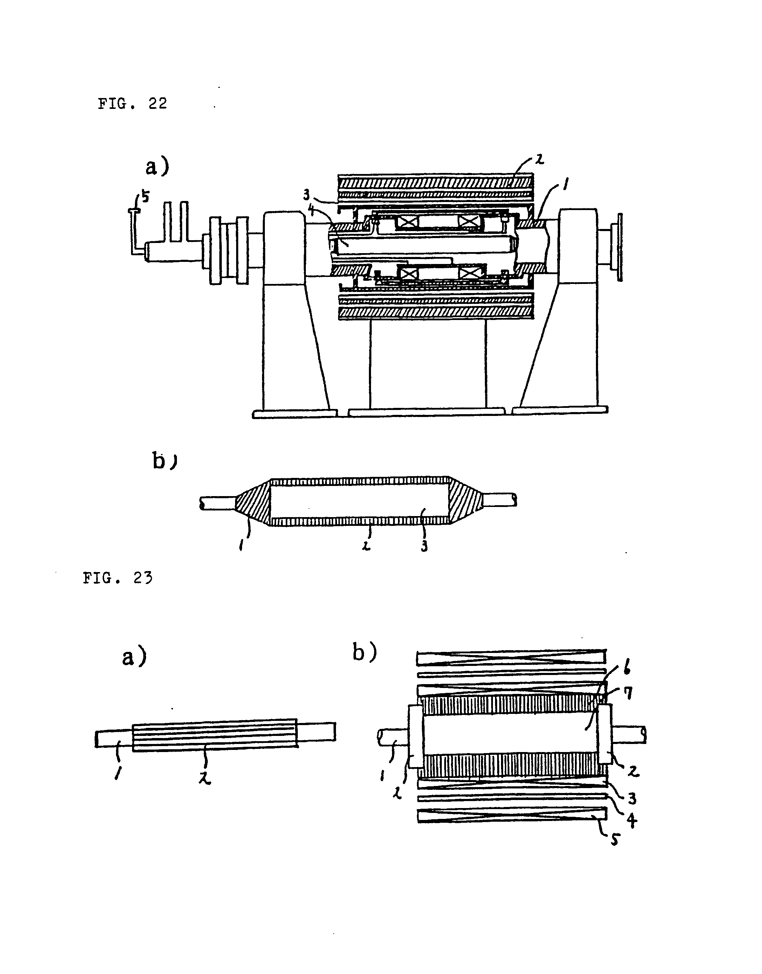

Fig. 22 shows a schematic illustration of a superconductive accelerator type DC generator (which may be appropriately modified by using an accelerator type superconductive synchronous generator).

a) sectional view of a superconductive accelerator type DC generator

1. omnidirectional magnetic field, 2. accelerator type stator armature conductor, 3. air gap, 4. magnetic induction ion core, 5. liquid helium

The cooling method for stator conductor and current collector may be appropriately determined.

b) magnetic induction ion core (as indicated by 4 above)

1. one-way induction electric magnet, 2. disc-shaped laminated iron core, 3. cylinder-shaped laminated iron core A core of this type is placed at the center of an appropriately configured superconductive accelerator type DC generator for a magnetic field induction.

Fig. 23 shows part of a typical configuration of an accelerator type DC generator.

a) configuration of rotary shaft

1. rotary shaft, 2. spline groove

b) configuration for induction of magnetic field

1. rotary shaft, 2. permanent or electric magnet, 3. omnidirectional permanent or electric magnet, 4. appropriately arranged armature conductor, 5. permanent or electric magnet as saucer, 6. disc-shaped laminated iron core, 7. cylinder-shaped laminated iron Where an omnidirectional magnetic field is involved, laminated iron cores should be appropriately arranged for the purpose of induction of magnetic fields.

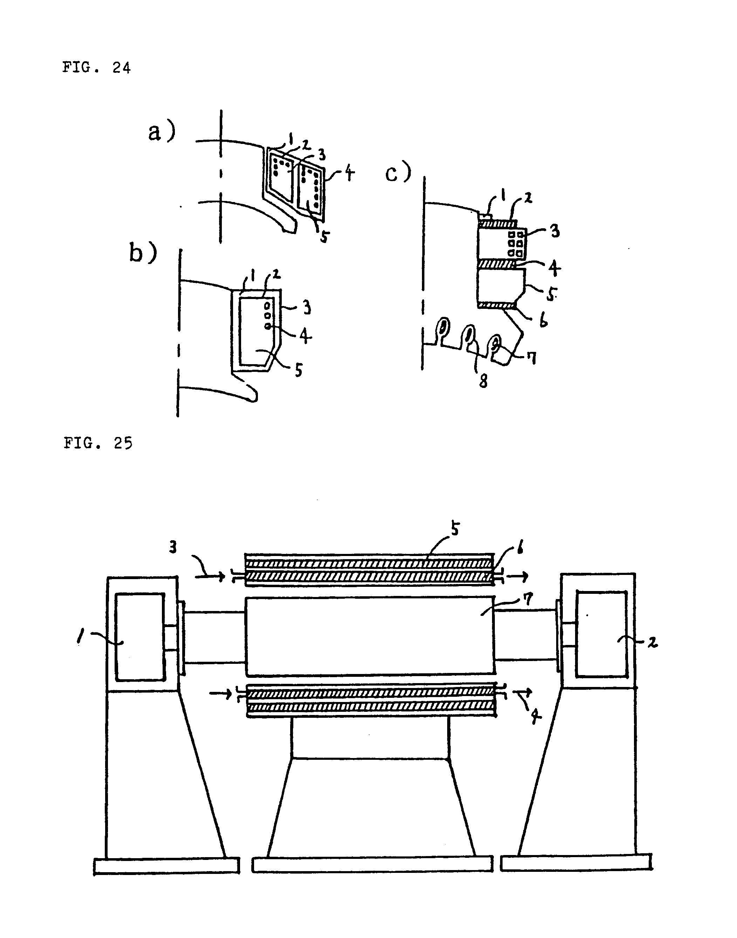

Fig. 24 shows how a main pole field winding is typically utilized.

a) When a small-sized DC machine is involved.

1. asbestos paper, 2. varnish glass cloth, 3. shunt winding, 4. glass tape, 5. series winding

b) When a medium-sized DC machine is involved.

1. asbestos paper, 2. mica paper, 3. glass mica paper, glass tape, etc., 4. copper wire, 5. shunt winding

c) When a large-sized DC machine is involved.

1. fixing frame (iron plate), 2. insulating frame (epoxy-glass laminate), 3. shunt winding, 4. spacer (epoxy-glass laminate, 5. polyamideimide paper, varnish glass cloth, etc., 6. insulating frame, 7. compensating winding, 8. glass mica tape, glass tape, etc. Self-excited or separately excited omnidirectional electric magnets are appropriately used for accelerator type DC generators. Such magnets may be combined and formed into an omnidirectional salient-pole type. (Cylinder-type filed windings and/or distributed windings may be appropriately modified into omnidirectional and/or enclosed types.)

Fig. 25 shows a drive system of an accelerator type DC generator.

1. starting electric motor, 2. driving (high-speed) electricmotor, 3. cooling water (Hollow conductors and/or bent tubes may be appropriately used.), 4. cooling water outlet port, 5. magnet as saucer, 6. armature conductor, 7. omnidirectional rotary field type rotor Self-excited or separately excited electric magnets, current collectors, various cooling system and/or armature conductors may be appropriately incorporated.

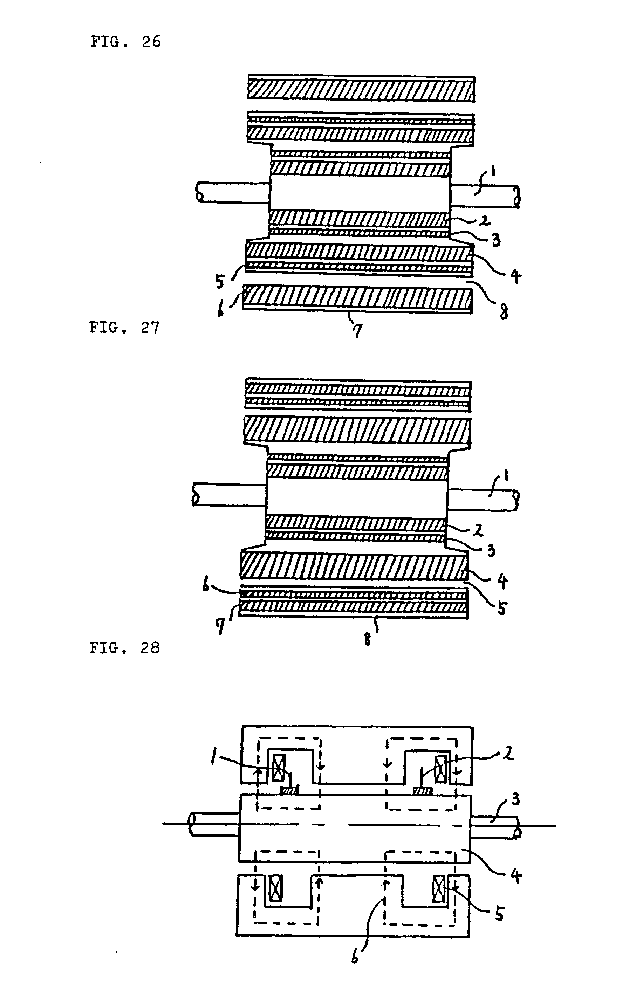

Fig. 26 shows an application of an accelerator type DC generator (where an armature iron core and an electric motor are combined).

1. rotary shaft, 2. magnet as saucer, 3. conductor for electric motor, 4. magnet as saucer, 5. conductor for generator, 6. totally enclosed magnetic field, 7. bracket, 8. air gap Current collectors, self-excited or separately excited electric magnets and/or hollow conductors may be appropriately incorporated. The cooling method and the capacity of the conductors for a generator may be appropriately selected.

Fig. 27 shows an application of an accelerator type DC generator (where a field iron core and an electric motor are combined).

1. rotary shaft, 2. omnidirectional magnet, 3. conductor for electric motor, 4. omnidirectional magnetic field, 5. air gap, 6. conductor for generator, 7. magnet as saucer, 8. bracket Current collectors, self-excited or separately excited electric magnets and/or hollow conductors may be appropriately incorporated. The cooling method and the capacity of the conductors for a generator may be appropriately selected.

Fig. 28 shows a monopolar DC machine (extracted from Japanese Society of Electric Engineering: Electric Engineering Pocketbook).

1. negative current collector section, 2. positive current collector section, 3. rotary shaft, 4. armature conductor, 5. field coil, 6. magnetic field (magnetic path) The above components may be appropriately combined.

Armature conductors may be realized as cage-type and used with slip-rings and brushes as well as with a cooling system using hollow conductors.

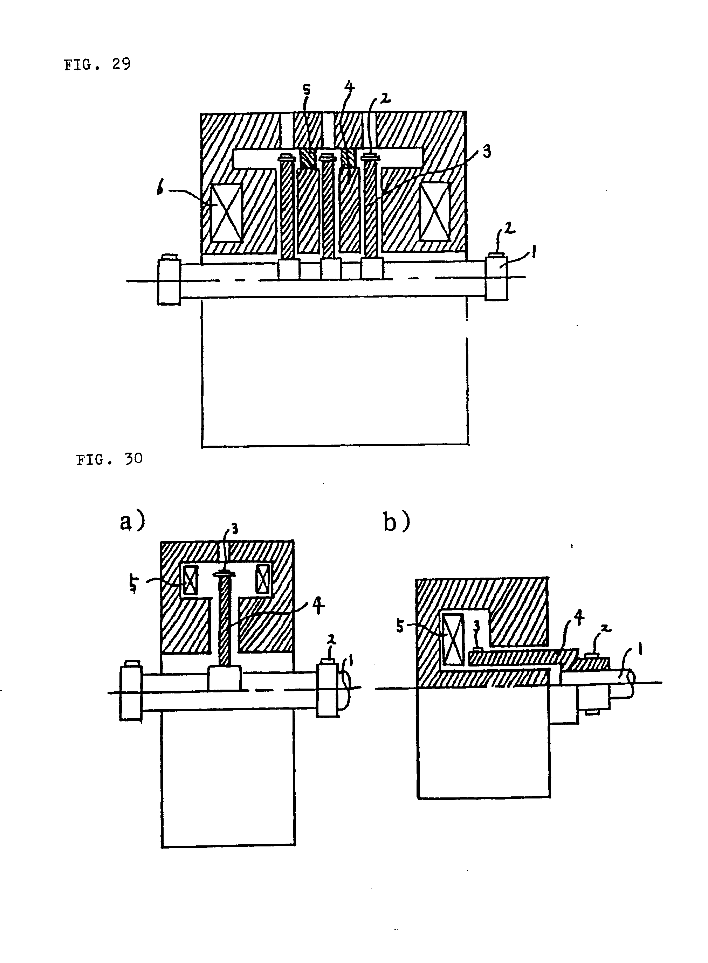

Fig. 29 shows a schematic illustration of a disc-shaped armature conductors having a multi-layered structure.

1. rotary shaft, 2. current collector (positive electrode, negative electrode), 3. disc-shaped armature conductor, 4. permanent or electric magnet, 5. nonmagnetic body, 6. field coil The number of disc-shaped armature conductors having a multi-layered structure may be appropriately chosen.

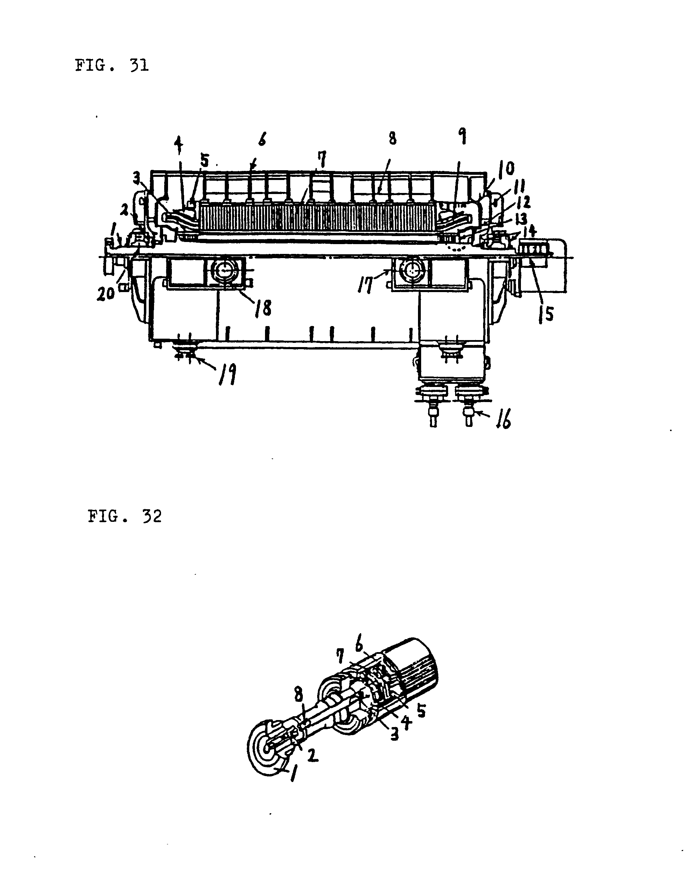

Fig. 30 shows a schematic illustration of a monopolar DC machine (extracted from Japanese Society of Electric Engineering: Electric Engineering Handbook).

a) a schematic illustration of a monopolar DC machine using disc-shaped armature conductors

1. rotary shaft, 2. collector positive electrode (negative electrode), 3. collector negative electrode (positive electrode), 4. disc-shaped armature conductor, 5. field coil

b) a schematic illustration of a monopolar DC machine using cylinder-shaped armature conductors

1. rotary shaft, 2. collector positive electrode (negative electrode), 3. collector negative electrode (positive electrode), 4. disc-shaped armature conductor, 5. field coil

Fig. 31 shows a sectional view of a hydrogen cooling type turbine generator (extracted from Japanese Society of Electric Engineering: Electric Engineering Handbook).

1. rotor main shaft, 2. bearing oil sealing device, 3. holder ring, 4. armature winding support, 5. cap plate, 6. stator frame, 7. armature iron core, 8. air duct, 9. armature winding, 10. protector plate, 11. bracket, 12. fan, 13. field winding, 14. oil drain, 15. slip-ring, 16. armature lead bushing, 17. foot plate, 18. lifting trunnion, 19. hydrogen gas cooler, 20. bearing

These component may be appropriately combined and the generator may be replaced by an accelerator type DC generator. Known cooling techniques may be appropriately applied.

Fig. 32 shows a direct cooling method for a water-cooled rotor (extracted from Japanese Society of Electric Engineering: Electric Engineering Handbook).

1. coupling, 2. transition hole, 3. transition hole, 4. branch tube, 5. insulated connector tube, 6. spacer block, 7. water joint section, 8. water outlet groove

Although this method is not frequently used, it can be used as an effective cooling method.

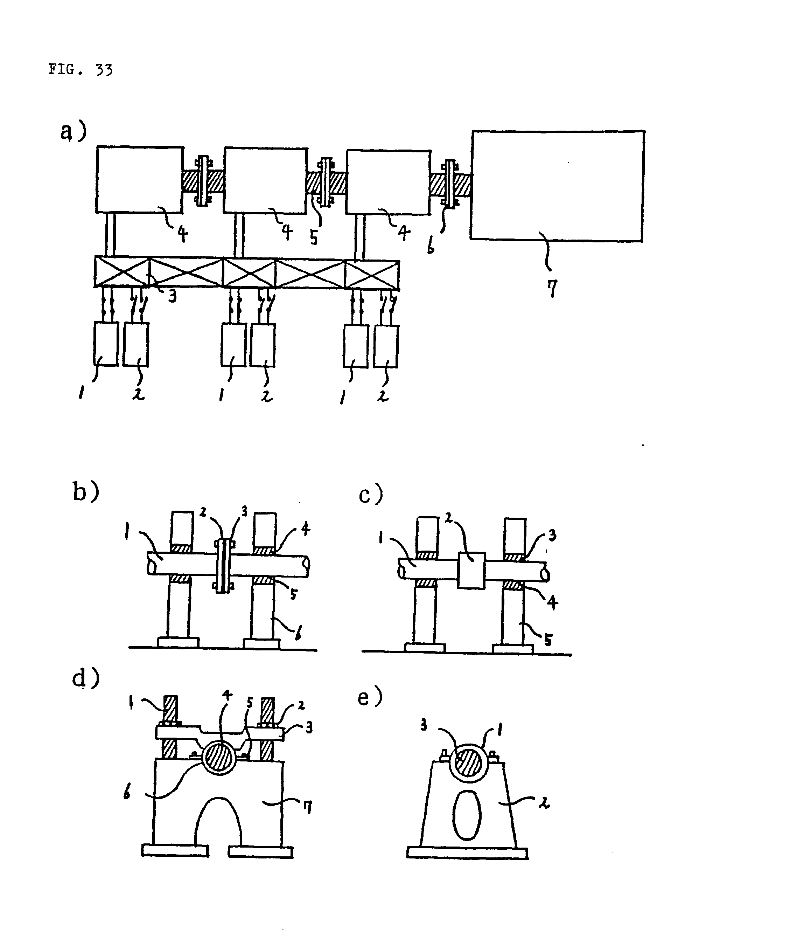

Fig. 33 shows the configuration of a basic generator to which an energy amplifying system is effectively applied.

a) a basic generator

1. energy amplifying apparatus (or a system configured for cyclic operation), 2. stand-by components (stand-by power source), 3. constant speed control principally using the inverter control technology (preferably centrally controlled by means of a switchboard), 4. electric motor controlled for constant speed (multi-stage), 5. rotary shaft (used with stand), 6. flange or other coupling (flange coupling, flexible shaft coupling, universal joint), 7. large capacity dynamo (such as turbine generator)

b) a schematic illustration of a stand to be used for prevention of swinging action of shaft couplings (part 1)

1. rotary shaft, 2. gland packing, 3. flange coupling, 4. antifriction bearing, 5. lubricant, 6. bearing stand

c) a schematic illustration of a stand to be used for prevention of swinging action of shaft couplings (part 2)

1. rotary shaft, 2. universal joint, 3. antifriction bearing, 4. lubricant, 5. bearing stand

d) side view of a bearing stand (part 1)

1. bolt, 2. nut, 3. auxiliary fixing table, 4. rotary shaft, 5. cap bolt, 6. split bearing, 7. stand

e) a side view of a bearing stand (part 2) 1. split bearing, 2. stand, 3. rotary shaft Electric motors may be connected in a multi-stage way so that the large capacity generator may be stably operated on a cyclic basis.

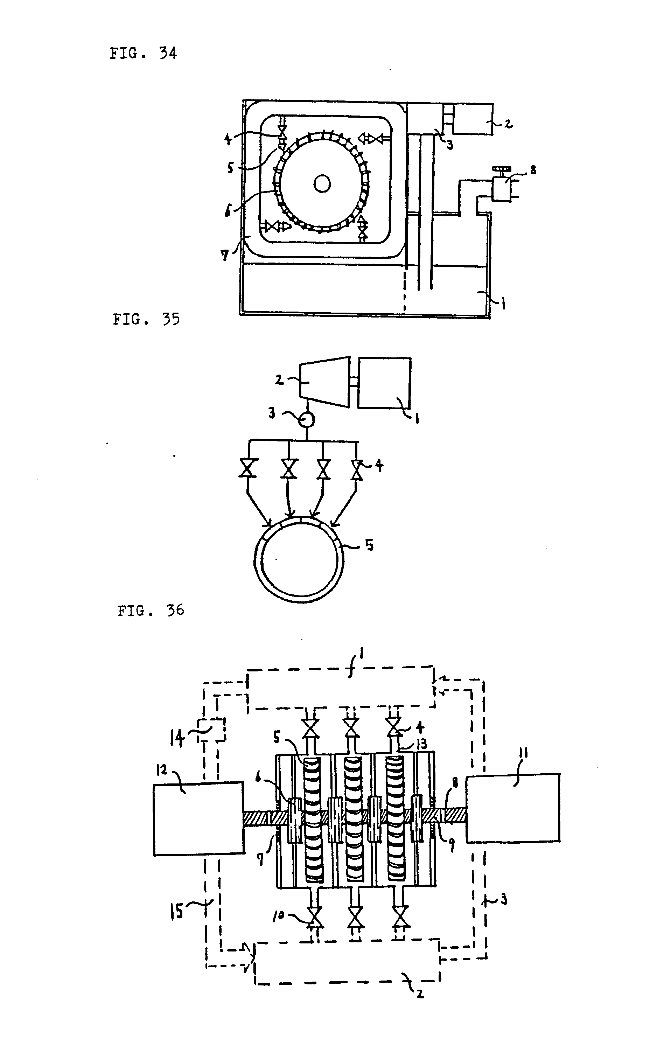

Fig. 34 shows an electric generator driving by water wheel runners combined with an energy amplifying system.

1. water tank, 2. various electric motors, 3. feed water pump, 4. water pressure regulating valve, 5. nozzle, 6. water wheel runner, 7. water pressure pipe (feed water pipe), 8. auxiliary feed water valve

Fig. 35 shows an electric generator driven by compressors combined with an energy amplifying system.

1. various electric motors, 2. compressor, 3. stop valve, 4. nozzle valve, 5. turbine (runner)

Fig. 36 shows an electric generator comprising multi-stage rotors (drive section)

1. single, appropriately configured and compound high pressure section, 2. single, appropriately configured and compound low pressure section, 3. appropriately designed cycle system, 4. speed governing control valve, 5. rotor (impeller with appropriately designed multi-state couplings), 6. labyrinth packing, 7. bearing, 8. various couplings, 9. rotary shaft, 10. regulating valve, 11. special generator such as accelerator type DC generator, 12. special generator such as accelerator type DC generator (arranged in parallel, can be omitted if appropriate), 13. nozzle, 14. bypass control valve, 15. bypass control system

Each of Figs. 34, 35 and 36 shows an indirect generating system combined with an energy amplifying system. They may be appropriately configured and the multiply connected drive sections (for connection see Fgis. 33 and 36) may have a multi-stage configuration so long as they operate on cyclic basis.

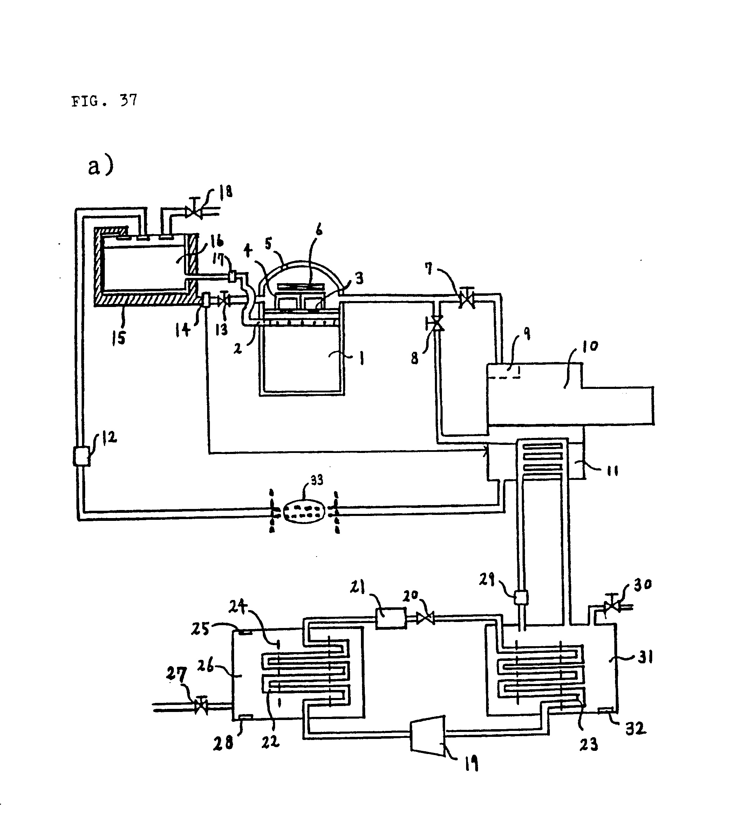

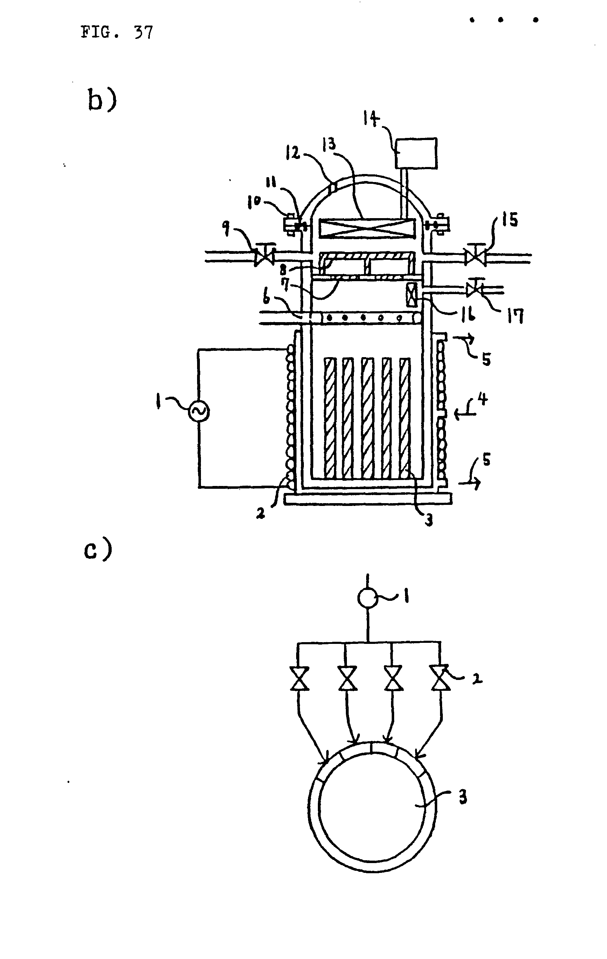

Fig. 37 shows a high speed turbine generating system using natural convection type induction reactors.

a) system configuration

1. induction reactor (see b) below), 2. feed water nozzle or feed water sparger, 3. wire-mesh type moisture separator,4. corrugated plate type moisture separator, 5. spray nozzle, 6. heater such as drier, 7. main steam stop valve, 8. turbine bypass control valve, 9. speed governor using throttle governing method, 10. turbine generator, 11. condenser, 12. condenser pump, 13. regenerative steam regulating valve, 14. drain, 15. steam pipe (appropriately laid), 16 regenerative feed water heater, 17. feed water pump, 18. auxiliary feed water valve, 19. compressor, 20. capillary tube (expansion valve), 21. heater such as drier, 22. condenser, 23. vaporizer, 24. spacer, 25. feed water port, 26. insulated hot water tank, 27. switch valve, 28. drain port, 29. condenser cooling water circulation pump, 30. auxiliary feed water valve, 31. cooling water tank, 32. drain port, 33. feed water system (appropriately comprising feed water heaters and/or feed water pumps) The refrigerating cycle of a system as shown may be of a multi-layer structure.

b) a cross sectional view of a water cooling type induction reactor steam generator using natural convection 1. AC power source, 2. induction coil, 3. ferromagnetic structure (allowing convection to occur and comprising, if necessary, fixing support guides), 4. cooling water inlet port, 5. cooling water outlet port, 6. feed water nozzle or feed water sparger, 7. wire-mesh type moisture separator,8. corrugated plate type moisture separator, 9. main steam regulating valve (stop valve), 10. bolt fastening, 11. O-ring (seal ring), 12. spray nozzle, 13. drier (or protected and hermetically sealed indirect resistor heater securely fitted by means of spacers), 14. power source and control for heater such as drier, 15. main steam regulating valve (stop valve), 16. refractory glass (to be used for water level meter), 17. water level regulating nozzle and stop nozzle within the reactor

c) an illustration of the throttle governing method (governor)

1. stop valve, 2. nozzle valve (regulating valve), 3. turbine This enables a configuration appropriately combining a natural convection type and a regenerative type.

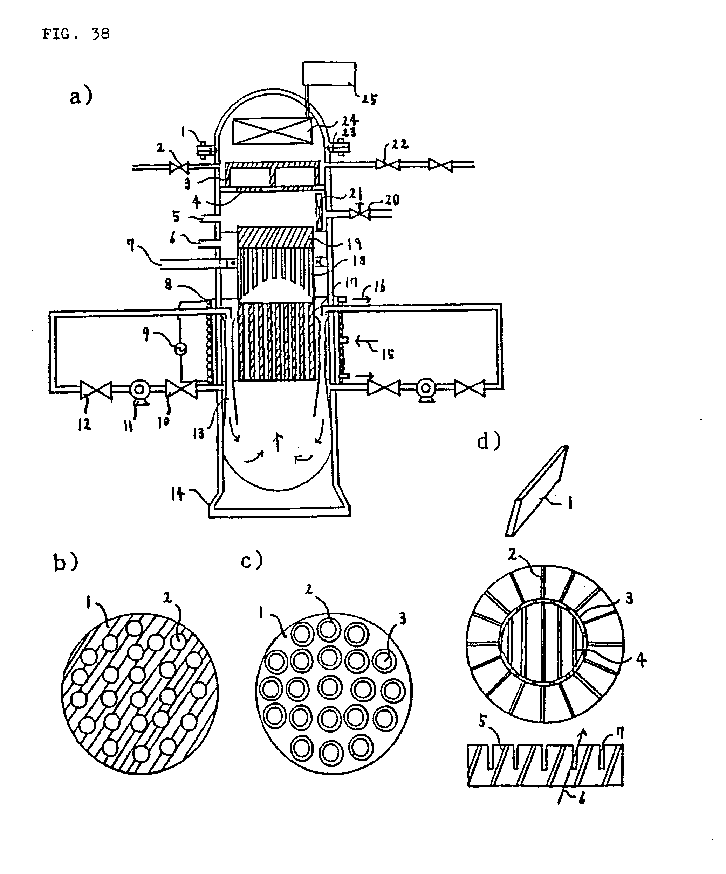

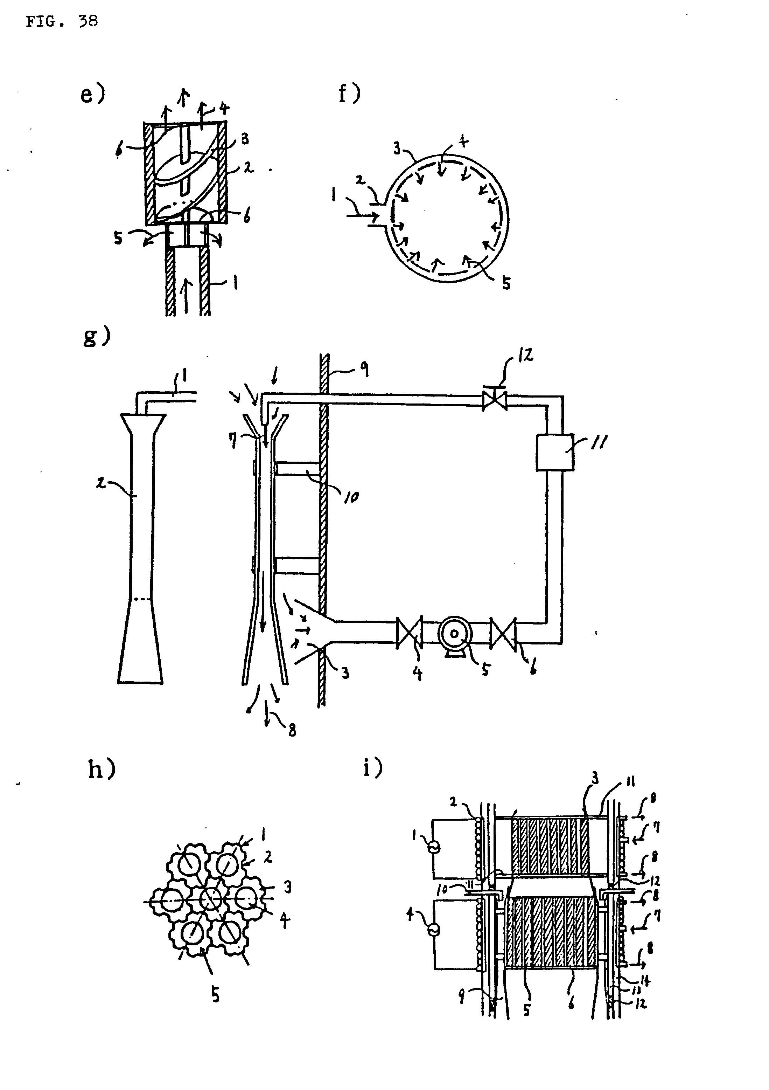

Fig. 38 shows a schematic illustration of a boiling water reactor type induction furnace steam generator based using forced convection.

a) a sectional view of a boiling water reactor type induction furnace steam generator (using forced convection) 1. bolt fastening, 2. main steam regulating valve (stop valve), 3. corrugated plate type moisture separator, 4. wire-mesh type moisture separator, 5. spray nozzle, 6. feed water nozzle for feed water heating tank (if appropriate), 7. feed water nozzle or feed water sparger, 8. water cooling type induction coil, 9. AC power source control, 10. recirculating current stop valve, 11. recirculation pump, 12. recirculation regulating valve, 13. jet pump, 14. support skirt, 15, induction reactor cooling water inlet nozzle, 16. induction reactor cooling water outlet nozzle, 17. induction reactor core (see b) below), 18. induction reactor core head upper piping (stainless steel pipe, see c) below), 19. vapor/water separator, 20. water level control valve within the reactor (water being fed to condenser for reuse), 21. refractor glass water level meter (if appropriate), 22. main steam regulating valve, 23. O-ring (seal ring), 24. drier (electric heater), 25. electric heater control and power source

b) induction reactor core (using forced convection)

1. cross section of the induction reactor core (may be grid-shaped support column), 2. cooling water path (appropriately arranged)

c) cross section of the induction reactor core head upper piping

1. induction reactor core, 2. stainless steel piping (appropriately arranged), 3. overheat cooling water path

d) vapor/water separator (part 1)

1. stationary guide vane, 2. radially arranged stationary guide vanes, 3. cylindrical support guide, 4. central stationary guide vane (slantly arranged), 5. stationary guide vane fixing guide, 6. steam path, 7. central separator drain hole

e) vapor/water separator (part 2)

1. induction reactor core head upper piping, 2. vapor/water separator, 3. spiral stationary guide vane, 4. separated steam, 5. separated and overheated water, 6. fixed guide

f) a schematic illustration of a feed water nozzle or a feed water sparger

1. feed water inlet port, 2. feed water nozzle, 3. feed water ring, 4. feed water port, 5. distributed feed water

g) a schematic illustration of a recirculation system

1. drive flow piping, 2. jet pump, 3. recirculation system feed water nozzle, 4. recirculated flow regulating valve (stop valve), 5. recirculation pump, 6. recirculated flow regulating valve, 7. pressurized drive flow, 8. feed water using forced convection, 9. outer shell of the induction reactor, 10. jet pump support guide, 11. branch pipe (more than one pipes being appropriately arranged for jet pumps, etc.),

12. recirculated flow regulating valve

h) a schematic illustration showing a hexagonal ferromagnetic structure

1. key, 2. key slot, 3. ferromagnetic structure, 4. cooling water path, 5. more than one structures being appropriately arranged

i) a schematic illustration of a structure having a plurality of heating sections

1. AC power source, 2. back water cooling type induction coil, 3. hexagonal structure, 4. AC power source, 5. hexagonal structure, 6. fixed support guide, 7. recirculated cooling water inlet port, 8. recirculated cooling water outlet port, 9. jet pumps, 10. recirculation drive flow, 11. fixed support guide, 12. diamagnetic body if appropriate, 13. stainless steel lining if appropriate, 14. induction reactor wall Reactor core support plates (support guides), jet pumps and various nozzles may be appropriately installed. The types and numbers of these components may be appropriately determined.

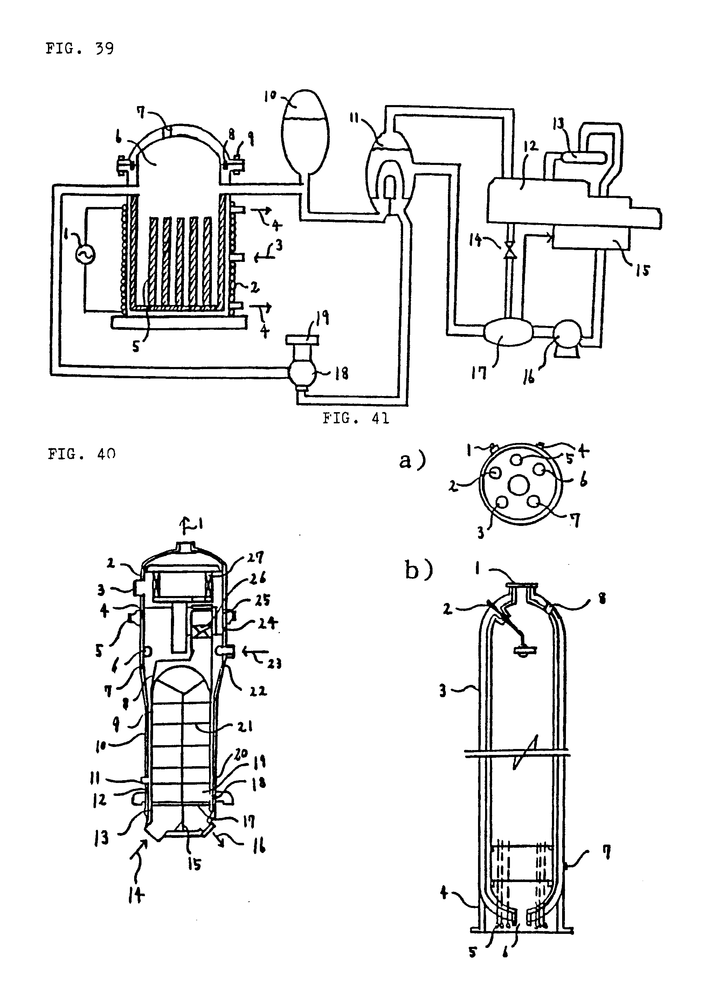

Fig. 39 shows a schematic illustration of a high speed turbine generating system using pressurized water reactor type induction furnace using cooling water

1. AC power source control, 2. water cooling type induction coil, 3. cooling water inlet port, 4. cooling water outlet port, 5. ferromagnetic structure (allowing convection to occur), 6. pressurized water reactor type induction furnace container, 7. air bleeder outlet port (bolt fastening), 8. seal ring (O-ring), 9. bolt fastening, 10. compressor, 11. steam generator, 12. turbine generator, 13. moisture separator, 14. turbine bleeder control valve, 15. condenser, 16. condenser pump (feed water pump), 17. feed water heater, 18. primary cooling medium pump, 19. flywheel The turbine generator may be appropriately configured and a number of facilities for primary cooling medium may be installed.

Fig. 40 shows a schematic illustration of a steam generator (extracted from Japanese Society of Electric Engineering: Electric Engineering Handbook).

1. main steam outlet nozzle, 2. upper shell, 3. secondary side manhole, 4. water level control gauge nozzle, 5. trunnion, 6. feed water ring, 7. water level control gauge nozzle, 8. bottom blow-down nozzle, 9. recuperative heating pipe, 10. lower shell, 11. secondary side handhole, 12. bottom blow-down nozzle, 13. stainless steel lining, 14. primary cooling medium inlet nozzle, 15. channel, 16. primary cooling medium outlet nozzle, 17. inconel lining, 18. shell plate drain nozzle, 19. tube plate, 20. water level meter nozzle, 21. pipe support, 22. water level meter nozzle, 23. feed water inlet nozzle, 24. upper blow down nozzle, 25. water level meter nozzle, 26. separator, 27. drier

Fig. 41 shows a schematic illustration of a compressor (extracted from Japanese Society of Electric Engineering: Electric Engineering Handbook).

a) an elevation view of a compressor

1. water level measuring nozzle, 2. safety valve nozzle, 3. spray nozzle, 4. sampling nozzle, 5. relief valve nozzle, 6. safety valve nozzle, 7. temperature measuring nozzle

b) a front view of a compressor

1. manhole, 2. spray nozzle, 3. compressor main body, 4. support skirt, 5. liquid immersion type electric heater nozzle, 6. surge nozzle, 7. water level measuring, temperature measuring or sampling nozzle, 8. safety valve or relief valve

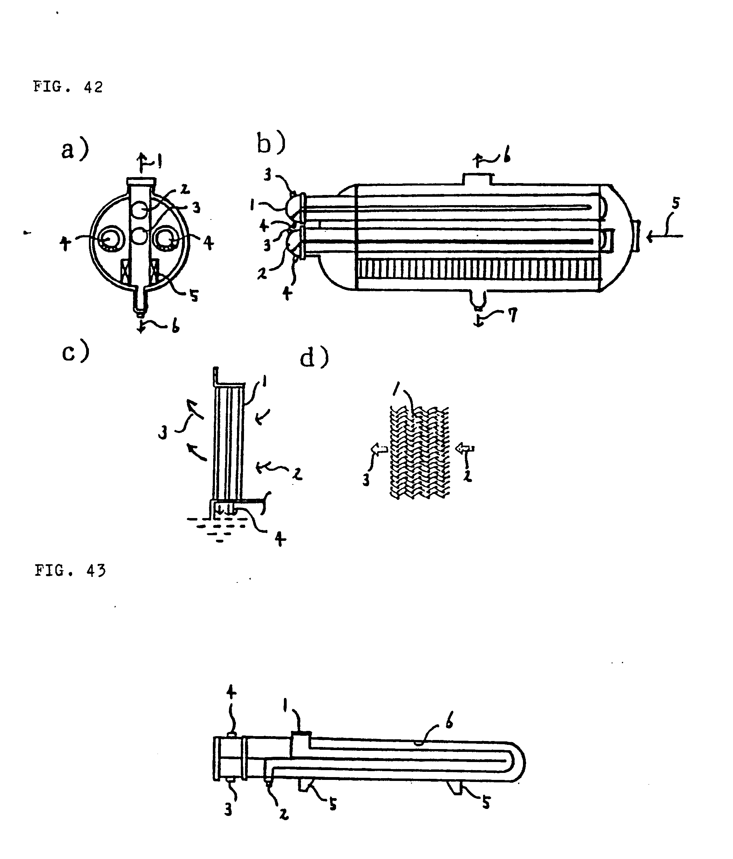

Fig. 42 shows a schematic illustration of a moisture separator heater (extracted from Japanese Society of Electric Engineering: Electric Engineering Handbook).

a) a sectional view of a moisture separator heater

1. reheated steam outlet port, 2. second heater, 3. first heater, 4. exhaust steam (ejected from a large number of slits), 5. corrugated plate type moisture separator, 6. drain outlet port

b) a front view of a moisture separator heater 1. second heater, 2. first heater, 3. heated steam inlet port, 4. exhaust steam outlet port, 5. exhaust steam inlet port from high pressure turbine (highly wet steam), 6. reheated steam outlet port (fed to low pressure turbine for reuse), 7. drain outlet port

c) a schematic illustration of a moisture separator

1. corrugated plate type moisture separator, 2. wet steam, 3. steam separated from moisture, 4. drain

d) an enlarged view of a moisture separator 1. structure of a corrugated plate, 2. wet steam, 3. steam separated from moisture

Fig. 43 shows the structure of a typical feed water heater.

1. steam inlet port, 2. drain steam outlet port, 3. feed water inlet port, 4. feed water outlet port, 5. support table, 6. stainless steel lining Normally a plurality of feed water heaters are used and steam heaters may be appropriately added.

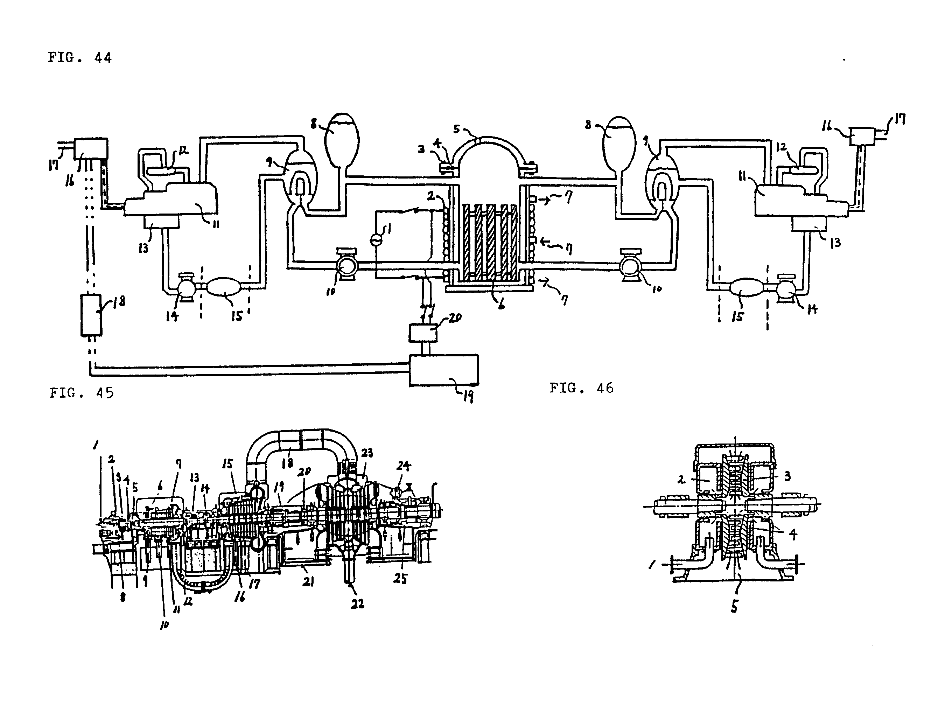

Fig. 44 shows a schematic illustration of a high speed turbine system using a pressurized water reactor type induction furnace using cooling water (part 2).

1. AC power source main control, 2. induction coil, 3. bolt fastening, 4. seal ring (O-ring), 5. air bleeder outlet port (bolt fastening), 6. ferromagnetic structure allowing convection to take place, 7. circulating cooling water, 8. compressors (a set of if appropriate), 9. steam generator, 10. primary cooling medium pump, 11. turbine generator, 12. moisture separator heater, 13. condenser (using refrigerating cycles if appropriate), 14. feed water pump, 15 feed water heater (feed water system being used in a complex manner), 16. transformer, 17. power transmission, 18. energy amplifying system, 19. external power control system (for instantaneous changeover), 20. changeover feed system

Fig. 45 shows a schematic illustration of a typical tandem turbine (extracted from Japanese Society of Electric Engineering: Electric Engineering Pocketbook).

1. oil pump, 2. emergency governor, 3. thrust bearing, 4. main bearing, 5. water sealing, 6. labyrinth, 7. high pressure wheel chamber, 8. worm wheel for governor, 9. steam inlet port, 10. steam inlet port for overload, 11. first stage air bleeder port, 12, high pressure/medium pressure leveling pipe, 13. shaft coupling, 14, thrust bearing. 15. medium pressure wheel chamber, 16. second stage air bleeder port, 17. third stage air bleeder port, 18. medium pressure/low pressure leveling pipe, 19. shaft coupling, 20. thrust bearing, 21. exhaust port, 22. fourth state air bleeder port, 23. low pressure wheel chamber, 24. shaft driving electric motor, 25. shaft coupling (for dynamo)

Fig. 46 shows a schematic illustration of a Jungstrom turbine (extracted from Japanese Society of Electric Engineering: Electric Engineering Pocketbook).

1. steam pipe, 2. steam chamber, 3. vane, 4. anti-leakage device, 5. exhaust chamber

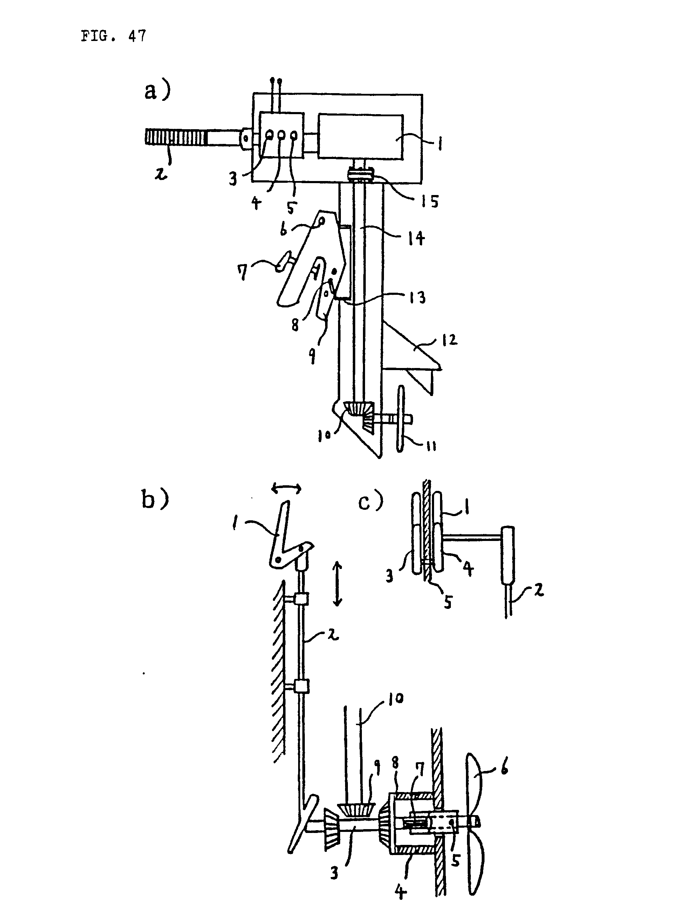

Fig. 47 shows the configuration of an outboard motorboat using an electric motor (example of utilization 1).

a) a schematic view of an outboard motorboat
1. reversible and variable speed electric motor, 2. rotary switch, 3. start switch, 4. stop switch, 5. reverse switch, 6. thrust pin, 7. clamp screw, 8. tilt pin, 9. transfer arm bracket, 10. reduction gear, 11. propeller screw, 12, cavitation blade, 13, rotary thrust rudder mechanism, 14. propeller shaft, 15. coupling

b) mechanical forward/reverse rotation switch
1. clutch handle, 2. shift rod, 3. drive shaft, 4. spring, 5. shabin, 6. propeller screw, 7. power transmission mechanism such as spline, 8. bearing such as thrust ball bearing, 9. reduction gear, 10. propeller shaft

c) a side view of a clutch handle
1. clutch handle, 2. shift rod, 3. clutch handle outer mechanism, 4. clutch handle inner mechanism, 5. bracket (outer wall) Here, an energy amplifying system is incorporated in an outboard motorboat. Various electric motor and controls may be appropriately used.

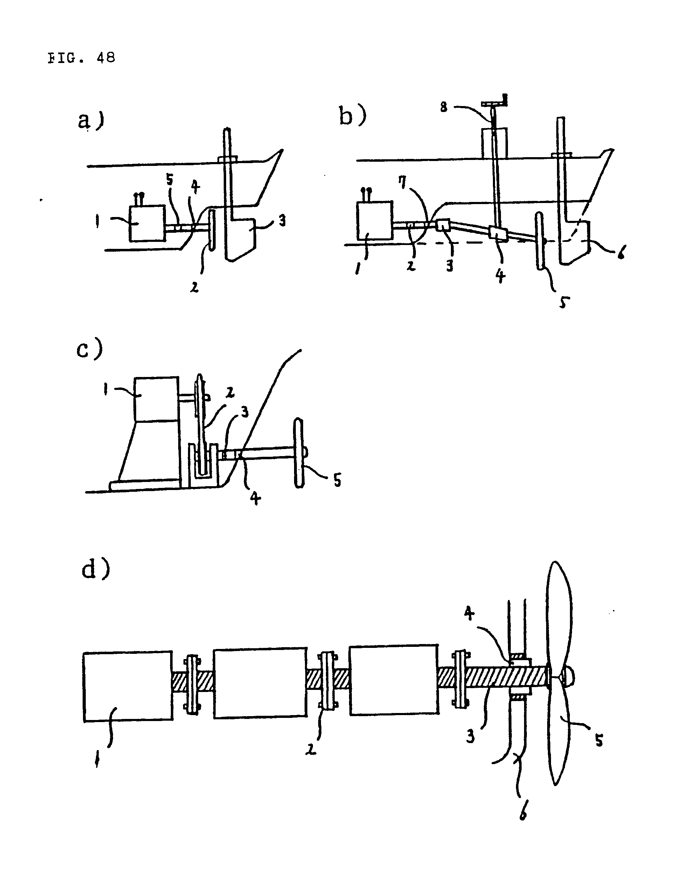

Fig. 48 shows a schematic illustration of a boat propelling apparatus using a keep system (example of utilization 2).

a) a typical keel system
1. reversible and variable speed electric motor, 2. propeller screw, 3. rudder mechanism, 4. bushing bearing, 5. flange coupling

b) upper and lower apparatus for a small boat
1. reversible and variable speed electric motor, 2. flange coupling, 3. universal joint, 4. thrust bearing, 5. propeller screw, 6. rudder mechanism, 7. bushing bearing, 8. manual type upper and lower apparatus

c) an application of the keel system
1. reversible and variable speed electric motor, 2. roller chain, V-belt transmission mechanism, 3. coupling, 4. bushing bearing, 5. propeller screw

d) a system configuration connected to an electric motor
1. reversible and variable speed electric motor, 2. various couplings, 3. main propeller shaft, 4. bushing bearing, 5. propeller screw, 6. boat shell A fixing table, an anti-pitch stand and other components as illustrated in Fig. 33 may be appropriately installed and centrally controlled.

An energy amplifying system may be used for power source in combination with the propelling system.

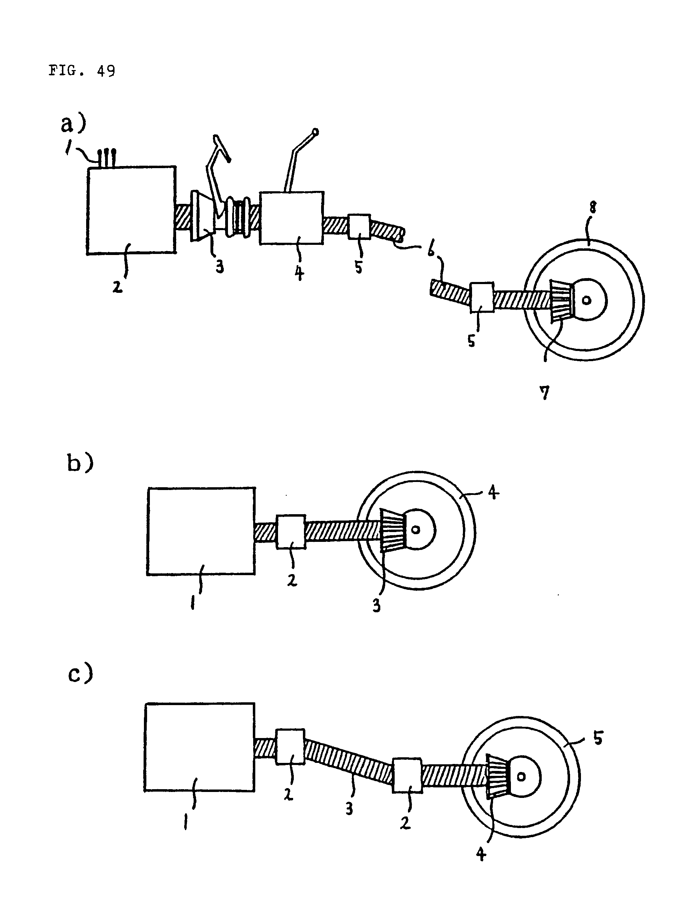

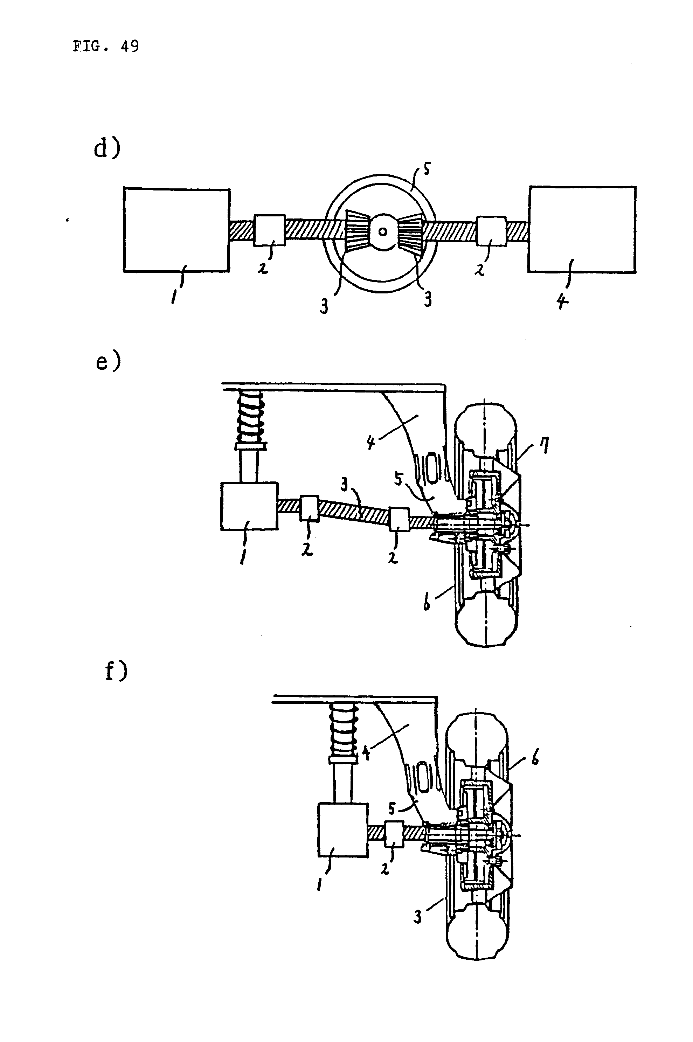

Fig. 49 shows a typical configuration of an electric motor comprising an energy amplifying system and power transmission system (example of utilization 3).

a) 1. power input, 2. variable speed electric motor, 3. clutch and power transmission system, 4. transmission (reduction gear), 5. universal joint, 6. propeller shaft, 7. differential gear, 8. drive wheel

b) 1. reversible and variable speed electric motor, 2. universal joint, 3. differential gear, 4. drive wheel

c) 1. reversible and variable speed electric motor, 2. universal joint, 3. propeller shaft, 4. differential gear, 5. drive wheel

d) 1. reversible and variable speed electric motor, 2. universal joint, 3. differential gear, 4. variable speed electric motor for high speed operation, 5. drive wheel

e) 1. reversible and variable speed electric motor, 2. universal joint, 3. axle shaft, 4. trailing arm, 5. spring, 6. rear wheel, 7. drive wheel

f) 1. reversible and variable speed electric motor, 2. universal joint, 3. rear wheel, 4. trailing arm, 5. spring, 6. drive wheel Typical power transmission mechanisms are schematically shown above. Combination of a braking apparatus, a maneuvering apparatus, a power distribution apparatus, following wheels may be appropriately devised.

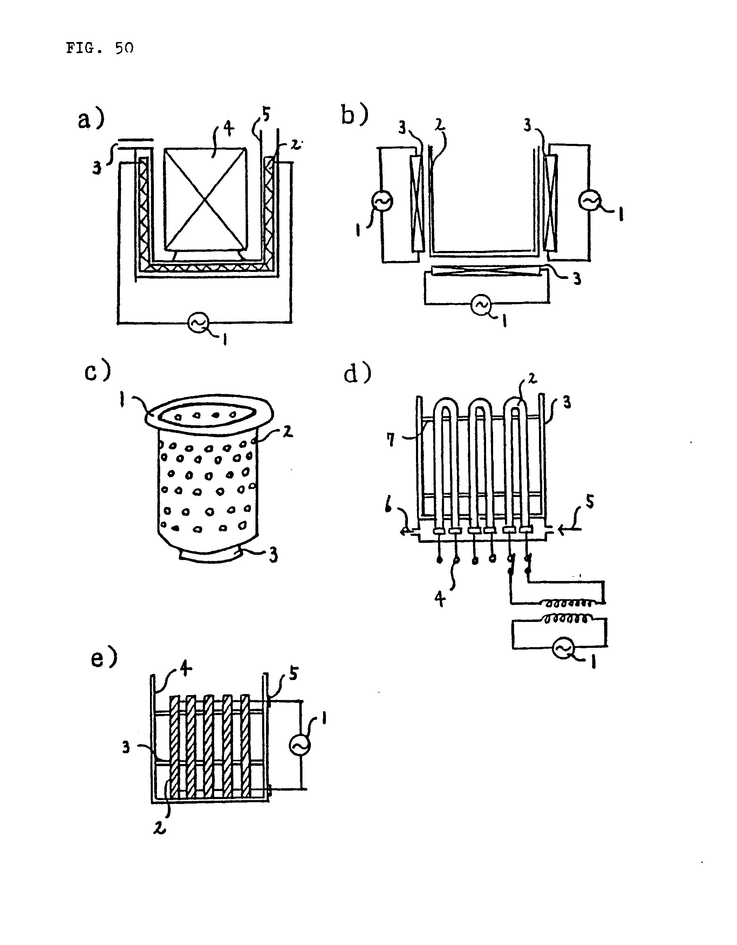

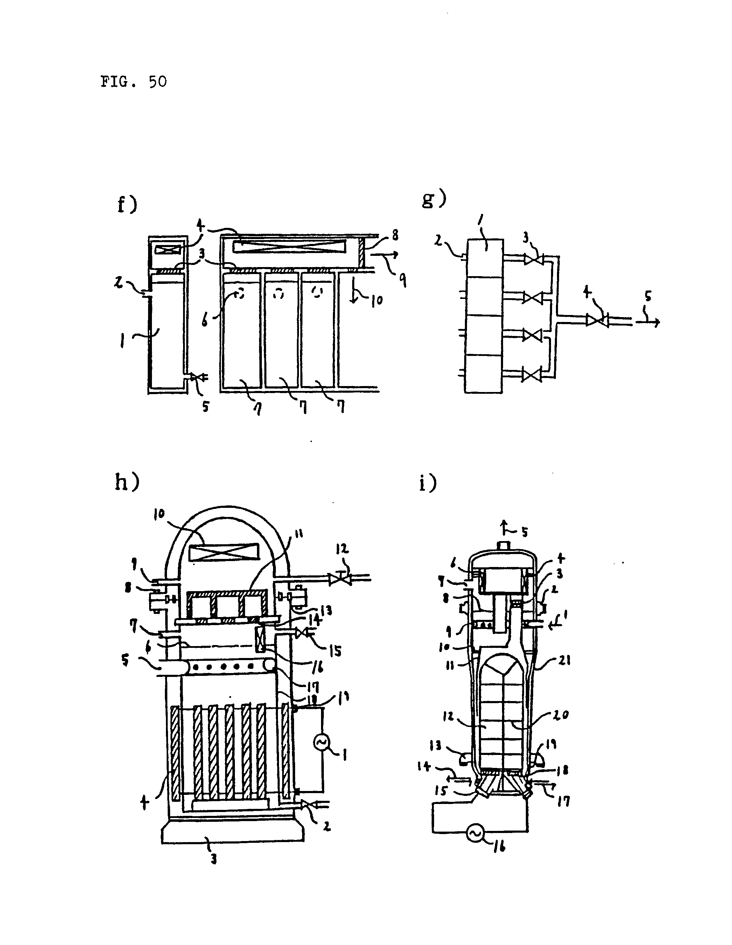

Fig. 50 shows a schematic illustration of a boiling water reactor type steam generator using the indirect resistor heating method and the natural convection method.

a) an illustration of an external heat type generator

1. AC power source, 2. indirect resistor heater (refractory bricks are used), 3. feed water nozzle, 4. stationary agitator, 5. stainless steel lining

b) an external heat type generator using a three-phase power source

1. AC power source, 2. steam generator, 3. indirect resistor heater

c) a schematic illustration of a stationary agitator

1. stationary agitator, 2. convection hole, 3. pedestal

d) a schematic illustration of an internal heat type generator (part 1)

1. AC power source, 2. indirect resistor heater encased in a U-pipe, 3. steam generator vessel, 4. possible individual control system, 5. heater terminal electrode cooling water inlet port, 6. cooling water outlet port, 7. fixed guide (a plurality of heaters being used)

e) internal heat type steam generator (part 2) 1. AC power source, 2. panel type indirect resistor heater, 3. fixed guide, 4. steam generator vessel (lined with stainless steel), 5. reactor wall terminal electrode

f) a steam generator with a serial connection arrangement (application)

1. steam generator vessel using indirect resistor heaters, 2. feed water nozzle, 3. wiremesh type moisture separator, 4. drier, electric heater, 5. drain valve, 6. feed water nozzle, 7. unit tank, 8. corrugated plate type moisture separator, 9. main steam, 10. drain

g) a steam generator with a parallel connection arrangement (application)

1. steam generator vessel using indirect resistor heaters, 2. feed water nozzle, 3. main steam regulating valve ( stop valve), 4. main steam stop valve, 5. high pressure steam flow

h) a cross section of a typical boiling water reactor type indirect resistor heater steam generator using natural convection realized by combining both the internal heat method and the external heat method (part 1)

1. AC power source, 2. drain valve, 3. support skirt, 4. protected and hermetically sealed indirect resistor heater, 5. feed water nozzle, 6. water level in the reactor, 7. spray nozzle, 8. bolt fastening, 9. main steam piping (appropriately used for regenerative type), 10. drier, electric heater, 11. corrugated plate type moisture separator, 12. main steam stop valve, 13. O-ring seal, 14. wire-mesh type moisture separator, 15. water level regulating nozzle, stop valve, 16. water level meter made of refractory glass, 17. feed water sparger, feed water ring, 18. stainless steel lining, 19. reactor wall terminal electrodes (arranged on the outer periphery of the wall and appropriately fed with electricity)

i) a typical boiling water reactor type indirect resistor heater steam generator using natural convection (part 2)

1. feed water sparger, feed water nozzle inlet port, 2. lifting trunnion, 3. wire-mesh type moisture separator, 4. fixed guide, 5. main steam outlet nozzle, 6. drier, electric heater, 7. high water level drain nozzle (using stop valve), 8. water level within the reactor, 9. feed water sparger, feed water ring, 10. fixed guide, 11. inner shell, 12. recuperative heating pipe realized by piling a number of protected and hermetically sealed indirect resistor heaters, 13. support guide (rigidly fitted by means of bolts), 14. circulating cooling water (cooling water for recuperative heating pipe terminal electrodes), 15. second terminal electrode, 16. AC power source, 17. cooling water ring nozzle, 18. first terminal electrode, 19. drain valve (if appropriate), 20. recuperative heating pipe support spacer, 21. steam generator main body (lined with stainless steel) Since recuperative heating pipe terminal electrodes are densely arranged, cooling water may be needed and have to be appropriately circulated.

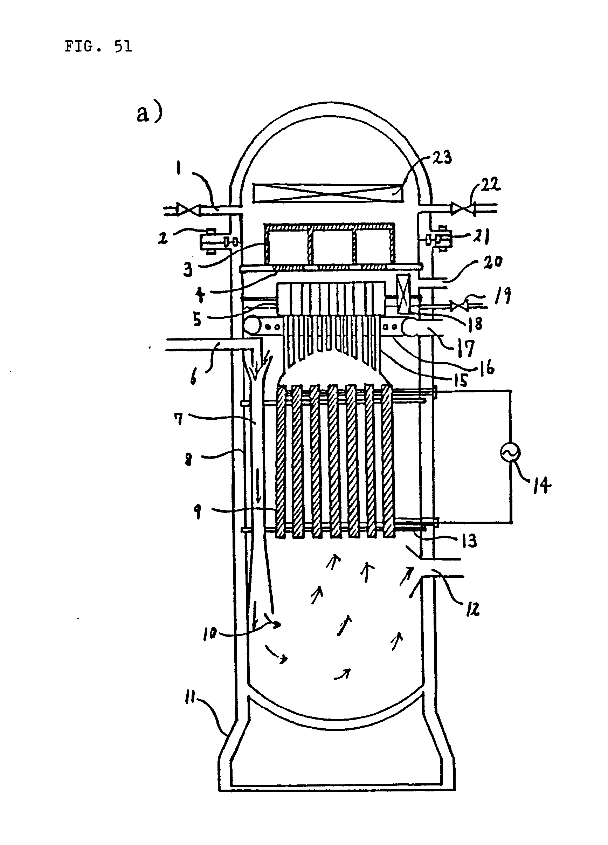

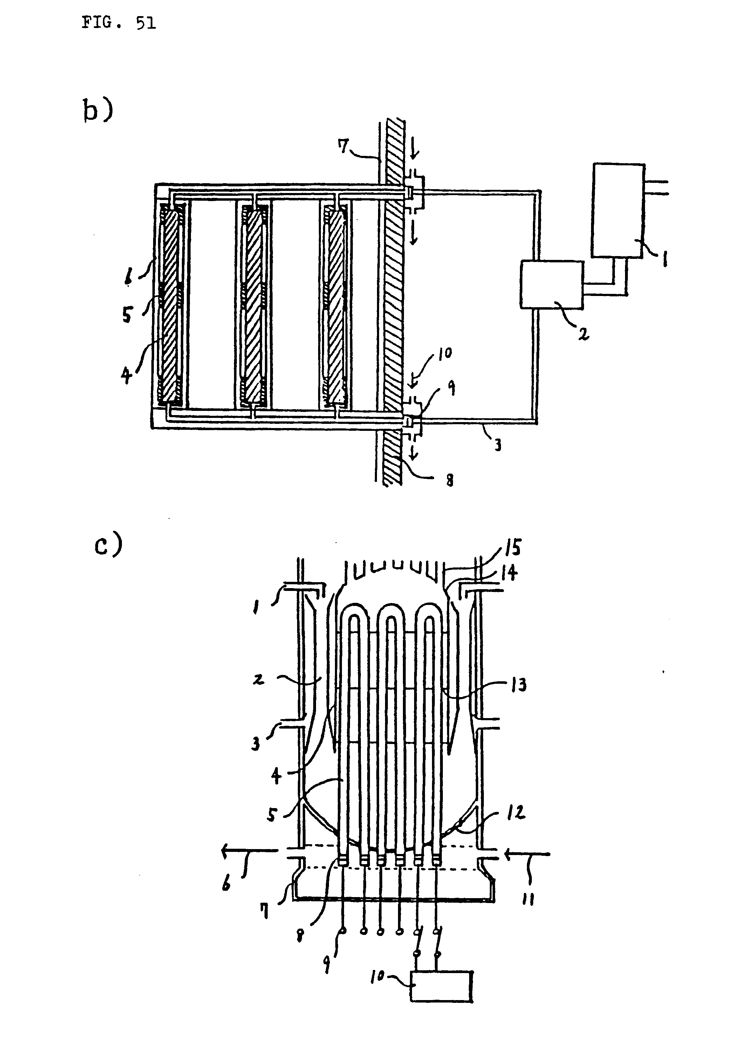

Fig. 51 shows a schematic illustration of a boiling water reactor type steam generator using the indirect resistor heating method and the forced convection method.

a) cross section of a steam generator using forced convection

1. main steam flow piping nozzle, 2. bolt fastening, 3. corrugated plate type moisture separator, 4. wire-mesh type moisture separator, 5. vapor/water separator, 6. recirculation drive flow nozzle, 7. jet pump, 8. stainless steel lining, 9. protected and hermetically sealed indirect resistor heater, 10. drive flow by means of forced convection 11. support skirt, 12. recirculating flow feed water nozzle, 13. reactor core support guide, 14. AC power source control, 15. reactor core head upper piping, 16. feed water sparger, feed water ring, 17. feed water nozzle, 18. water level meter made of refractory glass, 19. water level control drain valve, 20. spray nozzle, 21. seal such as O-ring, 22. main steam regulating valve, 23. drier, electric heater

b) a typical configuration of a indirect resistor heater

1. transformer for electric furnace (tap switching type), 2. switching control, 3. conductor such as flexible cable, 4. indirect resistor heater, 5. refractory insulator such as refractory bricks, 6. stainless steel coating of heat-resistive special steel pipes (may be replaced by enameled recuperative heating pipes), 7. stainless steel lining, 8. reactor wall, 9. reactor wall terminal electrode, 10 cooling water if appropriate

A number of reactor wall terminal electrodes may be arrangedon the periphery of the reactor and single-phase and/or three-phase currents may be appropriately used to eliminate any imbalance.

c) a schematic illustration of a steam generator provided with indirect resistor heater terminal electrodes arranged at the bottom 1. drive flow nozzle, 2. jet pump, 3. recirculation flow inlet nozzle, 4. inner shell (of stainless steel), 5. indirect resistor heaters contained in a protected and hermetically sealed U-pipe, 6. terminal electrode cooling water outlet port, 7. support skirt, 8. heater first terminal electrode, 9. second terminal electrode, 10. feeder control system, 11. terminal electrode cooling water inlet port, 12. drain valve, 13. heater fixing guide, 14. reactor core head, 15. reactor core head upper piping A well balanced use of three-phase AC can be realized by arranging a plurality of terminal electrodes.

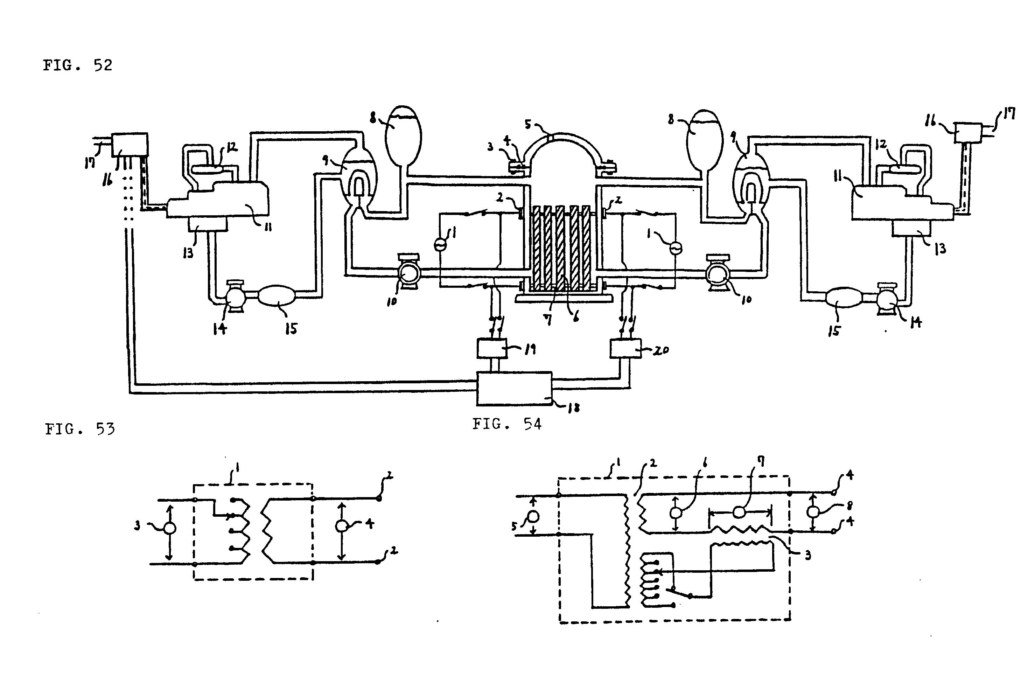

Fig. 52 shows a schematic illustration of a pressurized water reactor type high speed turbine generating system using the indirect resistor heating method.

1. AC power source main control, 2. reactor wall terminal electrodes (arranged on the outer periphery of the wall and cooled by circulating water), 3. bolt fastening, 4. O-ring, 5. air bleeding outlet port (fastened by bolts), 6. protected and hermetically sealed indirect resistor heater, 7. fixing guide, 8. compressors (only a set of compressors if appropriate), 9. steam generator, 10. primary cooling medium pump, 11. turbine generator, 12, moisture separator, 13. condenser, 14. feed water pump, 15. feed water heater, 16. transformer, 17. power transmission, 18. external power control (so arranged as to be capable of being instantaneously switched), 19.

first switching/feeding apparatus, 20. second switching/feeding apparatus

A number of heater terminal electrodes may be arranged at the bottom. The supplied power may be either three-phase or single-phase.

Considering the level of power consumption of a general type electric furnace (induction furnace, resistor furnace), a power generating facility that can accommodate the power consumption may be installed without difficulty.

Fig. 53 shows a schematic illustration of a voltage regulating type single-phase direct transformer.

1. transformer for furnace, 2. connected to terminal electrodes, 3. voltage $E_1$, 4. voltage $E_2$

Fig. 54 shows a schematic illustration of a voltage regulating type single-phase indirect transformer

1. transformer for furnace, 2. main transformer, 3. series transformer, 4. connected to terminal electrode, 5. voltage$E_1$, 6. voltage $E_2$, 7. $E_3$, 8. voltage $E_2 + E_3$

The tap switching technique may be used independently for three-phase arrangement.

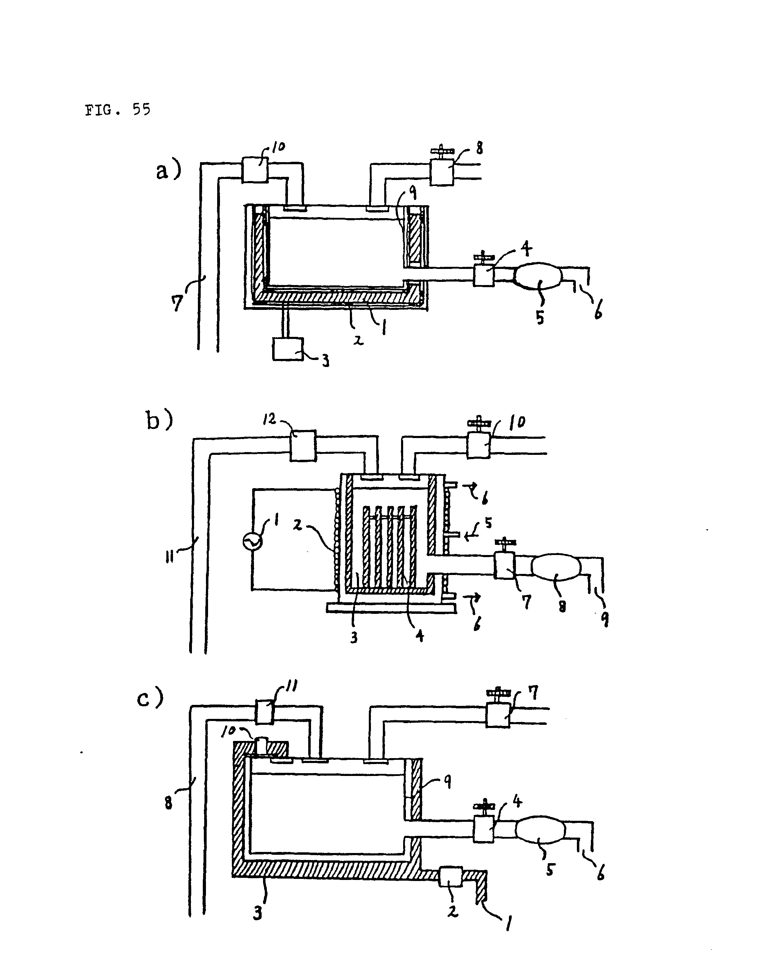

Fig. 55 shows a schematic illustration of a feed water heater tank.

a) feed water heater tank using the indirect resistor heating technique

1. indirect resistor heater (as appropriate), 2. support guide using refractory bricks, 3. input power source control, 4. feed water regulating valve (arranged upstream or downstream to the feed water pump), 5. feed water pump, 6. feed water pipe, 7. circulating feed water pipe directly connected to condenser, 8. auxiliary feed water valve, 9. stainless steel lining, 10. regulating valve

b) feed water heater tank using the induction heating technique

1. AC power source control, 2. cooling water type induction coil, 3. induction reactor (lined with stainless steel), 4. ferromagnetic structure, 5. cooling water inlet port, 6. cooling water outlet port, 7. feed water valve ( if appropriate), 8. feed water pump, 9. feed water pipe, 10, auxiliary feed water valve, 11. circulating feed water pipe directly connected to condenser, 12. regulating valve

c) feed water heater tank using the regenerative technique

1. regenerating piping utilizing steam generator (high pressure steam flow), 2. drain facility (reusable for feed water system), 3. heating using steam pipes (if appropriate), 4. feed water valve (if appropriate), 5. feed water pump, 6. feed water pipe, 7. auxiliary feed water valve, 8. circulating feed water pipe connected to condenser, 9. stainless steel lining, 10. regulating valve, 11. regulating valve The feed water heating tank may be provided with various valves and combined with an energy amplifying system (depending on applications).

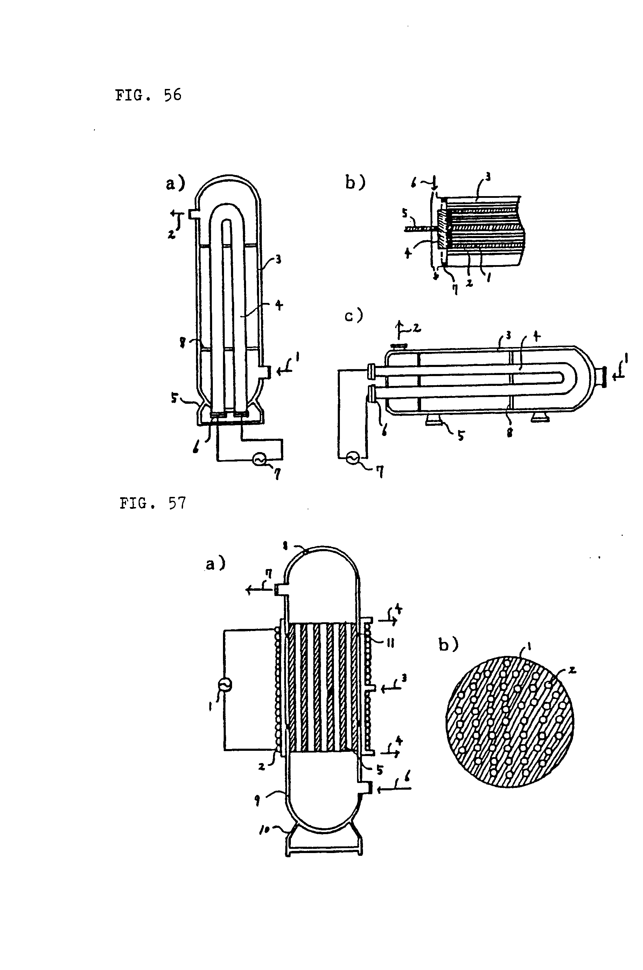

Fig. 56 shows a schematic illustration of a feed water heater using the indirect resistor heating method.

a) a schematic illustration of a vertical type feed water heater

1. feed water nozzle (feed water inlet port), 2. drain nozzle (feed water outlet port), 3. inner shell lined with stainless steel, 4. heater (first heater formed by piling a number of protected and hermetically sealed indirect resistor heaters, the aggregate being lined with stainless steel), 5. support skirt, 6. heater terminal electrode (insulated and used with circulating cooling water), 7. switches for AC power source, 8. support guide

b) a typical configuration of a heater terminal connector

1. indirect resistor heater, 2. heat-resistive insulator such as refractory bricks, 3. coating of a heat-resistive conductive metal such as stainless steel, 4. indirect resistor heater terminal connector electrode (to be insulated if cooled by circulating cooling water), 5. flexible cable and other conductor, 6. cooling water, 7. coupling such as screw

c) a schematic illustration of a horizontal type feed water heater

1. feed water inlet nozzle, 2. feed water outlet nozzle, 3. inner shell lined with stainless steel, 4. heater, 5. support pedestal (support table), 6. indirect resistor heater terminal connector electrode, 7. switches for AC power source, 8. support guide Within the configuration of the above described feed water heater, a plurality of sets of electric heaters may be appropriately arranged relative to the shell main body of the feed water heater.

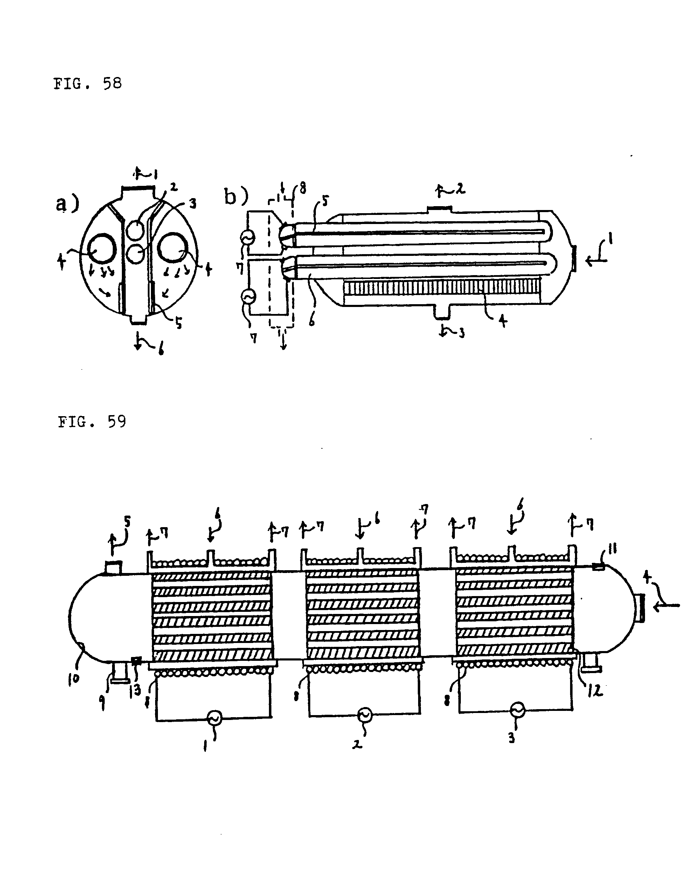

Fig. 57 shows a schematic illustration of a induction heating type feed water heater.

a) cross section of a feed water heater 1. AC power source control, 2. water cooling type induction coil, 3. cooling water inlet port, 4. cooling water outlet port, 5. ferromagnetic structure, 6. feed water inlet nozzle, 7. feed water outlet nozzle, 8. air bleeder outlet port (fastened by bolts), 9. lower shell (inner wall being appropriately lined with stainless steel), 10. support skirt, 11. support guide

b) an elevational sectional view of a ferromagnetic body

1. ferromagnetic induction heater, 2. feed water path (appropriately arranged) Induction heating type feed water heaters as illustrated above may be configured either as a vertical type or as a horizontal type. Alternatively, a hexagonal ferromagnetic column as illustrated in Fig. 38h) may be used.

Fig. 58 shows a typical configuration of a moisture separator heater using the indirect resistor heating technique.

a) a sectional side view

1. heated steam flow (reheated steam), 2. second heater, 3. first heater, 4. drain steam pipe (ejectable through a number of slits), 5. corrugated plate type moisture separator, 6. drain

b) a sectional front view

1. wet steam flow, 2. heated (reheated) steam flow, 3. drain, 4. corrugated plate type moisture separator, 5. second heater based on indirect resistor heating (the structure of the heater being similar to that of a feed water heater), 6. first heater, 7. AC power source control, 8. cooling water whenever appropriate

Fig. 59 shows a schematic illustration of a feed water heater utilizing graded heating. 1. voltage regulated AC power source, 2. second AC power source, 3. third AC power source, 4. feed water using feed water nozzle, 5. feed water outlet nozzle, 6. cooling water inlet port, 7. cooling water outlet port, 8. water cooling type induction coil, 9. fixing table, 10. stainless steel lining if appropriate, 11. air bleeder outlet port (fastened by bolts), 12. ferromagnetic structure (see Figs. 38 and 57), 13. drain valve

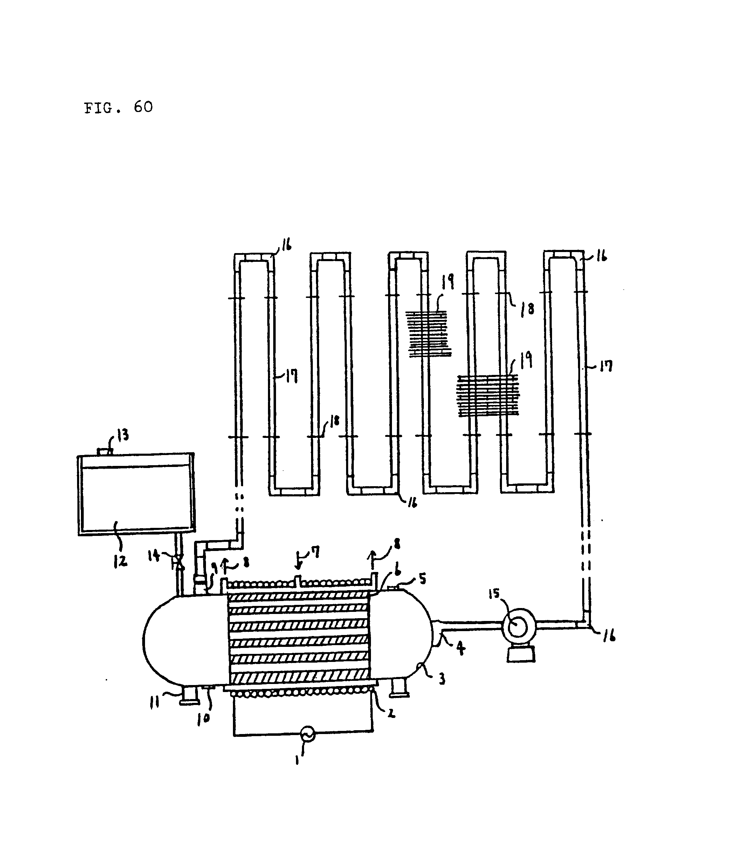

Fig. 60 shows a typical hot water heating system using feed water heaters.

1. AC power source control, 2. cooling water type induction coil, 3. stainless steel lining, 4. hot water outlet nozzle, 5. air bleeder outlet port (fastened by bolts), 6. ferromagnetic structure (see Figs. 38 and 57), 7. cooling water inlet port, 8. cooling water outlet port, 9. circulating water inlet port, 10. drain valve, 11. fixing table, 12. feed water tank, 13. feed water port, 14. auxiliary feed water valve (also used for regulating loads at the time of expansion), 15. circulator pump, 16. various couplings, 17. stainless steel pipe if appropriate, 18. spacer, 19. heat radiating metal (to be used whenever appropriate)

A heating system as illustrated may be appropriately combined with an energy amplifying system. This holds true for indirect resistor heating type feed water heaters.

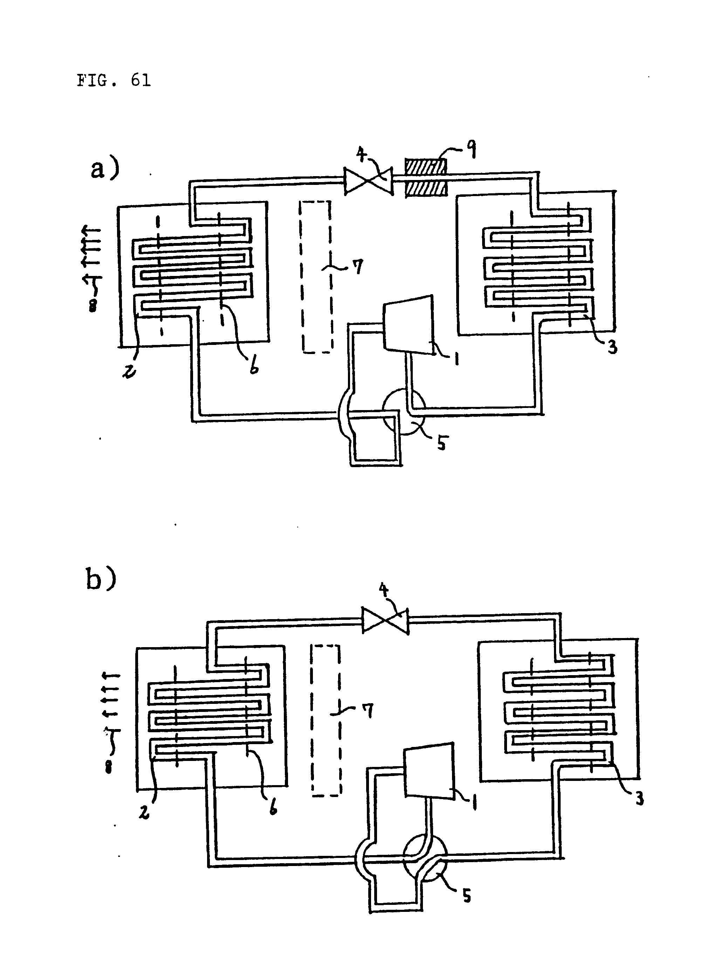

Fig. 61 shows a schematic illustration of a basic cooling system.

a) 1. compressor, 2. vaporizer (heat exchanger), 3. condenser (heat exchanger), 4. capillary tube (expansion valve), 5. changeover valve (four-way valve), 6. spacer, 7. fan if appropriate, 8. cooling air, 9. electric heater (such as drier provided with protected and hermetically sealed indirect resistor heaters)

b) 1. compressor, 2. condenser, 3. vaporizer, 4. capillary tube (expansion valve), 5. changeover valve (four-way valve), 6. spacer, 7. fan if appropriate 8. hot air A system as shown may be combined with an energy amplifying system.

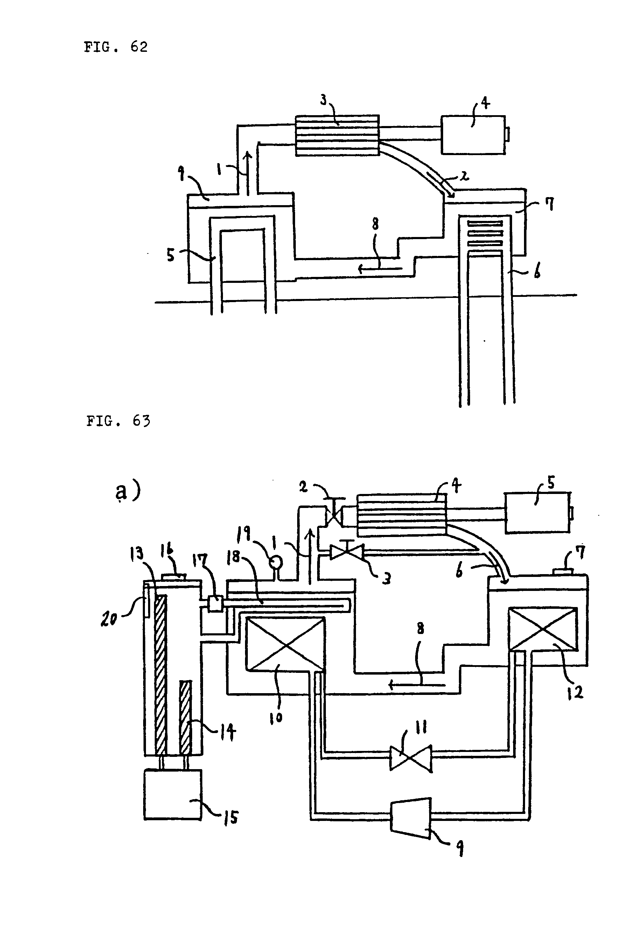

Fig. 62 shows the basic concept of a sea water temperature difference generation.

1. high pressure gas, 2. low pressure gas, 3. turbine (impeller), 4. dynamo, 5. warm sea water, 6. cold sea water, 7. cooling for liquidization, 8. heat medium such as furon or ammonia, 9. gasification by overheating

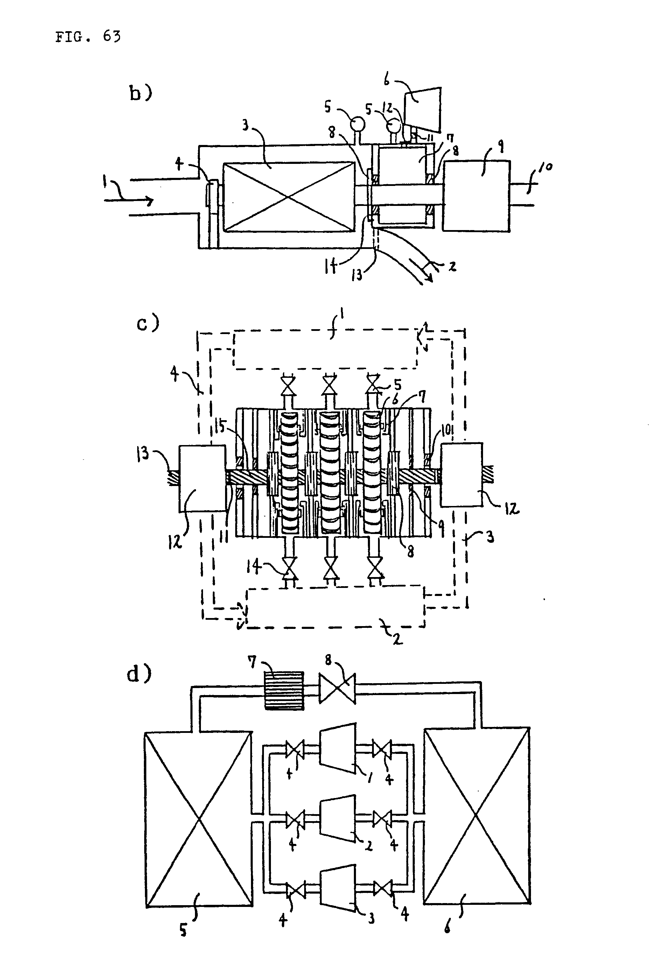

Fig. 63 shows a configuration of a temperature difference generating system using a refrigerating cycle.

a) basic configuration

1. high pressure gas, 2. stop valve, 3. bypass stop valve (regulating valve), 4. turbine (impeller), 5. dynamo, 6. low pressure gas, 7. heat medium inlet port (valve), 8. heat medium such as furon or ammonia, 9. compressor, 10. condenser (heat exchanger), 11. capillary tube, 12. vaporizer (heat exchanger), 13. indirect resistor heater such as sheath wire, 14. thermostat, 15. hot water vessel switching control, 16. feed water inlet port, 17. circulating water drive pump, 18. stainless steel pipe if appropriate, 19. pressure gauge, 20. water level meter (made of refractory glass)

Spacers should be appropriately used for critical security of the system.

b) an enlarged view of a heat medium flow path (example 1)

1. high pressure gas, 2. low pressure gas (cooling for liquidization),3. turbine (impeller), 4. bearing, 5. pressure gauge, 6. condenser, 7. air pressure chamber (to be leveled with the pressure of the inside of the turbine), 8. seal oil control apparatus (using bearing seal coil control apparatus if appropriate), 9. reduction gears (for serial connection), 10. serial connection with various dynamos, 11. stop valve, 12. exhaust regulating stop valve, 13. regulating stop valve (capable of being used as speed governor by using a switch control with a bypass system), 14. labyrinth packing

c) a schematic illustration of the configuration of a rotor (impeller) and a heat medium flow path (example 2)

1. high pressure section, 2. low pressure section, 3. circulation cycle system, 4. bypass control system (using control valves if appropriate), 5. governor control valve (using various nozzles if appropriate), 6. rotor (impeller), 7. labyrinth packing on impeller side, 8. labyrinth packing on rotary shaft side, 9. bearing oil seal control, 10. bearing, 11. various couplings, 12. fluid coupling, reduction gears (serially arranged if appropriate), 13. serially connected to various dynamos, 14. regulating valve, 15. rotary shaft Labyrinth packings and rotors (impellers) may be incorporated to form a multiple configuration.

d) a refrigerating cycle using compressors arranged in parallel

1. first compressor, 2. second compressor, 3. third compressor, 4. stop valve, 5. condenser (heat exchanger), 6. vaporizer (heat exchanger), 7. electric heater (sheath wire or aluminum-cadmium heater to be used as drier), 8. capillary tube (expansion valve) Such a cycle as shown above may be advantageously used with an energy amplifying system. The compressors may be sequentially used by utilizing the input power source to establish a cyclic operation of the system. Water heaters may be replaced by indirect resistor heaters.

The heat medium may be appropriately chosen without using furon gas (that may be subjected to rigorous regulations).

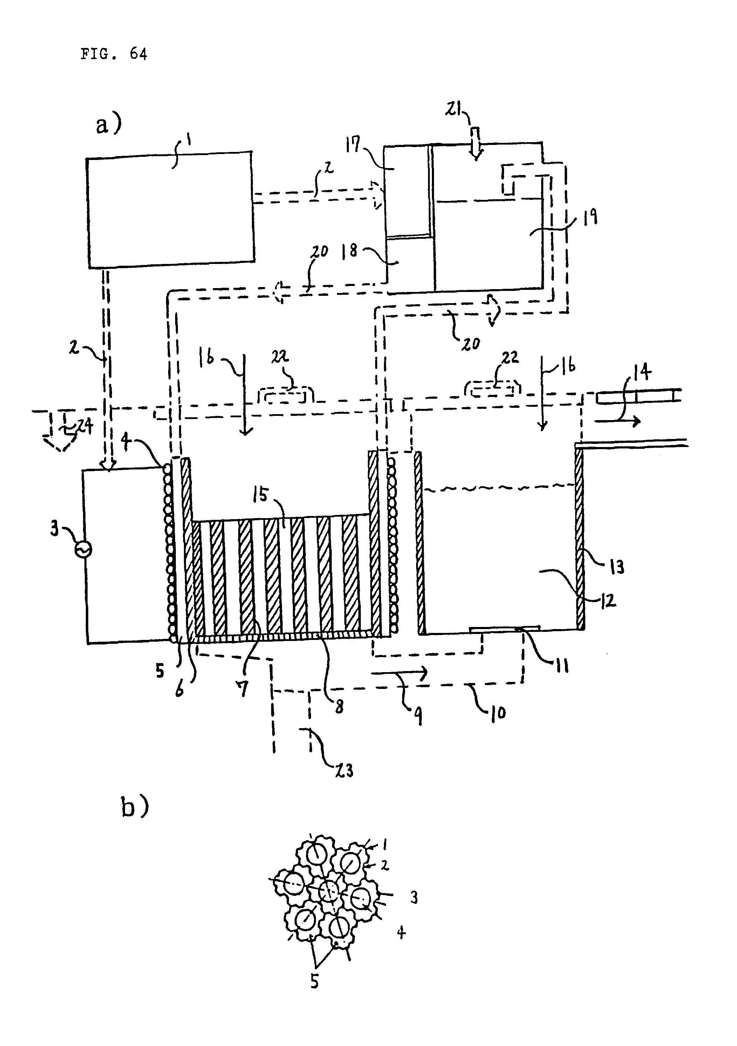

Fig. 64 shows the configuration of a snow melting system using the induction heating technology in combination with an energy amplifying system.

1. energy amplifying system (appropriately designed), 2. power sources, 3. AC power source, 4. induction coil, 5. back cooling system (using circulating cooling water), 6. reactor wall, 7. hexagonal column (see b), 8. snow melting water path, 9. insulated hot water path utilizing the principle of siphon, 10. piping, 11. grid-shaped fixed bottom, 12. insulated hot water (hot water heated by induction heating), 13. gutter wall, 14. drain hole (more than one holes if appropriate), 15. molten snow conduit, 16. snow hopper, 17. pump control, 18. cooling water circulation drive pump. 19. cooling water tank, 20. circulated cooling water, 21. appropriate water supply, 22. removable lid (removed during operation), 23. underground water, 24. level of installation (lower than the ground level if appropriate) b) a plan view of a hexagonal column

1. key. 2. key slot, 3. hexagonal block (ferromagnetic structure), 4. molten snow conduit, 5. more than one conduits used in combination

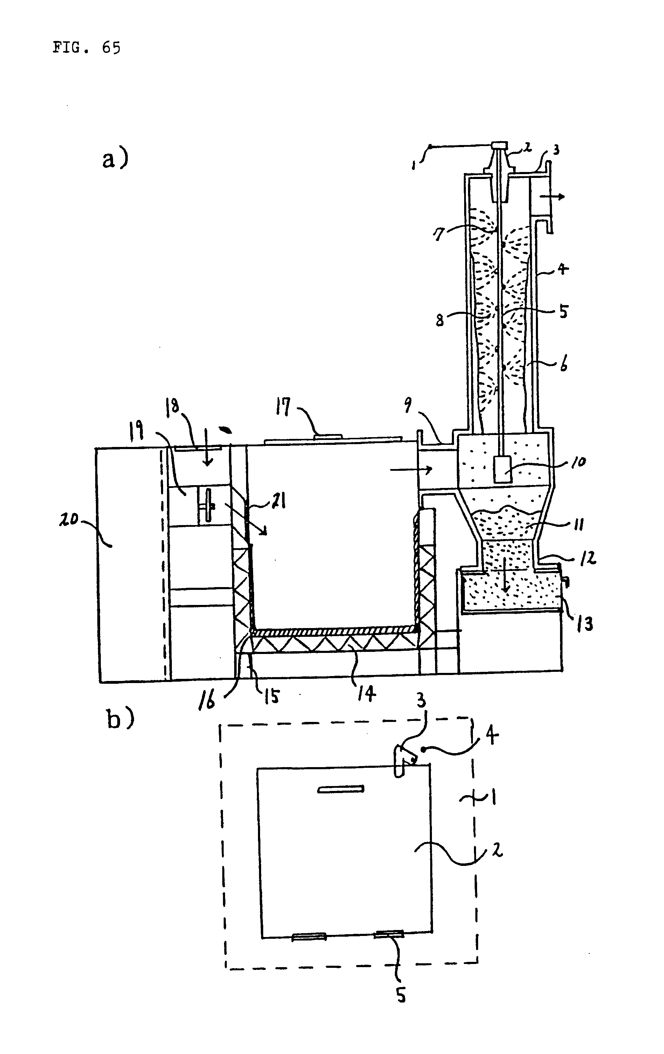

Fig. 65 shows an incinerator using the indirect resistor heating method and provided with electric dust collector in combination with an energy amplifying system.

a) sectional front view 1. high voltage power source (-), 2. insulated pipe, 3. gas outlet port, 4. collecting electrode, 5. discharging electrode, 6. dust layer, 7. corona point, 8. negative ion flow, 9. gas inlet port, 10, weight, 11. hopper, 12, dust outlet port, 13. sooth particles and other dust outlet port, 14. indirect resistor heater, 15. holder frame (insulated iron plate), 16. steel plate (appropriately insulated, 17. dust feed port (also provided at the front if appropriate), 18. air inlet port (filter), 19. various motors and fans, 20. energy amplifying apparatus appropriately installed and connected to the power source and the control system, 21. metal net

b) a schematic illustration of the front dust feed port

1. front furnace wall, 2. swing door, 3. metal fitting, 4. stopper, 5. hinge An appropriately configured energy amplifying system may be used with a system as illustrated in Fig. 64 or Fig. 65. Power sources may be appropriately arranged.

## Claims

1. A self-active type high speed turbine generating system comprising finished products and or half products such as energy amplifying apparatus produced by utilizing the characteristics of a monopolar DC machine and those of a special generator for cyclically and appropriately maximizing the relative amplification of electric energy on an appropriate cyclic basis, said system also utilizing water cooling type induction heating techniques (using natural convection, forced convection or pressure).

2. An apparatus realized on the concept of claim 1, comprising appropriately and functionally configured devices and motors in the form of finished products and/or half products so as to be used in combination with various transmission devices and other known individual electric appliances, said apparatus excluding those as defined in the following claims.

3. A self-active type high speed turbine generating system realized on the concept of claim 1 and used in combination with an energy amplifying system in an appropriate manner to establish functional and cyclic operation by utilizing indirect resistor heating technique (natural convection method, forced convection method, pressure method).

4. A temperature difference generating system realized on the concept of claim 1 and used with an energy amplifying system in an appropriate manner to establish functional and cyclic operation by utilizing freezing cycles.

5. A snow melting apparatus realized on the concept of claim 1 and used in combination with an energy amplifying system in an appropriate manner to establish functional and cyclic operation by utilizing induction heating techniques.

6. An incinerator provided with electric dust collectors realized on the concept of claim 1 and used in combination with an energy amplifying system in an appropriate manner to establish functional and cyclic operation by utilizing indirect resistor heating techniques.

Amendment based on Article 19 (The claims replace one or more claims as filed.)

1. A self-active type high speed turbine generating (system comprising finished products and or half products such as energy amplifying apparatus produced by mainly utilizing for synergetic effect the characteristics of a monopolar DC machine and those of a special generator for cyclically and appropriately maximizing the relative amplification and repetitive amplification of electric energy on an appropriate cyclic basis, said system also utilizing water cooling type induction heating techniques (using natural convection, forced convection or pressure).

2. An apparatus realized on the concept of claim 1, comprising an energy amplifying system or and other self-active type generating system (based on the cooling water type induction heating method) composed mainly of appropriately and functionally configured devices and motors in the form of finished products and or half products so as to be used in combination with various transmission devices and other known individual electric appliances, said apparatus excluding those as defined in the following claims.

3. A self-active type high speed turbine generating system realized on the concept of claim 1 and used in combination with an energy amplifying system or other self-active type generating system (based on the cooling water type induction heating method) designed mainly for appropriate and cyclic functions in an appropriate manner to establish functional and cyclic operation by utilizing indirect resistor heating technique (natural convection method, forced convection method, pressure method).

4. A temperature difference generating system realized on the concept of claim 1 and used with an energy amplifying system or other self-active type generating system (based on the cooling water type induction heating method) in an appropriate manner to establish functional and cyclic operation by utilizing freezing cycles.

5. A snow melting apparatus based on the principle of water cooling type induction heating method and the concept of claim 1 and used in combination with an energy amplifying system or other self-active type generating system (based on the cooling water type induction heating method) in an appropriate manner to establish functional and cyclic operation by utilizing induction heating techniques.

FIG. 1

FIG. 1

FIG. 2

FIG. 3

FIG. 4

FIG. 5

FIG. 6

FIG. 7

a)    b)    c)

FIG. 8

a)

b)

c)

FIg. 9

FIG. 10

a)      b)      c)

FIG. 11

a)      b)

FIG. 12

FIG. 13

FIG. 14

FIG. 15

FIG. 16

FIG. 17

FIG. 18

FIG. 19

a)

b)

c)

d)

FIG. 20

FIG. 21

FIG. 22

a)

b)

FIG. 23

a)

b)

FIG. 24

a)

c)

b)

FIG. 25

FIG. 26

FIG. 27

FIG. 28

FIG. 29

FIG. 30

a)

b)

FIG. 31

FIG. 32

FIG. 33

a)

b)

c)

d)

e)

FIG. 34

FIG. 35

FIG. 36

FIG. 37

a)

FIG. 37

b)

c)

FIG. 38

a)

b)

c)

d)

FIG. 38

e)

f)

g)

h)

i)

FIG. 39

FIG. 41

FIG. 40

a)

b)

FIG. 42

a)

b)

c)

d)

FIG. 43

FIG. 44

FIG. 45

FIG. 46

FIG. 47

a)

b)

c)

FIG. 48

a)

b)

c)

d)

FIG. 49

a)

b)

c)

FIG. 49

d)

e)

f)

FIG. 50

a)

b)

c)

d)

e)

FIG. 50

f)

g)

h)

i)

FIG. 51

a)

FIG. 51

b)

c)

FIG. 52

FIG. 53

FIG. 54

FIG. 55

a)

b)

c)

FIG. 56

FIG. 57

FIG. 58

FIG. 59

FIG. 60

FIG. 61

a)

b)

FIG. 62

FIG. 63

a)

FIG. 63

b)

c)

d)

FIG. 64

a)

b)

FIG. 65

a)

b)

# INTERNATIONAL SEARCH REPORT

International Application No PCT/JP89/00375

## I. CLASSIFICATION OF SUBJECT MATTER (if several classification symbols apply, indicate all) 6

According to International Patent Classification (IPC) or to both National Classification and IPC

Int. Cl$^4$ H02K53/00

## II. FIELDS SEARCHED

### Minimum Documentation Searched 7

| Classification System | Classification Symbols |
|---|---|
| IPC | H02K53/00 |

### Documentation Searched other than Minimum Documentation to the Extent that such Documents are Included in the Fields Searched 8

Kokai Jitsuyo Shinan Koho     1972 - 1988

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 49-14908 (Inokari Akihiro) 8 February 1974 (08. 02. 74) Page 29, lower left column 17 to page 30, upper right column, line 1 (Family: none) | 1-6 |
| Y | Energy Henkan Konwakai-hen, Sogo Energy Koza (5) [Energy Henkan Kogaku] 28 May 1980 (28. 05. 80) Ohm-sha, Figs. 4, 6, pages 115 to 117, 317 to 349 | 2-4 |
| Y | Denki Gakkai-hen [Denki Kogaku Handbook] 10 April 1978 (10. 04. 78) Denki Gakkai, page 681, Fig. 71, page 1141, Fig. 1, page 1837, Fig. 1 | 1-6 |
| Y | Denki Gakkai-hen [Denki Kogaku Pocketbook (the 3ed edition)] Ohm-sha 10 December 1985 (10. 12. 85) Lines 14 to 9 to 14 to 13, 14 to 17 to 14 to 20 | 5, 6 |

* Special categories of cited documents: 14

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| July 4, 1989 (04. 07. 89) | July 24, 1989 (24. 07. 89) |
| International Searching Authority | Signature of Authorized Officer |
| Japanese Patent Office | |

Form PCT/ISA/210 (second sheet) (January 1985)